(19) Europäisches Patentamt
European Patent Office
Office européen des brevets

(11) **EP 1 576 619 B1**

(12) **EUROPÄISCHE PATENTSCHRIFT**

(45) Veröffentlichungstag und Bekanntmachung des Hinweises auf die Patenterteilung:
**19.07.2006 Patentblatt 2006/29**

(51) Int Cl.:
*G21F 1/10* (2006.01)    *C08K 3/08* (2006.01)
*G21F 3/02* (2006.01)

(21) Anmeldenummer: 03782302.8

(22) Anmeldetag: **04.12.2003**

(86) Internationale Anmeldenummer:
**PCT/EP2003/013681**

(87) Internationale Veröffentlichungsnummer:
**WO 2004/055833 (01.07.2004 Gazette 2004/27)**

(54) **BLEIFREIE MISCHUNG ALS STRAHLENSCHUTZ-ADDITIV**

LEAD-FREE MIXTURE USED AS AN ADDITIVE FOR SHIELDING RADIATION

MELANGE SANS PLOMB UTILISE EN TANT QU'ADDITIF DE PROTECTION CONTRE LES RAYONNEMENTS

(84) Benannte Vertragsstaaten:
**AT BE BG CH CY CZ DE DK EE ES FI FR GB GR HU IE IT LI LU MC NL PT RO SE SI SK TR**

(30) Priorität: **17.12.2002 DE 10258878**
**30.08.2003 DE 10340124**

(43) Veröffentlichungstag der Anmeldung:
**21.09.2005 Patentblatt 2005/38**

(73) Patentinhaber: **LANXESS Deutschland GmbH**
**51369 Leverkusen (DE)**

(72) Erfinder:
 • **JÜNGERMANN, Hardy**
**59457 Werl (DE)**
 • **KIRSCH, Jürgen**
**51375 Leverkusen (DE)**
 • **PUDLEINER, Heinz**
**47800 Krefeld (DE)**
 • **WERDEN, Burkhard**
**51381 Leverkusen (DE)**
 • **LEITZ, Edgar**
**41541 Dormagen (DE)**
 • **JOACHIMI, Detlev**
**47800 Krefeld (DE)**
 • **GOTTSCHALK, Peter-Alexander**
**51107 Köln (DE)**
 • **ZANDER, Klaus**
**45478 Mühlheim (DE)**
 • **MADER, Klaus**
**51709 Marienheide (DE)**
 • **KOPP, Richard**
**51061 Köln (DE)**
 • **KORSCHUNOW, Alexander, Iwanovitsch**
**Sarov, 607190 (RU)**
 • **KAPITANOW, Konstantin, Awtonomowitsch**
**Sarov, 607190 (RU)**
 • **SAWKIN, Gennadij, Grigorjewitsch**
**Sarov, 607190 (RU)**
 • **NIKITIN, Wladimir, Michajlowitsch**
**Sarov, 607190 (RU)**
 • **NASAROWA, Jelena, Saweljewna**
**Sarov, 607190 (RU)**
 • **RYSHAKOW, Igor, Leonidowitsch**
**Sarov, 607190 (RU)**

(56) Entgegenhaltungen:
WO-A-02/20695          DE-A- 19 955 192
GB-A- 1 200 614        US-A1- 2002 185 614

**Beschreibung**

Die Erfindung betrifft eine Mischung enthaltend a) wenigstens 26 Gew.% Gadolinium und b) ein oder mehrere Elementen, Legierungen und/oder Verbindungen aus der Gruppe bestehend aus Barium, Indium, Zinn, Lanthan, Molybdän, Niob, Tantal, Zirkonium und Wolfram, einem Verfahren zur Herstellung dieser Mischung, die Verwendung der Mischung als Strahlenschutz, die Verwendung der Mischung zur Herstellung von polymeren Strahlenschutzstoffen, Verfahren zur Herstellung Strahlung abschirmender Kautschuke, Thermoplasten und Polyurethane, ein Verfahren zur Herstellung von Erzeugnissen aus den polymeren Strahlenschutzstoffen sowie Erzeugnisse aus diesen polymeren Strahlenschutzstoffen.

Menschen werden in verstärktem Maße ionisierender Strahlung aus einer Vielzahl von Quellen ausgesetzt. Die Strahlung kommt in Form von hochenergetischer elektromagnetischer Strahlung, insbesondere als Röntgen- oder Gamma-Strahlung vor. Sie kann vom Menschen unmittelbar nicht wahrgenommen werden. Je nach Art und Dauer einer Strahlenexposition können jedoch Gesundheitsschäden entstehen.

Die Einwirkung solch einer energiereichen Strahlung kann absichtlich geschehen, z.B. in der medizinischen Anwendung ionisierender Strahlen beim diagnostischen oder therapeutischen Röntgen oder in der Nuklearmedizin, in der zerstörungsfreien Werkstoffprüfung, in der Radiometrie oder in der Spezialmesstechnik mittels Vorrichtungen, die radioaktive Stoffe enthalten, oder unabsichtlich beim Betrieb von z.B. Störstrahlern wie Beschleunigeranlagen, Elektronenmikroskopen, Elektronenschweißanlagen, Elektronenröhren oder Monitoren. Beim Betrieb von Röntgeneinrichtungen oder anderen ionisierende Strahlung aussendenden Geräten kann es zu einer unbeabsichtigten Einwirkung von Strahlung auf den Bediener oder Dritte kommen. Daher werden viele Maßnahmen getroffen, um den Bediener oder Dritte vor dieser Strahlung zu schützen. In vielen Fällen ist es nicht möglich, o.a. Einrichtungen nur dann zu betreiben, wenn Dritte nicht anwesend sind. In vielen Fällen ist auch eine komplette Trennung des Bedienpersonals von der Strahlungsquelle nicht möglich und auch nicht praktikabel, da der Bediener nur in unmittelbarer Nähe des Gerätes und der Strahlungsquelle das Gerät bedienen kann. Dies gilt besonders in der medizinischen Anwendung von Röntgenstrahlen in der Röntgendiagnostik und Röntgenstrahlentherapie, wenn baulich-apparativer Strahlenschutz und persönliche Schutzausrüstungen eingesetzt werden müssen, um das Bedienungspersonal und/oder um den Patienten von der Strahlung abzuschirmen, mit Ausnahme der Regionen, an denen die Strahlung erwünscht ist.

Typische Strahlenschutzmaterialien enthalten flächige Materialien, besonders metallisches Blei oder Bleiverbindungen oder Blei-Compounds. Blei und seine Verbindungen werden häufig benutzt zum Schutz vor Röntgenstrahlung und Gamma-Strahlung. Blei hat den Vorteil, dass es bei niedrigen Kosten gut verfügbar ist, eine hohe Dichte sowie eine hohe Ordnungszahl besitzt. Es ist daher ein guter Absorber für ionisierende Strahlung, z.B. Röntgenstrahlung, die mit Beschleunigungsspannungen von 40 bis 300 kV erzeugt wird. Die Nachteile von Blei liegen darin, dass infolge des Photoeffektes der Schwächungsgrad von Blei bei niedrigeren Energien der ionisierenden Strahlung vergleichsweise gering ist. Auch ist Blei toxikologisch bedenklich. Hinzu kommt das hohe Gewicht der bleihaltigen Schutzausrüstungen.

Es besteht daher ein großer Bedarf an Materialien, die ähnlich gute Abschirmeigenschaften gegenüber ionisierender Strahlung zeigen wie Blei, jedoch wesentlich leichter, umweltfreundlicher und toxikologisch unbedenklicher sind als Blei.

In JP 58-053828 (K. Yamamoto) wird ein elastisches, gummi-ähnliches Schaummaterial auf der Basis von Polychloropren-Kautschuk beschrieben, das große Mengen (80 - 87,3 Gew.-%) an Metallverbindungen, z.B. Bleioxid, enthält.

In JP 57-141430 wird ein bleihaltiges geschäumtes Material offenbart, das aus Naturkautschuk oder synthetischem Kautschuk besteht und Bleiverbindungen von 300 und mehr Gewichtsteilen pro 100 Gewichtsteilen des Basismaterials enthält.

In CA-A 815 609 wird ein flexibles Material, das aus einer geflochtenen Basisschicht und einer bleihaltigen elastomeren Schicht besteht, beschrieben, die mit mindestens einer Oberfläche auf der Basisschicht verklebt ist. Die Basisschicht enthält Bleiteilchen von einer Größe < 200 mesh. Das Blei macht mindestens 65 Gew.-% des Gesamtgewichts des Materials aus. Das bevorzugte elastomere Material ist Neopren (Polychloropren).

In JP 61-228051 werden Zusammensetzungen von Ethylen-Vinylacetat- und/oder Ethylen-Ethylacrylat-Copolymeren offenbart, die 5 bis 50 Teile Antimonoxid und 5 bis 100 Teile Bariumsulfat pro 100 Teile Polymer als Kabelummantelung enthalten. Nachteilig bei dieser Zusammensetzung ist der hohe Anteil an Antimonoxid, das als krebserzeugende Verbindung einzustufen ist.

Zusammensetzungen von metallischem Blei in Polyvinylchlorid zur Absorption von Röntgenstrahlung werden in GB-A 1 603 654 und GB-A 1 603 655 beschrieben.

In JP 59-126296 wird eine beschichtete Zusammensetzung zur Abschirmung gegen Strahlung, die Blei oder Bleiverbindungen in einem Copolymer enthält und auf plastifiziertem Polyvinylchlorid aufgetragen wird, beschrieben.

Ein flexibles, gegen Strahlung abschirmendes Material, das aus einer elastomeren Matrix besteht, die Füllstoffpartikel in homogener Verteilung enthält, werden in GB-A 1 122 786 offenbart. Der Füllstoff wird aus einer Mischung aus ionisierende Strahlung absorbierendem Metall und mindestens einem anderen Metall gebildet. Blei und Blei/Antimon-Legierungen werden hierbei verwendet.

In GB-A 954 593 werden Abschirmungen gegen ionisierende Strahlung beschrieben, die in der Form von Blei beschichteten Geweben vorliegen, die in Quecksilber eingetaucht wurden und dadurch Bleiamalgam bilden, und damit die Flexibilität des beschichteten Gewebes verbessern.

Strahlung abschirmende Materialien, die auch einen bleihaltigen Methacrylat-Kunststoff beinhalten, wurden offenbart in JP-2360/1960, JP-9994/1978, JP-9995/1978, JP-9996/1978 und JP-63310/1978.

EP-A 371 699 offenbart gegen Strahlung abschirmende Materialien, die in der bevorzugten Ausführungsform eine anorganische Mischung aus Blei, Actinium, Wismut, Gold, Quecksilber, Polonium, Thallium, Thorium, Uran, Iridium, Osmium, Platin, Rhenium, Tantal, Wolfram, Brom, Molybdän, Rhodium, Strontium oder Zirkonium und u.a. Cer oder Lanthan sind. Von der Mischung werden 70 bis 93 Gew.-%, oder bevorzugt sogar 70 bis 90 Gew.-% in Copolymere aus Ethylen und Alkylacrylat, Alkylmethacrylat, Glycidylmethacrylat, Acrylsäure, Methacrylsäure, eingesetzt. In der bevorzugten Ausfiihrungsform werden zusätzlich 5 bis 10 Gew.-% Weichmacher zugefiigt.

In US-A 4 563 494 werden Lanthanoid-Verbindungen beschrieben, die in Polyacrylate, Polymethacrylate, Polystyrol und deren Copolymerisaten in Anteilen von 0,001 bis 10 Gew.-% eingesetzt werden können. Hierin wird ausdrücklich darauf hingewiesen, dass eine vollständige Abschirmwirkung gegen Röntgen- oder Gamma-Strahlung nur durch die Kombination mit Bleiverbindungen erst möglich wird (Spalte 5; Zeile 57 bis 61).

Sowohl in DE-A 199 55 192 als auch in EP-A 0 371 699 wird als röntgenstrahlen-absorbierender Füllstoff in Elastomeren auf pulverförmige Metalle mit hoher Ordnungszahl hingewiesen, wobei jedoch vor allem hohe metallische Zinnanteile von 50-100 Gew.-% angegeben werden. Die Verwendung von mindestens 26 Gew.% Gadolinium aus Gadoliniumoxid wird nicht offenbart.

In GB-A 943 714 werden Zusammensetzungen zur Herstellung eines gegen Röntgenstrahlung abschirmenden Materials beschrieben, das aus einem Silikon-Elastomer und pulverförmigen Wolfram als Additiv besteht.

Besonders für den Bereich der höherenergetischen Röntgenstrahlung von 90 kV bis 150 kV Beschleunigungsspannung bieten die in der DE-A 199 55 192 und der GB-A 943 714 Materialien keine Gewichtsvorteile bei gleichen Abschirmeigenschaften wie Blei. Die hier aufgeführten erfindungsgemäßen Mischungen erlauben bis zu 50 % Gewichtsreduktion bei gleicher Schutzwirkung.

Damit werden bei allen bekannten Verfahren entweder Blei oder Antimon oder deren Verbindungen in hoher Konzentration, oder ökologisch bedenkliche Substanzen wie Quecksilber, Polonium oder Uran und/oder Substanzgemische mit hohem metallischem Grundanteil, wie z.B. Antimon verwendet. Oftmals können die bei den bekannten Verfahren eingesetzten Strahlenschutzstoffe höherenergetische Röntgenstrahlung im Bereich von 90 bis 150 KV Beschleunigungsspannung nicht ausreichend abschirmen.

Aufgabe der vorliegenden Erfindung ist es, im Vergleich zum Stand der Technik und zu den immer noch bevorzugt eingesetzten bleihaltigen Materialien leichtere, toxikologisch unbedenklichere, vollständig bleifreie, gegen ionisierende Strahlung wie z.B. Röntgen- oder Gamma-Strahlung besser als Blei abschirmende Mischungen zur Verfiigung zu stellen.

1. Die Aufgabe wird gelöst durch eine Mischung enthaltend

a) wenigstens 26 Gew.-% Gadolinium als Element und/oder aus Verbindungen und/oder aus Legierungen,

b) wenigstens 10 Gew.-% eines oder mehrere Elemente und/oder Legierungen und/oder Verbindungen dieser Elemente unabhängig voneinander ausgewählt aus der Gruppe bestehend aus Barium, Indium, Zinn, Molybdän, Niob, Tantal, Zirkonium und Wolfram, wobei der Gehalt an Wolfram, wenn Wolfram enthalten ist, wenigstens 10 Gew.-% bezogen auf die Gesamtmenge der Mischung beträgt.

Vorteilhaft enthält die erfindungsgemäße Mischung noch 0 bis 64 Gew.-% einer Komponente c), die ein oder mehrer Elemente und/oder Legierungen und/oder Verbindungen dieser Elemente unabhängig voneinander ausgewählt aus der Gruppe bestehend aus Wismut, Lanthan, Cer, Praseodym, Neodym, Promethium, Samarium, Europium, Terbium, Dysprosium, Holmium, Erbium, Thulium, Ytterbium und Lutetium enthält.

Vorteilhaft enthält die erfindungsgemäße Mischung maximal 50 Gew.-% Zinn.

Vorteilhaft zeigen die Elemente und/oder Legierungen und/oder Verbindungen der Komponente b) der erfindungsgemäßen Mischung eine komplementäre strahlungsschwächende Charakteristik im Bereich von 10 bis 600 keV aufweisen.

Vorteilhaft enthält die erfindungsgemäße Mischung wenigstens 35 Gew.-% Gadolinium und wenigstens 20 Gew.-% Wolfram.

Vorteilhaft liegt die spezifische Dichte der erfindungsgemäßen Mischung im Bereich von 4,0 bis 13,0 g/cm$^3$ .

Vorteilhaft besitzen die Partikel der erfindungsgemäßen Mischung einen mittleren Teilchendurchmesser im Bereich von 0,1 bis 200 μm.

Vorteilhaft werden die Komponenten b) und c) der erfindungsgemäßen Mischung in Form von Legierungen und/oder Verbindungen unabhängig "voneinander ausgewählt aus der Gruppe bestehend aus Oxiden, Carbonaten, Sulfaten, Halogeniden, Hydroxiden, Wolframaten, Carbiden und Sulfiden eingesetzt.

Ein weiterer Gegenstand der Erfindung ist ein Verfahren zur Herstellung der erfmdungsgemäßen Mischung, wobei die Komponenten der Mischung in einem Temperaturbereich von 20 bis 500°C getrocknet, danach gesiebt und anschließend im Bereich von 5 Minuten bis 24 h gemischt werden.

Ein weiterer Gegenstand der Erfindung ist eine Verwendung der erfindungsgemäßen Mischung als Strahlenschutz.

Vorteilhaft wird die erfindungsgemäße Mischung zur Herstellung von polymeren Strahlenschutzstoffen verwendet.

Ein weiterer Gegenstand der Erfindung ist ein polymerer Strahlenschutzstoff, der die erfindungsgemäße Mischung enthält.

Vorteilhaft enthält der polymerer Strahlenschutzstoff, der die erfmdungsgemäße Mischung enthält, noch weitere Zusatzstoffe.

Vorteilhaft ist das Polymer des polymeren Strahlenschutz, der_die erfindungsgemäße Mischung enthält, ausgewählt aus der Gruppe bestehend aus Kautschuken, Thermoplasten und Polyurethanen.

Vorteilhaft ist der Füllgrad des polymerer Strahlenschutzstoffes, der die erfindungsgemäße Mischung enthält, kleiner als 80 Gew.-%.

Vorteilhaft enthält der polymere Strahlenschutzstoff, der die erfindungsgemäße Mischung enthält,

$\alpha$) 5 bis 85 Gew.% Kautschuk, Thermoplast oder Polyurethan und
$\beta$) 10 bis 80 Gew.-% der Mischung nach Anspruch 1 sowie
$\gamma$) 5 bis 20 Gew.% weitere Zusatzstoffe.

Ein weiterer Gegenstand der Erfindung ist ein Verfahren zur Herstellung eines polymeren Strahlenschutzstoffes, der die erfindungsgemäße Mischung enthält, wobei das Polymer mit der erfindungsgemäßen Mischung umgesetzt wird.

Vorteilhaft ist das Verfahren zur Herstellung eines polymeren Strahlenschutzstoffes, der die erfindungsgemäße Mischung enthält, wobei das Polymer ein Kautschuk ist, der mit der erfindungsgemäßen Mischung zusammengeknetet wird.

Vorteilhaft ist das Verfahren zur Herstellung eines polymeren Strahlenschutzstoffes, der die erfindungsgemäße Mischung enthält, wobei das Polymer ein Thermoplast ist, der mit der erfindungsgemäßen Mischung vermischt wird.

Vorteilhaft ist das Verfahren zur Herstellung eines polymeren Strahlenschutzstoffes, der die erfindungsgemäße Mischung enthält, wobei das Polymer Polyurethan ist und die Ausgangsstoffe des Polyurethans direkt mit der erfindungsgemäßen Mischung vermischt und anschließend polymerisiert werden.

Ein weiterer Gegenstand der Erfindung ist ein Verfahren zur Herstellung eines Erzeugnis, wobei der polymere Strahlenschutzstoff, der die erfindungsgemäße Mischung enthält, eingesetzt wird.

Ein weiterer Gegenstand ist ein Erzeugnis erhältlich durch das Verfahren zur Herstellung eines Erzeugnisses bei dem der polymere Strahlenschutzstoff, der die erfindungsgemäße Mischung enthält, eingesetzt wird.

Die erfmdungsgemäße Mischung enthält wenigstens 26 Gew.% Gadolinium als Element und/oder aus Verbindungen und/oder Legierungen abgeleitet ist. Die erfmdungsgemäße Mischung enthält bevorzugt einen Gadoliniumanteil im Bereich von 35 bis 55 Gew.-%.

Die Komponente b) der erfindungsgemäßen Mischung enthält wenigstens 10 Gew.-% ein oder mehrere Elemente, Legierungen und/oder Verbindungen dieser Elemente unabhängig voneinander ausgewählt aus der Gruppe bestehend aus Barium, Indium, Zinn, Molybdän, Niob, Tantal, Zirkonium und Wolfram, wobei der Gehalt an Wolfram, wenn Wolfram enthalten ist, wenigstens 10 Gew.-% beträgt, bezogen auf die Gesamtmenge der Mischung. Bevorzugt sind Elemente, Legierungen und/oder Verbindungen, die in einem Bereich von 10 bis 300 keV eine strahlungsschwächende Charakteristik aufweisen. Besonders bevorzugt sind dabei Barium, Zinn, Wolfram und Molybdän. Der Anteil der Komponente b) an der erfindungsgemäßen Mischung liegt im Bereich von 10 bis 74 Gew.-%, bevorzugt im Bereich von 20 bis 60 Gew.-%, besonders bevorzugt im Bereich von 25 bis 50 Gew.-%. Vorzugsweise liegt der Zinnanteil bei weniger als 50 Gew.-% bezogen auf das Gewicht der gesamten Mischung.

Die Komponente c) der erfindungsgemäßen Mischung enthält ein oder mehrere Elemente, Legierungen und/oder Verbindungen dieser Elemente unabhängig voneinander ausgewählt aus der Gruppe bestehend aus Wismut, Lanthan, Cer, Praseodym, Neodym, Promethium, Samarium, Europium, Terbium, Dysprosium, Holmium, Erbium, Thulium, Ytterbium und Lutetium. Bevorzugt werden die Elemente, Legierungen und/oder Verbindungen von Wismut, Lanthan, Cer, Praseodym, Neodym, Samarium und Europium verwendet. Der Anteil der Komponente c) an der erfindungsgemäßen Mischung liegt im Bereich von 0 bis 64 Gew.-%, bevorzugt im Bereich von 20 bis 50 Gew.-% besonders bevorzugt im Bereich von 25 bis 40 Gew.-%.

Bevorzugt wird die Komponente a) in Form ihrer Verbindungen eingesetzt. Besonders bevorzugte Verbindungen sind die Oxide.

Bevorzugt wird die Komponente c) in Form ihrer Verbindungen eingesetzt. Bevorzugte Verbindungen für die Komponenten b) und c) sind die Oxide, Carbonate, Sulfate, Hydroxide, Wolframate, Carbide, Sulfide oder Halogenide der genannten Elemente. Besonders bevorzugt sind die Oxide, Sulfate und Wolframate. Ganz besonders bevorzugt werden die Verbindungen Bariumsulfat, Indiumoxid und Zinnoxid oder die Metalle Zinn, Molybdän, Niob, Tantal, Zirkonium und Wolfram für Komponente b) und die Verbindungen Wismutoxid, Lanthanoxid, Ceroxid, Praseodymoxid, Promethiumoxid, Samariumoxid, Europiumoxid, Terbiumoxid, Dysprosiumoxid, Holmiumoxid, Erbiumoxid, Thuliumoxid, Ytterbiumoxid und Lutetiumoxid für Komponente c) verwendet.

Zur Herstellung der erfindungsgemäßen Mischung werden die Einzelbestandteile der Komponente a) als auch der Komponente b) bei Temperaturen im Bereich von 30 bis 500°C getrocknet. Anschließend werden die einzelnen Bestandteile der beiden Komponenten a) und b) mit einem Sieb im Bereich von 3 bis 125 $\mu$m Maschenweite gesiebt. Die erhaltenen Bestandteile der Komponenten a) und b) werden dann für 5 Minuten bis 24 Stunden in den dem Fachmann bekannten Mischern wie Propeller-, Turbo-, Schaufel-, Mulden-, Planeten-, Reib-, Schnecken-, Walzen-, Schleuder-, Gegenstrom-, Strahl-, Trommel-, Konus-, Taumel-, Kreisel-, Kühl-, Vakuum- , Durchfluss-, Schwerkraft-, Fluid- und Pneumat-Mischer gemischt. Bevorzugt werden Taumelmischer verwendet. Die spezifische Dichte der erfindungsgemäßen Mischung liegt im Bereich von 4,0 bis 13,0 g/cm$^3$, bevorzugt im Bereich 6,0 bis 10 g/cm$^3$. Für eine Mischung, die auch noch Komponente c) enthält wird entsprechend verfahren.

In der erfindungsgemäßen Mischung können zusätzlich noch weitere Zusatzstoffe enthalten sein. Unter weiteren Zusatzstoffen werden die dem Fachmann bekannten UV-Absorber, Weichmacher, Wachse, Entformungsmittel, Antioxidantien, Thermostabilisatoren, Pigmente, anorganische Extender, Farbstoffe als auch andere gegen Strahlung abschirmende Verbindungen verstanden. Bevorzugte Zusatzstoffe sind Weichmacher wie Ether, Ether-thioether, Ester mit ThioetherGruppen, Sulfonsäureester, Adipinsäureester, Phthalsäure(poly)ester, Citronensäureester, Phosphorsäureester. Diese Zusatzstoffe können in der erfindungsgemäßen Mischung in Anteilen von 0 bis 30 Gew.-%, bevorzugt von 10 bis 20 Gew.-%, besonders bevorzugt von 5 bis 15 Gew.-% enthalten sein.

Die erfindungsgemäße Mischung wird als Abschirmmaterial (Strahlenschutz) gegen Röntgen- und Gamma-Strahlung verwendet. Bevorzugt wird die erfindungsgemäße Mischung für Absorptionen im Bereich von 10 bis 600 keV, bevorzugt 80 bis 400 keV verwendet. In einer bevorzugten Ausführungsform sorgt die Art der Bestandteile der erfindungsgemäßen Mischung und ihr Verhältnis zueinander für eine Massenreduktion von 50% des zu verwendenden Absorptionsmaterials verglichen mit einem einzelnen Absorptionselement wie Blei; oder aber bei gleicher Masse der Absorptionselemente, Legierungen oder Verbindungen innerhalb der erfindungsgemäßen Mischung wie Blei kann bei einer bestimmten Zusammensetzung der erfindungsgemäßen Mischung eine um 150 % höhere Absorption der Bleiäquivalenz erzielt wird. Unter Bleiäquivalenz wird die Abschirmfähigkeit, die Blei mit der gleichen Masse wie das zu beurteilende Gemisch besitzt, verstanden. Für Komponente b) werden bevorzugt 15 bis 60 Gew.-%, besonders bevorzugt 25 bis 50 Gew.-% Wolfram, Zinn oder Zinnoxid oder deren Gemisch und für Komponente c) bevorzugt 20 bis 50 Gew.-%, besonders bevorzugt 25 bis 40 Gew.% Wismutoxid, Lanthanoxid, Ceroxid, Praseodymoxid, Neodymoxid, Samariumoxid, Europiumoxid und Gadoliniumoxid oder deren Gemisch eingesetzt. In einer besonderen Ausführungsform ist der Zinngehalt kleiner 50 Gew.-% und der Wolframgehalt größer 10 Gew.-%.

Die erfindungsgemäße Mischung kann auch als Strahlenschutz in allen dem Fachmann bekannten Polymeren eingeführt werden. Bevorzugte Polymere sind alle dem Fachmann bekannten Kautschuke, Thermoplaste sowie Polyurethane.

Die erfindungsgemäße Mischung sollte mit der Kunststoff Komponente kompatibel sein, da es physikalische Wechselwirkungen zwischen der Kunststoff Komponente und der erfindungsgemäßen Mischung geben kann, die die Eigenschaften des sich ergebenden polymeren Strahlenschutzstoffes beeinflussen können. So sind z.B. die Oxide besser als die entsprechenden Metalle in der polymeren Strahlenschutzstoffmatrix dispergierbar, so dass sich die erfindungsgemäße Mischung gleichmäßiger in der polymeren Strahlenschutzstoffmatrix verteilen lässt. Daraus resultieren höhere mechanische Eigenschaften wie Bruchfestigkeit oder Weiterreißwiderstand. Die Bestandteile der erfindungsgemäßen Mischung werden in Pulverform eingesetzt und sind in dem Polymer homogen verteilt.

Beim Blenden der erfindungsgemäßen Mischung mit dem Polymer oder beim Dispergieren im Polymer-bildenden Rohstoff werden mittlere Teilchendurchmesser von 0,1 bis 200 $\mu$m, bevorzugt 0,5 bis 100 $\mu$m eingesetzt.

Der Anteil der erfindungsgemäßen Mischung in dem polymeren Strahlenschutzstoff ist abhängig von der Energie der abzuschirmenden Strahlung als auch von der Verträglichkeit der Mischung mit dem Polymer. Der polymere Strahlenschutzstoff enthält 10 bis 90 Gew.%, bevorzugt 10 bis 80 Gew.%, besonders bevorzugt 15 bis 70 Gew.% der erfindungsgemäßen Mischung.

Die erfindungsgemäße Mischung kann sowohl zu den Einsatzstoffen der Polymere vor der Polymerisation gegeben werden als auch nachträglich in das Polymer eingearbeitet werden. Bevorzugt wird die erfindungsgemäße Mischung in den Kautschuken und in die Thermoplasten nach der Polymerisation eingearbeitet, während bei der Herstellung des polymeren Strahlenschutzstoffes, der als Polymer Polyurethane verwendet, die erfindungsgemäße Mischung bevorzugt bereits zu den Einsatzstoffen vor der Polymerisation hinzugefügt wird. Die Einarbeitung der erfindungsgemäßen Mischung in das Polymer nach der Polymerisation erfolgt durch die dem Fachmann bekannten Verfahrensmöglichkeiten, wie Kneten, Aufschmelzen, Kaltpressen, Warmpressen, Kalandrieren, Spritzgießen, Extrudieren, Sintern oder Spritzpressen. Die die erfindungsgemäße Mischung enthaltenden polymeren Strahlenschutzstoffe können durch Zufügen der Komponenten zur Schmelzcompoundierung oder vergleichbarer Verfahren hergestellt werden, wobei das jeweilige Verfahren zum Teil von dem herzustellenden polymeren Strahlenschutzstoff und/oder dem Schmelzverhalten des Polymers abhängt. Beispiele für Compoundierausrüstungen sind Zwei-Walzen-Mühlen, Banbury-Mischer, Farrell-Mischer, Buss-Kneter, Gelimat-Intensivmischer und vergleichbare Mischer verwendet. Die erfindungsgemäße Mischung kann auch auf einem Banbury-Zwei-Rotoren-Mischer hergestellt werden, in dem alle Komponenten zusammen in den Mischer gegeben werden. Es kann aber auch vorteilhaft sein, zunächst ein Konzentrat oder Master-Batch der erfindungsgemäßen Mischung im Polymer herzustellen, um die Kombination der Konzentrate auf einem Hochviskos-Mischer herzustellen. Der so erhaltene polymere Strahlenschutzstoff kann dann weiter verarbeitet werden und zu Platten durch Extrusion, Kalandrieren, Druckverformung oder anderen dem Fachmann bekannten Verarbeitungsmöglichkeiten umgeformt werden.

Daher sind die Verfahren zur Herstellung der polymeren Strahlenschutzstoffe, die die erfindungsgemäße Mischung enthalten, nicht beschränkt, so dass verschiedene Verfahren eingesetzt werden können. Daher kann auch ein Verfahren verwendet werden, bei dem die erfindungsgemäße Mischung mit dem Polymer vermischt wird, ein Verfahren, bei dem die erfindungsgemäße Mischung in dem Polymer-bildenden Rohstoff dispergiert, und dieser Polymer-bildende Rohstoff polymerisiert wird, oder es wird ein Verfahren durchgeführt, bei dem die erfindungsgemäße Mischung in einem Lösungsmittel gemischt oder suspendiert wird, um die Polymerisation zu beeinflussen.

Die erfindungsgemäße Mischung ist besonders nützlich als Abschirmmaterial gegen Röntgen- und Gamma-Strahlung. Diese erfindungsgemäße Mischung kann zur Herstellung von polymeren Strahlenschutzstoffen eingesetzt werden, aus denen Schürzen, Gehäuse, chirurgische Handschuhe, Stellwände und andere zur Abschirmung gegen ionisierende Strahlung geeignete Gegenstände verwendet werden. Solche Eigenschaften sind besonders wichtig für baulich-apparative oder persönliche Schutzausrüstungen gegen ionisierende Strahlung, in denen besserer Schutz oder der gleiche Schutz bei gleichzeitig niedrigerem Gewicht der Schutzeinrichtungen gegenüber herkömmlichen Materialien wichtige Vorteile für den Nutzer bietet, besonders im Hinblick auf den Strahlenschutz und/oder den Tragekomfort der Schutzkleidung. Die erfindungsgemäße Mischung besitzt einen höheren Strahlungsschutz (Schwächungsfaktoren) gegen Röntgen- oder Gamma-Strahlung mit Energien größer 10 keV als Blei, bezogen auf die Masse des eingesetzten Bleis bzw. der Bleiverbindung. Damit kann im Vergleich zu Blei mit weniger Masse gleicher oder mit gleicher Masse ein höherer Schutz erzielt werden, da mehr von der Strahlung absorbiert wird. Der verbesserte Schwächungsfaktor bezieht sich auf eine spezifische Röntgen- oder Gamma-Energie (Wellenlänge) und kann für jedes individuelle Energiespektrum durch eine bestimmte Auswahl der Mischungsbestandteile optimiert werden. Die erfindungsgemäße Mischung schwächt stärker und liefert daher Schutz über einen breiteren Bereich des (ionisierenden) elektromagnetischen Spektrums als metallisches Blei, Bleiverbindungen oder andere Absorbens aus einem einzelnen Element.

Die erfindungsgemäße Mischung kann in Kautschuken nach den dem Fachmann bekannten Verfahren eingearbeitet werden. Unter dem Begriff Kautschuk sind alle dem Fachmann bekannten Elastomere zu verstehen. Bevorzugt werden Naturkautschuk, Polychloropren, Acrylnitrilkautschuk, Ethylen-Vinylacetat-Copolymere, hydrierter Acrylnitrilkautschuk, Styrolbutadienkautschuk, Ethylen-Propylen-Kautschuk oder Ethylen-Propylen-Terpolymerisat (EPDM), Isobutylen-Isopren-Kautschuk oder halogenierter Isobutylen-Isopren-Kautschuk, Silikon-Kautschuk oder deren Verschnitte untereinander oder mit thermoplastischen Polymeren wie Polyethylen, Polypropylen, Polyvinylchlorid verwendet. Besonders bevorzugt sind Ethylen-Vinylacetat-Copolymere (Levapren® ), Polychloropren (Baypren® ), Ethylen-Propylen-Terpolymerisat, Naturkautschuk. Die Kautschuke können die dem Fachmann üblichen Zusatzstoffe enthalten. Unter den üblichen Zusatzstoffen sind insbesondere Vernetzungssysteme wie 2 bis 5 Gew.-Teile Zinkoxid, 2 bis 4 Gew.-Teile 3-Methyl-thiazolidin-thion-2 und 0,5 bis 1,5 Gew.-Teile Zinkdibenzyldithiocarbamat für Poly-chloroprenkautschuke oder 4 bis 7 Gew.-Teile $\alpha,\alpha'$-bis (t-butylperoxy)-diisopropylbenzol in Kombination mit 0 bis 4 Gew.-Teilen, bevorzugt 2 bis 4 Gew.-Teilen Aktivatoren wie Triallylcyanurat, Triallylisocyanurat oder N,N'-m-Phenylendimaleimid für Ethylen-Vinylacetat-Copolymere, oder 0,5 bis 2,5 Gew.-Teile Benzothiazyl-2-cyclohexylsulphenamide, 0 bis 1,5 Gew.-Teile Tetramethylthiuramdisulfid oder 0 bis 1,5 Gew.-Teile Dimethyl-diphenylthiuramdisulfid und 1 bis 3 Gew.-Teile. Schwefel für Naturkautschuk zu verstehen. Unter Alterungsschutzmitteln sind Stoffe wie N-Isopropyl-N'-phenyl-p-phenylendiamin, N-(1,3-Dimethylbutyl)-1-N'-phenyl-p-phenylendiamin, N,N'-bis-(1,4-dimethyl-pentyl)-p-phenylendiamin, 2,2'-methylen-bis-(4-methyl-6-tert-butylphenol), N,N'-diphenyl-p-phenylendiamin, styrolisiertes Diphenylamin, polymerisiertes 2,2,4-Trimethyl-1,2-dihydrochinolin oder styrolisiertes Phenol in Konzentrationen von 1 bis 3 Gew.-Teilen zu verstehen. Als inaktive und aktive Füllstoffe sind Zusätze wie Ruße, Kieselsäuren verschiedener Aktivität und Oberfläche oder Kreide oder Kaolin, Clay mit 0 bis 60 Gew.-Teilen, anorganische Farbstoffe wie Titandioxid oder Eisenoxid in Gew.-Teilen von 1 bis 5, Verarbeitungshilfsmittel wie Fettsäuren, Fettester, Fettalkohole in Konzentrationen von 0 bis 5 Gew.-Teilen, Stabilisatoren wie 2,2'-Methylen-bis-(4-methyl-6-tert-butylphenol) in 0,5 bis 3 Gew.-Teilen zu verstehen. Generell können Beschleuniger der Klassen Sulfenamide wie N-Cyclohexylbenzothiazylsulfenamide (CBS), N-tert.-Butyl-2-benzothiazylsulfenamide (TBBS), Benzothiazyl-2-sulfenmorpholide (MBS), N,N-Dicyclohexyl-benzothiazol-2-sulfenamide (DCBS), Mercapto-Beschleuniger wie 2-Mercaptobenzothiazole (MBT), Zink-2-mercaptobenzothiazole (ZMBT), Benzothiazyldisulfide (MBTS), Thiurame wie Tetramethylthiuramdisulfide (TMTD), Dithiocarbamate wie Zink-diethyldithiocarbamate (ZDEC), Zink-ethylphenyldithiocarbamate (ZEPC), Zinkdibenzyldithiocarbamate (ZBEC) oder Guanidine wie Diphenylguanidine (DPG) in Kombination mit Schwefel verwendet werden. Als peroxidische Vernetzer können Substanzen wie, 2,5-Dimethyl-2-5,di-(tert-butylperoxy)-hexen-3, 2,5-Dimethyl-2-5,di-(tert-butylperoxy)-hexan, Di-(tert-butylperoxyisopropyl)-benzol, tert-Butyl-cumylperoxid, Dicumylperoxid, Butyl-4,4-di-(tert-butylperoxy)-valerat, 1,1-Di-(tert-butylperoxy)-3,3,5-trimethylcyclohexan können in Konzentrationen von 2 bis 7 Gew.-Teilen alleine oder in Kombination mit 2 bis 4 Gew.-Teilen Aktivatoren wie Triallylcyanurat, Triallylisocyanurat, N,N'-m-Phenylendimaleimid oder Trimethylolpropantrimethacrylat verwendet werden.

Dem auf/in einem Mischaggregat (Kneter/Walze) vormastizierten Kautschuk kann innerhalb von 10 bis 15 Minuten die erfindungsgemäße Mischung in einer Menge bis zum 6-fachender Polymermasse sowie danach innerhalb von 3 bis 5 Minuten sonstige übliche Füllstoffe, Weichmacher, Verarbeitungshilfsmittel, das Vernetzungssystem sowie Stabilisatoren zugefügt werden.

Die Weiterverarbeitung dieser Abmischung kann mit den dem Fachmann bekannten konventionellen Verarbeitungsmethoden wie Kalandern erfolgen. Die notwendige Vernetzung der Polymermatrix erfolgt ebenfalls nach den dem Fachmann bekannten Verfahren wie Vulkanisation nach der Formgebung.

Als Thermoplasten eigenen sich alle die dem Fachmann bekannten Thermoplasten. Bevorzugt sind Polyalkylenterephthalate, aromatischen Polyester, Polyamide, Polycarbonat, Thermoplastische Polyurethane (TPU), Polyacrylat, Polymethacrylat, Acrylnitril-Butadien-Styrol-(ABS)-Pfropfcopolymerisate, Polyolefine wie Polyethylen oder Polypropylen, Polystyrol, Polyvinylchlorid, Polyoxymethylen, Polyimid, Polyether und Polyetherketone, die einzeln oder als Blend aus verschiedenen Polymeren eingesetzt werden können. Besonders bevorzugt werden Polyamid-6 wie Durethan® B31F, ABS-Kunststoffe wie Lustran® ABS M 203 FC, Polycarbonate wie Makrolon® Rx 1805 oder Makrolon® 2808, Polybutylenterephthalate wie Pocan® B 1300 oder thermoplastische Polyurethane wie Desmopan® 385 oder Desmopan® 786.

Die Polyamide können nach verschiedenen Verfahren hergestellt und aus sehr unterschiedlichen Bausteinen synthetisiert werden und im speziellen Anwendungsfall allein oder in Kombination mit Verarbeitungshilfsmitteln, Stabilisatoren, polymeren Legierungspartnern wie Elastomeren oder auch Verstärkungsmaterialien wie mineralischen Füllstoffen oder Glasfasern, zu Werkstoffen mit speziell eingestellten Eigenschaftskombinationen ausgerüstet werden. Geeignet sind auch Blends mit Anteilen von anderen Polymeren wie Polyethylen, Polypropylen, ABS . Die Eigenschaften der Polyamide lassen sich durch Zusatz von Elastomeren so im Hinblick auf die Schlagzähigkeit von verstärkten Polyamiden verbessern. Die Vielzahl der Kombinationsmöglichkeiten ermöglicht eine sehr große Zahl von Produkten mit unterschiedlichsten Eigenschaften, wie Tieftemperatur-Schlägzähigkeit oder Fließfähigkeit.

Zur Herstellung von Polyamiden sind eine Vielzahl-von Verfahrensweisen bekannt, wobei je nach gewünschtem Endprodukt unterschiedliche Monomerbausteine, verschiedene Kettenregler zur Einstellung eines angestrebten Molekulargewichtes oder auch Monomere mit reaktiven Gruppen wie. Amino, Hydroxy-, Carboxy-, Carbonsäureester-, Carbonsäurechlorid- und/oder Carbonsäureanhydrid-Gruppen für später beabsichtigte Nachbehandlungen eingesetzt werden.

Die technisch relevanten Verfahren zur Herstellung von Polyamiden laufen ausnahmslos über die Polykondensation in der Schmelze. In diesem Rahmen wird auch die hydrolytische Polymerisation von Lactamen als Polykondensation verstanden.

Bevorzugte Polyamide sind teilkristalline Polyamide, die ausgehend von Diaminen und Dicarbonsäuren und/oder Lactamen mit wenigstens 5 Ringgliedern oder entsprechenden Aminosäuren hergestellt werden können.

Als Ausgangsprodukte kommen aliphatische und/oder aromatische Dicarbonsäuren wie Adipinsäure, 2,2,4-und 2,4,4-Trimethyladipinsäure, Azelainsäure, Sebazinsäure, Isophthalsäure, Terephthalsäure, aliphatische und/oder aromatische Diamine wie Hexamethylendiamin, 1,9-Nonandiamin, 2,2,4- und 2,4,4-Trimethylhexamethylendiamin, die isomeren Diamino-dicyclohexylmethane, Diaminodicyclohexylpropane, Bis-aminomethyl-cyclohexan, Phenylendiamine, Xylylendiamine, Aminocarbonsäuren wie Aminocapronsäure oder die entsprechenden Lactame in Betracht. Copolyamide aus mehreren der genannten Monomeren sind eingeschlossen.

Besonders bevorzugt werden Caprolactame, ganz besonders bevorzugt s-Caprolactam eingesetzt.

Besonders geeignet sind weiterhin die meisten auf Polyamid-6 (PA6), Polyamide 6,6 (PA66) und anderen aliphatischen und/oder aromatischen Polyamiden und/oder Copolyamiden basierenden Compounds, bei denen auf eine Polyamidgruppe in der Polymerkette 3 bis 11 Methylengruppen kommen.

Die eingesetzten Polyamide können auch im Gemisch mit anderen Polyamiden und/oder weiteren Polymeren eingesetzt werden.

Zusätzlich können die Polyamidformmassen noch Brandschutzmittel wie Phosphorverbindungen, organische Halogenverbindungen, Stickstoffverbindungen und/oder Magnesiumhydroxid, Stabilisatoren, Verarbeitungshilfsmittel wie Gleitmittel, Nukleierungsmittel, Stabilisatoren, Schlagzähmodifikatoren wie Kautschuke oder Polyolefine enthalten, vorausgesetzt, dass diesekeine zu starke Absorption im Bereich der Wellenlänge des verwendeten Lasers aufweisen.

Als faserförmige Verstärkungsstoffe neben Glasfasern kommen Aramidfasern, Mineralfasern und Whiskers in Betracht. Als geeignete mineralische Füllstoffe seien beispielhaft Kalziumcarbonat, Dolomit, Kalziumsulfat, Glimmer, Fluorglimmer, Wollastonit, Talkum und Kaolin genannt. Zur Verbesserung der mechanischen Eigenschaften können die faserförmigen Verstärkungsstoffe und die mineralischen Füllstoffe oberflächenbehandelt sein.

Die Zugabe der Energie absorbierenden anorganischen Zusätze und Füllstoffe kann vor, während oder nach der Polymerisation der Monomere zum Polyamid erfolgen. Erfolgt die Zugabe der Füllstoffe nach der Polymerisation, so erfolgt sie vorzugsweise durch Zugabe zur Polyamidschmelze in einem Extruder. Erfolgt die Zugabe der Füllstoffe vor oder während der Polymerisation, so kann die Polymerisation Phasen umfassen, in denen in Gegenwart von 1 bis 50 Gewichtsprozent Wasser gearbeitet wird.

Die Füllstoffe können bei der Zugabe schon als Partikel mit der letztendlich in der Formmasse auftretenden Partikelgröße vorliegen. Alternativ können die Füllstoffe in Form von Vorstufen zugegeben werden, aus denen die letztendlich in der Formmasse auftretenden Partikel erst im Laufe der Zugabe bzw. Einarbeitung entstehen.

Als Brand- oder Flammschutzmittel kommen beispielsweise roter Phosphor, beschrieben in DE-A-3 713 746, Seite 5, Zeile 40 bis Seite 6, Zeile 1, und EP-A-299 444, Seite 14, Zeile 11 bis 12, bromierte Diphenyle oder Diphenylether in Kombination mit Antimontrioxid und chlorierte cycloaliphatische Kohlenwasserstoffe (Dechlorane® plus von Occidental Chemical Co., mit einer Dichte von 1,8 g/cm$^3$ und einem Schmelzpunkt (unter Zersetzung) von 350°C, bromierte Styrol-Oligomere beschrieben in DE-A-2 703 419, Spalte 4, Zeile 8 bis Spalte 3, Zeile 68 und o-, m-, und/oder p-bromierte Polystyrole (z.B. Pyro-Chek 68® von Albermale Corp., mit einer spezif. Dichte von 2,1 g/cm$^3$, einem Brom-Gehalt von mind. 66 Gew.-%, einer $T_g$ von 195°C, und einer Schmelztemperatur von 265°C)), in Frage.

Als Synergist zu den genannten Halogenverbindungen werden z.B. Zinkverbindungen oder Eisenoxide eingesetzt.

Als weitere Alternative haben sich vor allem Melaminsalze als Flammschutzmittel besonders für unverstärkte Polyamide bewährt.

Darüber hinaus hat sich Magnesiumhydroxid als Flammschutzmittel für Polyamid seit langem bewährt.

Die Polyamid-Formmassen können neben Glasfasern zusätzlich kautschukelastische Polymerisate enthalten, die oft auch als Schlagzähmodifikator, Elastomer oder Kautschuk bezeichnet werden.

Als weitere bevorzugte Thermoplasten werden teilaromatische Polyester verwendet. Unter teilaromatischen Polyestern versteht man Polyester, die neben aromatischen Wiederholungseinheiten auch aliphatische Wiederholungseinheiten enthalten. Bevorzugt sind dabei Polyester ausgewählt aus der Gruppe bestehend aus Derivaten der Polyalkylidenterephthalate, der Polyethylentherphthalate, der Polytrimethylenterephthalate und der Polybutylenterephthalate. Besonders bevorzugt sind dabei Polyester ausgewählt aus der Gruppe bestehend aus Derivaten der Polybutylenterephthalate.

In den folgenden Absätzen werden die bevorzugten Polyalkylenterephthalate näher beschrieben.

Die eingesetzten Polyalkylenterephthalate sind Reaktionsprodukte aus aromatischen Dicarbonsäure oder ihren reaktionsfähigen Derivaten wie Dimethylestern oder Anhydriden und aliphatischen, cycloaliphatischen oder araliphatischen Diolen und Mischungen dieser Reaktionsprodukte.

Bevorzugte Polyalkylenterephthalate lassen sich aus Terephthalsäure oder ihren reaktionsfähigen Derivaten und aliphatischen oder cycloaliphatischen Diolen mit 2 bis 10 C-Atomen nach bekannten Methoden herstellen (Kunststoff-Handbuch, Bd. VIII, Seite 695 ff, Karl-Hanser-Verlag, München 1973).

Bevorzugte Polyalkylenterephthalate enthalten mindestens 80, bevorzugt 90 Mol.-%, bezogen auf die Molmenge an Dicarbonsäure, Terephthalsäureester und mindestens 80, bevorzugt mindestens 90 Mol.%, bezogen auf die Molmenge Diolkomponente, Ethylenglykol- und/oder Propandiol-1,3-und/oder Butandiol-1,4-reste.

Die bevorzugten Polyalkylenterephthalate können neben Terephthalsäureester bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate können neben Ethylen- bzw. Propandiol-1,3- bzw. Butandiol-1,4-glykolresten bis zu 20 Mol.-% anderer aliphatischer Diole mit 3 bis 12 C-Atomen oder cycloaliphatischer Diole mit 6 bis 21 C-Atomen enthalten, wie Reste von Propandiol-1,3; 2-Ethylpropandiol-1,3; Neopentylglykol, Pentan-diol-1,5; Hexandiol-1,6; Cyclohexan-dimethanol-1,4; 3-Methylpentandiol-2,4; 2-Methylpentandiol-2,4; 2,2,4-Trimethylpentandiol-1,3 und -1,6,2-Ethylhexandiol-1,3; 2,2-Diethylpropandiol-1,3; Hexandiol-2,5; 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-β-hydroxyethoxyphenyl)-propan und 2,2-bis-(4-hydroxypropoxyphenyl)-propan wie in DE-A 25 07 674, Seite 4, Zeile 11 bis Seite 4, Zeile 16, DE-A 25 07 776, Seite 4, Zeile 11 bis Seite 4, Zeile 16, DE-A 27 15 932, Seite 6, Zeile 25 bis Seite 9, Zeile 12, beschrieben.

Die Polyalkylenterephthalate können durch Einbau relativ kleiner Mengen 3- oder 4-wertiger Alkohole oder 3- oder 4-basischer Carbonsäuren, wie sie in DE-A 19 00 270, Seite 4, Zeile 16 bis Seite 5, Zeile 4, und in US-B 3 692 744, Spalte 2, Zeile 31 bis Spalte 2, Zeile 49, beschrieben sind, verzweigt werden. Beispiele für bevorzugte Verzweigungsmittel sind Trimesinsäure, Trimellitsäure, Trimethylolethan und -propan und Pentaerythrit.

Es ist ratsam, nicht mehr als 1 Mol.-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten wie deren Dialkylestern und Ethylenglykol und/oder Propandiol-1,3 und/oder Butandiol-1,4 hergestellt worden sind (Polyethylen- und Polybutylenterephthalat), und Mischungen dieser Polyalkylenterephthalate.

Bevorzugte Polyalkylenterephthalate sind auch Copolyester, die aus mindestens zwei der oben genannten Säurekomponenten und/oder aus mindestens zwei der oben genannten Alkoholkomponenten hergestellt sind, besonders bevorzugte Copolyester sind Poly-(ethylenglykol/butandiol-1,4)-terephthalate.

Die Polyalkylenterephthalate besitzen im Allgemeinen eine intrinsische Viskosität von ca. 0,4 bis 1,5, vorzugsweise 0,5 bis 1,3, jeweils gemessen in Phenol/o-Dichlorbenzol (1:1 Gew.-Teile) bei 25°C.

Weiterhin können die teilaromatischen Polyester Zusatzstoffe wie Füll- und Verstärkungsstoffe wie Glasfasern oder mineralische Füllstoffe, Flammschutzmittel, Verarbeitungshilfsmittel, Stabilisatoren, Fließhilfsmittel, Antistatika, und andere übliche Additive enthalten.

Als faser- oder teilchenförmige Füllstoffe und Verstärkungsstoffe für die erfindungsgemäßen Formmassen können Glasfasern, Glaskugeln, Glasgewebe, Glasmatten, Aramidfasern, Kaliumtitanat-Fasern, Naturfasern, amorphe Kieselsäure, Magnesiumcarbonat, Bariumsulfat, Feldspat, Glimmer, Silikate, Quarz, Talkum, Kaolin, Wollastonit, u.a. zugesetzt werden, die auch oberflächenbehandelt sein können. Bevorzugte Verstärkungsstoffe sind handelsübliche Glasfasern. Die Glasfasern, die im Allgemeinen einen Faserdurchmesser zwischen 8 und 18 $\mu$m haben, können als Endlosfasern oder als geschnittene oder gemahlene Glasfasern zugesetzt werden, wobei die Fasern mit einem geeigneten Schlichtesystem und einem Haftvermittler bzw. Haftvermittlersystem auf Silanbasis ausgerüstet sein können.

Geeignet sind auch nadelförmige mineralische Füllstoffe. Unter nadelförmigen mineralischen Füllstoffen wird im Sinne der Erfindung ein mineralischer Füllstoff mit stark ausgeprägter nadelförmiger Struktur verstanden. Als Beispiel sei nadelförmiger Wollastonit genannt. Vorzugsweise weist das Mineral ein Länge-/Durchmesser (L/D)-Verhältnis von 8:1 bis 35:1, bevorzugt von 8:1 bis 11:1 auf. Der mineralische Füllstoff kann gegebenenfalls oberflächenbehandelt sein.

Vorzugsweise enthält die Polyester-Formmasse 0 bis 50 Gew.-Teile, bevorzugt 0 bis 40, insbesondere 10 bis 30 Gew.-Teile Füll- und/oder Verstärkungsstoffe. Es lassen sich ebenfalls Polyesterformmassen ohne Füll- und/oder Verstärkungsstoffe verwenden.

Als Flammschutzmittel sind handelsübliche organische Verbindungen oder Halogenverbindungen mit Synergisten oder handelsübliche organische Stickstoffverbindungen oder organisch/anorganische Phosphorverbindungen geeignet. Auch mineralische Flammschutzadditive wie Magnesiumhydroxid oder Ca-Mg-Carbonat-Hydrate wie in DE-A 4 236 122, Seite 2, Zeile 46 bis 50, beschrieben, können eingesetzt werden. Als halogenhaltige, insbesondere bromierte und chlorierte Verbindungen seien beispielhaft genannt: Ethylen-1,2-bistetrabromphthalimid, epoxidiertes Tetrabrombisphenol-A-Harz, Tetrabrombisphenol-A-oligocarbonat, Tetrachlorbisphenol-A-oligocarbonat, Pentabrompolyacrylat, bromiertes Polystyrol. Als organische Phosphorverbindungen sind die Phosphorverbindungen wie in WO 98/17720, Seite 7, Zeile 26 bis Seite 11, Zeile 11, beschrieben, geeignet, wie Triphenylphosphat (TPP) Resorcinol-bis-(diphenylphosphat) (RDP) einschließlich Oligomere sowie Bisphenol-A-bis-diphenylphosphat (BDP) einschließlich Oligomere, Melaminphosphat, Melaminpyrophosphat, Melaminpolyphosphat und deren Mischungen. Als Stickstoffverbindungen kommen insbesondere Melamin und Melamincyanurat in Frage. Als Synergisten sind Antimonverbindungen, insbesondere Antimontrioxid und Antimonpentoxid, Zinkverbindungen, Zinnverbindungen wie Zinnstannat und Borate geeignet. Kohlenstoffbildner und Tetrafluorethylenpolymerisate können ebenfalls zugesetzt werden.

Die teilaromatischen Polyester können übliche Additive, wie Mittel gegen Wärmezersetzung, Mittel gegen Wärmevernetzung, Mittel gegen Beschädigung durch ultraviolettes Licht, Weichmacher, Gleit- und Entformungsmittel, Nukleierungsmittel, Antistatika sowie gegebenenfalls weitere Stabilisatoren enthalten.

Die teilaromatischen Polyesterformmassen werden hergestellt, indem man die jeweiligen Bestandteile in bekannter Weise vermischt und bei Temperaturen von 200°C bis 330°C in üblichen Aggregaten wie Innenknetern, Extrudern, Doppelwellenschnecken schmelzcompoundiert oder schmelzextrudiert. Bei dem Schmelzcompoundier- oder Schmelzextrudierschritt lassen sich weitere Zusätze wie Verstärkungsstoffe, Stabilisatoren, Gleit- und Entformungsmittel, Nukleierungsmittel, und andere Additive zusetzen.

Als Beispiele für Oxidationsverzögerer und Wärmestabilisatoren sind sterisch gehinderte Phenole und/oder Phosphite, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im allgemeinen in Mengen bis zu 2 Gew.%, bezogen auf die Formmasse, verwendet werden, seien verschiedene substituierte Resorcine, Salicylate, Zimtsäureester, Benzotriazole, Hydroxyphenyltriazine und Benzophenone genannt.

Es können weitere anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Nigrosin und Anthrachinone als Farbmittel sowie andere Farbmittel zugesetzt werden, falls diese nicht im Bereich des verwendeten Lasers absorbieren. Andernfalls dürfen sie nur in so geringen Mengen eingesetzt werden, dass zumindest noch eine teilweise Transmission des Laserlichtes möglich ist.

Als Keimbildungsmittel können z.B. Natriumphenylphosphinat, Aluminiumoxid, Siliziumdioxid sowie bevorzugt Talkum eingesetzt werden.

Gleit- und Entformungsmittel, welche üblicherweise in Mengen bis zu 1 Gew.-% eingesetzt werden, sind bevorzugt Esterwachse, Pentaerythrittetrastearat (PETS), langkettige Fettsäuren (z.B. Stearinsäure oder Behensäure), deren Salze wie Ca- und/oder Zn-Stearat sowie Amidderivate wie Ethylen-bis-stearylamid oder Montanwachse sowie niedermolekulare Polyethylen- bzw. Polypropylenwachse.

Als Beispiele für Weichmacher seien Phthalsäuredioctylester, Phthalsäuredibenzylester, Phthalsäurebutylbenzylester, hochsiedende Kohlenwasserstoffe (Siedepunkt >250°C), N-(n-Butyl)benzolsulfonamid genannt.

Besonders bevorzugt ist der zusätzliche Einsatz von kautschukelastischen Polymerisaten, die auch als Schlagzähmodifikator, Elastomer oder Kautschuk bezeichnet werden.

Bei kautschukelastischen Polymeren handelt es sich um Copolymerisate, aus zwei oder mehreren Monomeren wie Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente. Bevorzugte Pfropfcopolymerisate sind mit Styrol und/oder Acrylnitril und/oder Alkylacrylaten oder Alkylmethacrylaten gepfropfte Polybutadiene, Butadien/Styrol-Copolymerisate und Acrylatkautschuke.

Derartige Polymere werden im Houben-Weyl, Methoden der organischen Chemie, Bd. 14/1 (Georg-Thieme-Verlag), Stuttgart, 1961), Seiten 392 bis 406 und in der Monographie von C.B. Bucknall, "Toughened Plastics" (Applied Science Publishers, London, 1977, Seite 66 bis 106 beschrieben.

Selbstverständlich können auch Mischungen von Kautschuktypen eingesetzt werden.

Als Farbmittel eignen sich sowohl organische als auch anorganische Pigmente und/oder Farbstoffe. Ruß ist ebenfalls gegebenenfalls Bestandteil der Pigmentmischung. Die Pigmente / Farbstoffe und/oder Ruße können gegebenenfalls auch als Batch eingesetzt werden.

Als anorganische Pigmente sind zu nennen: Lithopone, Titandioxid (Anatas, Rutil), Zinkoxid, Zinksulfid, Metalloxide wie Berlinerblau, Chromoxide, Eisenoxide, Kobaltblau, Kobaltchromblau, Kobaltnickelgrau, Manganblau, Manganviolett, Molybdatorange, Molybdatrot, Nickel-antimontitanat, Ultramarinblau, sowie Zirkonsilikate, Zirkonvanadiumblau, Zirkonpraseodymgelb.

Als organische Pigmente sind zu nennen: Antrachinon-, Azo-, Azomethin-, Benzanthron-, Chinacridon-, Chinophthalon-, Dioxazin-, Flavanthron-, Indanthron-, Isoindo-lin-, Isoindolinon-, Methin-, Perinon-, Perylen-, Phthalocyanin-, Pyranthron-, Pyrrolopyrrol-, Thioindigopigmente sowie Metallkomplexe von z.B. Azo-, Azomethin-, Methinfarbstoffen oder Metallsalzen von Azoverbindungen.

Als polymerlösliche Farbstoffe eignen sich beispielsweise Dispersionsfarbstoffe, wie solche der Anthrachinonreihe, beispielsweise Alkylamino-, Amino-, Arylamino-, Cyclohexylamino-, Hydroxy-, Hydroxyamino- oder Phenylmercaptoanthrachinone, sowie Metallkomplexe von Azofarbstoffen, insbesondere 1:2-Chrom- oder Kobaltkomplexe von Monoazofarbstoffen, sowie Fluoreszenzfarbstoffe, zum Beispiel solche aus der Benzthiazol-, Cumarin-, Oxarin- oder Thiazinreihe.

Die polymerlöslichen Farbstoffe können auch in Kombinationen mit Füllern und/oder Pigmenten, insbesondere mit anorganischen Pigmenten wie Titandioxid eingesetzt werden.

Erfmdungsgemäß können Pigmente und/oder polymerlösliche Farbstoffe verwendet werden.

Geeignete Pigmentzusätze sind beispielsweise Fettsäuren mit mindestens 12 C-Atomen, wie Behensäure oder Stearinsäure, deren Amide, Salze oder Ester, wie Aluminiumstearat, Magnesiumstearat, Zinkstearat, oder Magnesiumbehenat, sowie quartäre Ammoniumverbindungen, wie Tri-($C_1$-$C_4$)-alkylbenzylammoniumsalze, Wachse, wie Polyethylenwachs, Harzsäuren, wie Abietinsäure, Kolophoniumseife, hydriertes oder dimerisiertes Kolophonium, $C_{12}$-$C_{18}$-Paraffindisulfonsäuren oder Alkylphenole.

Ebenfalls geeignet sind die metallhaltigen Pigmente, wie die anorganischen Pigmente und die Metallkomplexe von Azo-, Azomethin- oder Methinfarbstoffen, Azomethin-, Chinacridon-, Dioxazin-, Isoindolin-, Isoindolinon-, Perylen-, Phthalocyanin-, Pyrrolopyrrol- und Thioindigo-Farbmittel und Wismut-Vanadat.

Die Thermoplasten können Homopolymerisate oder Copolymerisate von ethylenisch ungesättigten Monomeren und Polykondensate aus bifunktionellen reaktiven Verbindungen sein. Auch Mischungen verschiedener Polymerer sind geeignet.

Besonders geeignet sind Polymere, die im verarbeiteten festen Zustand keine kristallinen Bereiche aufweisen, und somit völlig amorph sind.

Als "amorph" wird hierbei der in L.H. Sperling: Indroduction to Physical Polymer Science, J. Wiley & Sons, 1986, Seite 123 beschriebene Polymerzustand verstanden.

Beispiele für Homopolymerisate und Copolymerisate von einem oder mehreren ethylenisch ungesättigten Monomeren ("Vinylpolymerisate") sind solche der Monomeren Ethylen, Propylen, Vinylacetat, Styrol, α-Methylstyrol, o-, und/oder m-, und/oder p-substituierte Styrole, Acrylnitril, Methacrylnitril, Methylmethacrylat, Maleinsäureanhydrid, N-substituierte-Maleinimide, Chloropren, Butadien-1,3, Isopropen, $C_1$-$C_{18}$-Alkylacrylate und -Methacrylate.

Insbesondere kommen in Frage:

- kautschukfreie Vinylpolymerisate (A.1)

- kautschukhaltige Vinylpolymerisate, z.B. Pfropfcopolymerisate von Vinylmonomeren auf einen Kautschuk (A.2)

- Mischungen aus kautschukfreien (A.1) und kautschukhaltigen (A.2) Vinylpolymerisaten.

Bevorzugte Vinylpolymerisate A.1 sind Copolymerisate aus einerseits Styrol, $\alpha$-Methylstyrol, ortho-, und/oder meta-, und/oder para-substituiertes Styrol oder Mischungen dieser Monomere (A.1.1) und andererseits Acrylnitril, Methacrylnitril, Methylmethacrylat, Maleinsäureanhydrid, N-substituiertes Maleinimid oder Mischungen dieser Monomere (A. 1.2).

Bevorzugt enthalten diese Copolymerisate 50 bis 98 Gew.-% A.1.1 und 50 bis 2 Gew.-% A.1.2.

Besonders bevorzugte Copolymerisate A.1 sind solche aus Styrol, Acrylnitril und gegebenenfalls Methylmethacrylat, aus $\alpha$-Methylstyrol, Acrylnitril und gegebenenfalls Methylmethacrylat sowie aus Styrol, $\alpha$-Methylstyrol, Acrylnitril und gegebenenfalls Methylmethacrylat.

Die bekanntesten sind Styrol-Acrylnitril-Copolymerisate, die durch radikalische Polymerisation, insbesondere durch Emulsions-, Suspensions-, Lösungs- oder Massepolymerisation hergestellt werden können. Die Copolymerisate A.1 besitzen vorzugsweise Molekulargewichte Mw (Gewichtsmittel, ermittelt durch Lichtstreuung oder Sedimentation) von 15 000 bis 200 000.

Weitere besonders bevorzugte Copolymerisate A.1 sind statistisch aufgebaute Copolymerisate aus Styrol und Maleinsäureanhydrid, die z.B. durch eine kontinuierliche Masse- oder Lösungspolymerisation bei unvollständigen Umsätzen aus dem entsprechenden Monomeren hergestellt werden können. Ihre Zusammensetzung kann innerhalb weiter Grenzen variiert werden. Bevorzugt enthalten sie 5 bis 25 Gew.-% an Wiederholungseinheiten abgeleitet von Maleinsäureanhydrid.

Anstelle von Styrol können diese Polymerisate auch o-, und/oder m-, und/oder p-substituierte Styrole, wie p-Methylstyrol, Vinyltoluol, 2,4-Dimethylstyrol und andere substituierte Styrole, wie $\alpha$-Methylstyrol, enthalten.

Die kautschukhaltigen Vinylpolymerisate A.2 umfassen z.B. Pftopfcopolymerisate mit kautschukelastischen Eigenschaften, die im wesentlichen aus mindestens zwei der folgenden Monomeren erhältlich sind: Chloropren, Butadien-1,3, Isopropen, Styrol, Acrylnitril, Ethylen, Propylen, Vinylacetat, $C_1$-$C_{18}$-Alkylacrylate und $C_1$-$C_{18}$-Alkylmethacrylate. Solche Polymerisate sind in "Methoden der Organischen Chemie" (Houben-Weyl), Bd. 14/1, Georg Thieme-Verlag, Stuttgart, 1961, Seite 393-406 und in C.B. Bucknall, "Toughened Plastics", Appl. Science Publishers, London 1977, Seite 66 bis 106 beschrieben. Bevorzugte Polymerisate A.2 sind partiell vernetzt und besitzen Gelgehalte von über 20 Gew.-%, vorzugsweise über 40 Gew.-%, insbesondere über 60 Gew.-%.

Bevorzugte kautschukartige Vinylpolymerisate A.2 sind Pfropfcopolymerisate aus:

A.2.1    5 bis 95, vorzugsweise 30 bis 80 Gew.-Teilen, einer Mischung aus

A.2.1.1    50 bis 95 Gew.-Teilen Styrol, $\alpha$-Methylslyrol, ortho-, meta-, und/oder para- oder Halogenstyrol, oder ortho-, meta-, und/oder para-Methylstyrolen, Methylmethacrylat oder Mischungen dieser Verbindungen und

A.2.1.2    5 bis 50 Gew.-Teilen Acrylnitril, Methacrylnitril, Methylmethacrylat, Maleinsäureanhydrid, $C_1$-$C_4$-alkyl- bzw. phenyl-N-substituierten Maleinimiden oder Mischungen dieser Verbindungen auf

A.2.2    5 bis 95, vorzugsweise 20 bis 70 Gew.-Teile Kautschuk-Polymerisat mit einer Glasübergangstemperatur unter -10°C.

Bevorzugte Pfropfcopolymerisate A.2 sind z.B. mit Styrol und/oder Acrylnitril und/oder Alkylacrylaten oder Alkylmethacrylaten gepfropfte Polybutadiene, Butadien/Styrol-Copolymerisate und Acrylatkautschuke; sowie Copolymerisate der in DE-A 1 694 173, Seite 2, Zeile 32 bis Seite 4, Zeile 10, beschriebenen Art; mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie in DE-A 2 348 377, Seite 4, Zeile 14 bis Seite 5, Zeile 2, beschrieben sind.

Besonders bevorzugte Polymerisate A.2 sind ABS-Polymerisate, wie sie in DE-A 2 035 390, Seite 2, Zeile 15 bis Seite 3, Zeile 6, und in DE-A 2 248 242, Seite 11, Zeile 3 bis Seite 13, Zeile 17, beschrieben sind.

Besonders bevorzugte Pfropfcopolymerisate A.2 sind erhältlich durch Pfropfpolymerisation von

$\alpha$.    10 bis 70, vorzugsweise 15 bis 50, insbesondere 20 bis 40 Gew.-% (bezogen auf das Pfropfcopolymerisat A.2) von Acrylsäureestern oder Methacrylsäureestern oder von 10 bis 70, vorzugsweise 15 bis 50, insbesondere 20 bis 40 Gew.% eines Gemisches aus 10 bis 50, vorzugsweise 20 bis 35 Gew.-% (bezogen auf das Gemisch) Acrylnitril, Acrylsäureester oder Methacrylsäureester und 50 bis 90, vorzugsweise 65 bis 80 Gew.-% (bezogen auf das Gemisch), Styrol (als Pfropfauflage A.2.1) auf

Das Gemisch ist die Mischung aus Acrylnitril, Acrylsäureester oder Methacrylsäureester und Styrol.

β. 30 bis 90, vorzugsweise 50 bis 85, insbesondere 60 bis 80 Gew.-%, bezogen auf Pfropfpolymerisat A.2, eines Butadien-Polymerisats mit mindestens 50 Gew.-%, bezogen auf β, Butadienresten (als Pfropfgrundlage A.2.2),

wobei vorzugsweise der Gelanteil der Pfropfgrundlage β mindestens 40 Gew.-% (in Toluol gemessen), der Pfropfgrad G 0,15 bis 0,55 und der mittlere Teilchendurchmesser $d_{50}$ des Pfropfpolymerisats A.2 0,05 bis 2 μm, vorzugsweise 0,1 bis 0,6 μm beträgt.

Acrylsäureester bzw. Methacrylsäureester sind Ester der Acrylsäure oder Methacrylsäure und einwertiger Alkohole mit 1 bis 18 C-Atomen. Besonders bevorzugt sind Methylmethacrylat, Ethyhnethacrylat, Propylmethacrylat, n-Butylacrylat t-Butylacrylat und t-Butylmethacrylat.

Das Butadienpolymerisat β kann neben Butadienresten bis zu 50 Gew.-%, bezogen auf β, Reste anderer ethylenisch ungesättigter Monomerer, wie Styrol, Acrylnitril, $C_1$-$C_4$-Alkylester oder Acryl-oder Methyacrylsäure (wie Methylacrylat, Ethylacrylat, Methylmethacrylat, Ethylmethacrylat), Vinylester und/oder Vinylether) enthalten. Bevorzugt ist Polybutadien.

Bei der Pfropfpolymerisation werden die Pfropfmonomeren bekanntlich nicht vollständig auf die Pfropfgrundlage polymerisiert; schließen Pfropfpolymerisate A.2 aber Produkte ein, die durch Polymerisation der Pfropfmonomere in Gegenwart der Pfropfgrundlage gewonnen werden.

Der Pfropfgrad G ist das Gewichtsverhältnis von aufgepfropften Pfropfmomomeren zur Pfropf grundlage (Dimensionslose Zahl).

Der mittlere Teilchendurchmesser $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), Seiten 782 bis 796) bestimmt werden.

Weitere besonders bevorzugte Polymerisate A.2 sind Pfropfcopolymerisate aus

τ. 20 bis 90 Gew.-%, bezogen auf A.2, Acrylatkautschuk mit einer Glasübergangstemperatur unter -20°C als Pfropfgrundlage A.2.2 und

ε. 10 bis 80 Gew.-%, bezogen auf A.2, mindestens eines polymerisierbaren, ethylenisch ungesättigten Monomeren, dessen bzw. deren in Abwesenheit von 1. entstandenen Homo- bzw. Copolymerisate eine Glasübergangstemperatur über 25°C hätten, als Pfropfmonomere A.2.1.

Die Acrylatkautschuke τ der Polymerisate A.2 sind vorzugsweise Polymerisate aus Acrylsäurealkylestern, gegebenenfalls mit bis zu 40 Gew.-%, bezogen auf τ, anderen polymerisierbaren, ethylenisch ungesättigten Monomeren. Zu den bevorzugten polymerisierbaren Acrylsäureestern gehören $C_1$-$C_8$-Alkylester, beispielsweise Methyl-, Ethyl-, Butyl-, n-Octyl- und 2-Ethyl-hexylester; Halogenalkylester, vorzugsweise Halogen-$C_1$-$C_8$-alkyl-ester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie Ethylenglykol-dimethacrylat, Allylmethacrylat; mehrfach ungesättigte heterocyclische Verbindungen, wie Trivinyl- und Triallylcyanurat- polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-striazin, Triallylbenzole.

Die Menge der vernetzenden Monomeren beträgt vorzugsweise 0,02 bis 5, insbesondere 0,05 bis 2 Gew.-%, bezogen auf die Pfropfgrundlage τ.

Bei cyclischen vernetzenden Monomeren mit mindestens 3 ethylenisch ungesättigten Gruppen ist es vorteilhaft, die Menge auf unter 1 Gew.% der Pfropfgrundlage τ zu beschränken.

Bevorzugte "andere" polymerisierbare, ethylenisch ungesättigte Monomere, die neben den Acrylsäureestern gegebenenfalls zur Herstellung der Pfropfgrundlage dienen können, sind Acrylnitril, Styrol, α-Methylstyrol, Acrylamide, Vinyl-$C_1$-$C_6$-Alkylether, Methylmethacrylat, Butadien. Bevorzugte Acrylatkautschuke als Pfropfgrundlage τ sind Emulsionspolymerisate, die einen Gelgehalt von mindestens 60 Gew.-% aufweisen.

Weitere geeignete Pfropfgrundlagen gemäß A.2.2 sind Silikonkautschuke mit pfropfaktiven Stellen, wie sie in DE-A 37 04 657, Spalte 5, Zeile 21 bis Spalte 6, Zeile 52; DE-A 37 04 655 Spalte 5, Zeile 24 bis Spalte 6, Zeile 65; DE-A 36 31 540, Seite 6, Zeile 65 bis Seite 7, Zeile 45;und DE-A 36 31 539 , Seite 6, Zeile 54 bis Seite 7, Zeile 35 beschrieben werden.

Der Gelgehalt der Pfropfgrundlage A.2.2 wird bei 25°C in Dimethylformamid bestimmt (M. Hoffrnann, H. Krömer, R. Kuhn, Polymeranalytik 1 und II, Georg-Thieme-Verlag, Stuttgart 1977).

Die Pfropfpolymerisate A.2 können nach bekannten Verfahren wie Masse-, Suspensions-, Emulsions- oder Masse-Suspensionsverfahren hergestellt werden.

Die erfindungsgemäße Mischung kann auch in Polyurethane mit den dem Fachmann bekannten Verfahren eingearbeitet werden. Unter Polyurethanen werden Polymere verstanden, die durch Additionsreaktion von Poylisocyanaten mit gegenüber Isocyanaten reaktiven Verbindungen. Als gegenüber Isocyanaten reaktiven Verbindungen werden Verbindungen verstanden, die mindestens 2 an einen organischen Rest gebundenen Hydroxyl- und/oder Aminogruppen besitzen.

Als organische Diisocyanate kommen beispielsweise aliphatische, cycloaliphatische, aralipha tische, heterocyclische und aromatische Diisocyanate in Betracht, wie sie in Justus Liebigs Annalen der Chemie, 562, S.75-136 beschrieben werden. Bevorzugt sind aromatische und cycloaliphatische Diisocyanate.

Im einzelnen seien beispielhaft genannt: aliphatische Diisocyanate wie Hexamethylendüsocyanat, cycloaliphatische Diisocyanate wie Isophorondiisocyanat, 1,4-Cyclohexan-diisocyanat, 1-Methyl-2,4-cyclohexandiisocyanat und 1-Methyl-2,6-cyclohexandiisocyanat sowie die entsprechenden Isomerengemische, 4,4'-Dicyclohexylmethandiisocyanat, 2,4'-Dicyclohexylmethandiisocyanat und 2,2'-Dicyclohexylmethandiisocyanat sowie die entsprechenden Isomerengemische, aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate und 2,4'-Diphenylmethandiisocyanate, 4,4'-Diisocyanatodiphenyl-ethan-(1,2) und 1,5-Naphthylendiisocyanat. Vorzugsweise verwendet werden 1,6-Hexamethylendiisocyanat, Isophorondiisocyanat, Dicyclohexyhnethandüsocyanat, Diphenylmethandiisocyanat-Isomerengemische mit einem 4,4'-Diphenylmethandüsocyanatgehalt von >96 Gew.-% und insbesondere 4,4'-Diphenylmethandüsocyanat und 1,5-Naphthylendüsocyanat. Die genannten Diisocyanate können einzeln oder in Form von Mischungen untereinander zur Anwendung kommen. Sie können auch zusammen mit bis zu 15 Gew.% (berechnet auf die Gesamtmenge an Diisocyanat) eines Polyisocyanates verwendet werden, wie Triphenylmethan-4,4',4''-triisocyanat oder Polyphenyl-polymethylen-polyisocyanate.

Bevorzugte Isocyanate sind 1,6-Hexamethylendiisocyanat, Isophorondiisocyanat, Dicyclohexylmethandiisocyanat, Diphenylmethandiisocyanat-Isomerengemische mit einem 4,4'-Diphenylmethandiisocyanatgehalt von >96 Gew.-% und insbesondere 4,4'-Diphenylmethandiisocyanat und 1,5-Naphthylendiisocyanat. Bevorzugte gegenüber Iso-cyanaten reaktive Verbindungen sind lineare hydroxylterminierte Polyole mit einem mittleren Molekulargewicht Mn von 500 bis 10000, bevorzugt 500 bis 5000, besonders bevorzugt 600 bis 2000 eingesetzt. Produktionsbedingt enthalten diese oft bis zu 1 Gew.-% an nicht linearen Verbindungen. Häufig spricht man daher auch von "im wesentlichen linearen Polyolen". Bevorzugt sind Polyether-Diole, Polycarbonat-Diole, sterisch gehinderte Polyesterdiole, hydroxylterminierte Polybutadiene oder Gemische aus diesen.

Geeignete Polyether-Diole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien genannt: Ethylenoxid, 1,2-Propylenoxid, Epichlorhydrin und 1,2-Butylenoxid und 2,3-Butylenoxid. Vorzugsweise werden Ethylenoxid, 1,2-Propylenoxid und Mischungen aus 1,2-Propylenoxid und Ethylenoxid eingesetzt. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanol-amin, und Diole, wie Ethylenglykol, 1,3-Propylenglykol, 1,4-Butandiol und 1,6-Hexandiol. Gegebenenfalls- können auch Mischungen von Startermolekülen eingesetzt werden.

Geeignete Polyether-Diole sind ferner die hydroxylgruppenhaltigen Polyrnerisationsprodukie des Tetrahydrofurans. Es können auch trifunktionelle Polyether in Anteilen von 0 bis 30 Gew.-%, bezogen auf die bifunktionellen Polyether, eingesetzt werden, jedoch höchstens in solcher Menge, dass ein thermoplastisch verarbeitbares Produkt entsteht. Die im wesentlichen linearen Polyether-Diole können sowohl einzeln als auch in Form von Mischungen untereinander zur Anwendung kommen.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, wie in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol und Dipropylenglykol. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von Hydroxycarbonsäuren wie Hydroxycapronsäure und Polymerisationsprodukte von Lactonen, gegebenenfalls substituierten Caprolactonen. Als Polyester-Diole werden vorzugsweise verwendet, Ethandiolpolyadipate 1,4-Butandiol-polyadipate, Ethandiol-1,4-butandiol-polyadipate, 1,6-Hexandiolneopentylglykol-polyadipate, 1,6-Hexandiol-1,4-butandiol-polyadipate und Polycaprolactone. Die Polyester-Diole können einzeln oder in Form von Mischungen untereinander zur Anwendung kommen.

Ein Überblick über das Herstellprinzip, die Ausgangsmaterialien, die Katalyse der Urethanbildung, die Additive, die verschiedenen Typen und Einsatzformen, die verschiedenen Herstellverfahren und Einsatzgebiete wird in Ullmann's Encyclopedia of Industrial Chemistry, Wiley-VCH Verlagsgesellschaft mbH, D-69451 Weinheim, 1992, Vol. A21, S. 665 - 716, gegeben. Die nach diesen Verfahren herstellbaren Polyurethane können die dem Fachmann bekannten Füllstoffe und Additive enthalten Antioxidantien, UV-Stabilisatoren, Hilfsmittel und Zusatzstoffe wie in DE-A 29 01 774, Seite 14, Zeile 16 bis Seite 15, Zeile 2, beschrieben, wie Ionol, Irganox® 1076, Irganox® 1098, Tinuvin® 144, Irgafos® 38, Höchstwachs® C, Acrawax® oder Loxämid® . Genannt seien als Gleitmittel, wie Fettsäureester, deren Metallseifen, Fettsäureamide und Silikonverbindungen, Antiblockmittel, Inhibitoren, Stabilisatoren gegen Hydrolyse, Hitze und Verfärbung, Flammschutzmittel, Farbstoffe, Pigmente, anorganische und organische Füllstoffe und Verstärkungsmittel.

Weitere Vorteile der erfindungsgemäßen Mischung, seines Verfahrens zur Herstellung sowie der polymeren Strahlenschutzstoffe, die aus der erfindungsgemäßen Mischung und den jeweiligen Polymer hergestellt werden, sind: leichteres Gewicht, toxikologische Unbedenklichkeit, Schwermetallfreiheit des Strahlenschutz-Additivs, umweltschonende Entsorgung nach der Nutzung, lange Gebrauchsfähigkeit, niedriger Verschleiß durch hohe mechanische Eigenschaften, Sterilisierbarkeit durch Heißdampf.

Die hier beschriebenen erfindungsgemäßen polymeren Strahlenschutzstoffe, bei denen als Polymer entweder Polyurethanen, Thermoplasten oder Kautschuken eingesetzt wird, können zur Abschirmung elektromagnetischer Strahlung von Fernseher- oder Monitorgehäusen verwendet werden. Sie können als Ausgangsmaterial für strahlungsgeschützten Kleidungsstücken wie Schürzen, Mäntel, Westen, Hosen, Handschuhe, Schilddrüsen-, Ovarien- und Gonadenschutz. Sie können weiterhin an Zimmerwänden in Form von Gummi- oder Kunststoffmatten, auf Fußböden in Form von Gummifußböden (Kombination von Trittschalldämmung mit Abschirmwirkung) eingesetzt werden. Die erfindungsgemäßen Mischungen können als Pulver in Zement- oder Betonmischungen zur Herstellung von Mauersteinen, Beton oder Ziegeln beigemischt werden. Sie können auch in Polyurethan-Schäume zur Wärmeisolation eingesetzt werden. Aus den mit der erfindungsgemäßen Mischung gefüllten polymeren Strahlenschutzstoffen können Filme, Folien und Behälter hergestellt werden, die als Umhüllung oder Verpackung für fotografische Filme zum Schutz vor Belichtung durch Röntgenstrahlung eingesetzt werden können.

## **Beispiele**

Allgemeines:

Soweit nicht anders angegeben, sind alle Mengen von Komponenten und Verbindungen als Gewichtangaben, berechnet auf die Menge aller Elemente, zu verstehen.

Zur Bestimmung der Abschirmwirkung werden die erfindungsgemäßen Mischungen in einer Dicke eingesetzt, die einen Schutz gegen elektromagnetische Strahlung mit Energien größer als 10 keV liefert, mit Schwächungsfaktoren, die der Schicht metallischen Bleis mit Dicke von mindestens 0,1 mm bis 1,0 mm Blei entsprechen. Diese Äquivalenz wird gemessen in der Art wie Bleiäquivalente bestimmt werden entsprechend dem Stand der Technik nach DIN 6845, indem Röntgenstrahlung bei verschiedenen Röhrenspannungen (Röntgenröhre mit Wolfram-Antikathode) typischerweise bei 75 kV, 100 kV, 150 kV oder 300 kV in definierten Strahlgeometrien und definierten Strahlenqualitäten verwendet werden.

In einem zweiten Verfahren werden aus den Platten durch Aufeinanderkleben Stufenkeile hergestellt. Es entstanden Flächen mit unterschiedlicher Dicken und damit jeweils verschiedener Massenbelegung der erfindungsgemäßen Mischung. Die Stufenkeile werden mit Röntgenstrahlung bei verschiedenen Röhrenspannungen aufbelichtet und die belichteten Röntgenfilme densitometrisch ausgewertet. Gleiche Schwärzung bedeutet gleiche Dämpfung der Strahlung. Geringere Schwärzung bedeutet bessere Abschirmwirkung.

In den Beispielen ist jeweils beschrieben, nach welchem Verfahren die Anschirmeigenschaften bestimmt wurden.

Um die Ergebnisse der Durchstrahlungsversuche auf eine von der Probendichte und dem Füllgrad des Strahlenschutz-Additivs in der Probe unabhängige Größe zu beziehen, wurde die Massenbelegung wie folgt definiert:

Massenbelegung = Dichte der Probe [g/cm³] x Füllgrad des polymeren Strahlenschutzstoffes [%] x Dicke der Probe [cm] / 100

**Beispiel 1**

a) Verwendete Rohstoffe und ihre Zusammensetzung

Aus den folgenden Komponenten wurde eine erfindungsgemäße Mischung hergestellt:

| Bezeichnung | Hersteller | Anteil in der erfindungsgemäßen Mischung |
|---|---|---|
| "Optipol" Polierpulver | Tschepetsk Mechanisches Werk AG, Glasow | 29,5 Gew.-% |
| Gadolinium-Konzentrat Gadolinium-Konzentrat | "Moskauer Polymetall-Werk", Staatsunternehmen, Moskau | 39,0 Gew.-% 39,0 Gew.-% |
| Wolfram-Pulver 6.1 | "Kirowgradisches Werk der harten Legierungen", Swerdlower Gebiet | 31,5 Gew.-% |

b) Zusammensetzung laut Hersteller-Angaben

| Bezeichnung | Gehalt Seltene Erden | $La_2O_3$ | $CeO_2$ | $Pr_6O_{11}$ | $Nd_2O_3$ | $Sm_2O_3$ | $Eu_2O_3$ | $Gd_2O_3$ | $Tb_2O_3$ | $Dy_2O_3$ |
|---|---|---|---|---|---|---|---|---|---|---|
| Gadolinium-Konz. | 97,1 | - | - | - | - | 0,9 | 0,8 | 93,8 | <0,3 | 0,5 |
| "Optipol" | 96,0 | 24,1 | 54,5 | 4,0 | 14,5 | 0,8 | 0,2 | <1,0 | <0,3 | - |

c) Herstellung der erfindungsgemäßen Mischung

Vor der Benutzung wurden das "Optipol"-Polierpulver, das Gadolinium-Konzentrat und das Wolfram-Pulver 2 Stunden bei einer Temperatur von 120°C getrocknet, und durch Sieb 063 (Wolfram durch Sieb 016) gesichtet. Anschließend wurden die drei Komponenten in einem Taumelmischer über 24 Stunden gemischt.

Es wurden ein orange-braunes, rieselfähiges, verklumpungsfreies Pulver als erfmdungsgemäße Mischung mit einer Dichte von 8,55 g/cm$^3$ erhalten. Die Dichte wurde durch ein pyknometrisches Verfahren mit Isopropanol, Ethanol und Aceton als Messflüssigkeit gemessen.

**Beispiel 2**

Handelsübliches aromatisches thermoplastisches Polyurethan (TPU), Erweichungstemperatur ca. 160°C, Verarbeitungstemperatur ca. 200°C, Dichte 1,2 g/cm$^3$

Die Proben 1 bis 5 aus dem Polyurethan und der erfindungsgemäßen Mischung aus Beispiel 1 wurden durch Kalandrieren hergestellt: Die Walzen eines Kalanders wurden auf etwas oberhalb der Schmelztemperatur, d.h. ca. 170°C, vorgewärmt. Das TPU wurde auf die vorgeheizten Walzen gebracht und nach dem Schmelzen auf den drehenden Walzen homogenisiert. Anschließend wurde die erfindungsgemäße Mischung aus Beispiel 1 portionsweise zugegeben. Die Masse wurde so lang geknetet, bis sie äußerlich homogen wurde. Durch röntgenographische Untersuchungen zur Homogenität der TPU/Additiv-Mischungen wurde festgestellt, dass ca. 1. Stunde Knetzeit auf den Walzen notwendig ist.

Danach wurden die Compounds in eine mit Silikon-Spray als Trennmittel beschichtete Form eingebracht. In einer hydraulischen Presse mit elektrischer Heizung wird die gefüllte Form auf 170°C bis 180°C Verarbeitungstemperatur erhitzt. Die Temperatur wird 15 Minuten gehalten und anschließend ein Druck von 150 bar aufgebracht. Beim Abkühlen auf Raumtemperatur wird der Druck auf 350 bar erhöht. Die scheibenartigen Formkörper haben einen Durchmesser von 50 mm, eine Höhe von 0,85 bis 0,9 mm, werden nach Druckentlastung entnommen und ihre Dichte bestimmt.

Nach dem oben beschriebenen Verfahren wurden folgende Proben aus der erfmdungsgemäßen Mischung und dem TPU hergestellt:

| Bezeichnung | Additiv-Gehalt [$k_A$] | Dichte [$\rho_P$] | Dicke [$d_P$] | Massenbelegung [$m_A$] |
|---|---|---|---|---|
| Probe 1 | 14,7 Gew.-% | 1,38 g/cm$^3$ | 3,29 mm | 0,067 g/cm$^2$ |
| Probe 2 | 17,7 Gew.-% | 1 ,42 g/cm$^3$ | 6,23 mm | 0,157 g/cm$^2$ |
| Probe 3 | 57,2 Gew.-% | 2,36 g/cm$^3$ | 1,78mm | 0,240 g/cm$^2$ |
| Probe 4 | 75,7 Gew.-% | 3,4 g/cm$^3$ | 0,99 mm | 0,255 g/cm$^2$ |
| Probe 5 | 84,0 Gew.-% | 4,26 g/cm$^3$ | 1,12 mm | 0,401 g/cm$^2$ |

$$m_A = k_A \cdot \rho_P \cdot d_P$$

Massenbelegung = Massenanteil der erfindungsgemäßen Mischung x Dichte des Prüfl. x Dicke des Prüfl.

**Beispiel 3**

Prüfung der Röntgenschutzeigenschaften

Die Abschirmeigenschaften der Probe 1 bis Probe 5 wurden in der Geometrie des schmalen Strahlenbündels gemäß DIN 6845 mit Wolfram-Röntgenröhren defmierter Strahlenqualitäten gemessen. Durch Gesamtfilterung mittels Al- und Cu-Filter wurden die Strahlenqualitäten des ISO-Spektrum H-100 erreicht. Bestimmt wurde der Schwächungsgrad und der Bleigleichwert der Proben..

Die Strahlenqualität ISO-H-100 wurde erreicht durch: Beschleunigungsspannung U=100 kV und Filter: 4 mm Al + 0,11 mm Cu.

| Bezeichnung | Massenbelegung [$m_A$] | U=100 kV, 4 mm Al + 0,11 mm Cu | |
| --- | --- | --- | --- |
| | | Schwächungsgrad | Bleigleichwert, mm Pb |
| Probe 1 | 0,067 g/cm$^2$ | 1,94 | 0,06 mm |
| Probe 2 | 0,157 g/cm$^2$ | 3,92 | 0,17 mm |
| Probe 3 | 0,240 g/cm$^2$ | 6,97 | 0,28 nun |
| Probe 4 | 0,255 g/cm$^2$ | 7,05 | 0,28 mm |
| Probe 5 | 0,401 g/cm$^2$ | 17,8 | 0,5 mm |

Die für Kalibrier- und Vergleichmessungen verwendeten Bleimuster hatten einen Durchmesser von 50 mm. Sie wurden aus Bleifolie der Sorte S1 mit Dicken von 0,065 mm und 0,085 mm geschnitten. Der Untersuchungsbereich der Bleigleichwerte wurde von 0,1 bis 0,5 mm überdeckt. Die Dicke der zusammengefügten Bleimuster wurde durch Gesamtmasse, Musterfläche und der spezifischen Dichte von Blei von 11,3 g/cm$^3$ durch das Wägeverfahren bestimmt.

| Bezeichnung | Massenbelegung [$m_A$] | Schwächungsgrad | Bleigleichwert, mm Pb |
| --- | --- | --- | --- |
| Probe 6 (Blei-Vergleichsmuster) | 0,135 g/cm$^2$ | 2,5 | 0,11 mm |
| Probe 7 (Blei-Vergleichsmuster) | 0,28 g/cm$^2$ | 5,8 | 0,24 mm |
| Probe 8 (Blei-Vergleichsmuster) | 0,4 g/cm$^2$ | 9,5 | 0,34 mm |
| Probe 9 (Blei-Vergleichsmuster) | 0,465 g/cm$^2$ | 12,5 | 0,43 mm |
| Probe 10 (Blei-Vergleichsmuster) | 0,59 g/cm$^2$ | 19 | 0,52 mm |

Bei gleicher Massenbelegung von 0,4 g/cm$^2$ beträgt der Schwächungsgrad der Probe 5 17,8, während das Bleivergleichsmuster (Probe 8) nur einen Schwächungsgrad von 9,5 hat. Das bedeutet, dass für die gleiche Strahlenschutzwirkung wie Blei eine geringere Massenbelegung erforderlich ist, was durch geringere Dicke oder niedrigeren Füllgrad der Probe erreicht werden kann. Dies führt zu einer Gewichtseinsparung und damit zu einem erhöhten Tragekomfort für daraus hergestellte Teile, wie z.B. Röntgenschürzen.

**Vergleichsbeispiel 4**

a) Verwendete Rohstoffe und ihre Zusammensetzung

Aus den folgenden Komponenten wurde die Mischung hergestellt:

| | | |
| --- | --- | --- |
| Wismutoxid | Charge 161 | 57,0 Gew.-% |
| Wolfram-Pulver 6.1 | Charge 68 | 43 Gew.-% |

b) Zusammensetzung laut Hersteller Angaben

| Bezeichnung | Gehalt an |
| --- | --- |
| Wismutoxid | 97,1 Gew.-% |
| Wolfram-Pulver 6.1 | 99,9 Gew.-% |

c) Herstellung dieser Mischung nach Beispiel 4

Vor der Benutzung wurden das Wismutoxid- und das Wolfram-Pulver 2 Stunden bei einer Temperatur von 120°C getrocknet, und durch Sieb 063 (Wolfram durch Sieb 016) gesichtet. Anschließend wurden die Komponenten in einem Taumelmischer über 24 Stunden gemischt.

Es wurden ein orange-braunes, rieselfahiges, verklumpungsfreies Pulver mit einer Dichte von 11,8 g/cm$^3$ erhalten, gemessen durch ein pyknometrisches Verfahren mit Isopropanol, Ethanol und Aceton als Messflüssigkeit,

**Beispiel 5**

Handelsübliches Acrylnitril-Butadien-Styrol-Blockcopolymer (ABS), Erweichungstemperatur ca. 200°C, Verarbeitungstemperatur ca 220 bis 260°C, Dichte 1,05 g/cm$^3$.

Die Einarbeitung der Mischung aus Beispiel 4 in den ABS-Kunststoff erfolgte durch Kalandrieren: Die Walzen eines Kalanders wurden auf ca. 180°C vorgewärmt. Das ABS wurde auf die vorgeheizten Walzen gebracht und nach dem Schmelzen auf den drehenden Walzen homogenisiert. Anschließend wurde die Mischung (Beispiel 4) portionsweise zugegeben. Die Masse wurde so lang geknetet, bis sie äußerlich homogen wurde. Durch röntgenographische Untersuchungen zur Homogenität der ABSBeispiel 4-Mischung wurde festgestellt, dass ca. 1 Stunde Knetzeit auf den Walzen notwendig sind.

Danach wurden die Compounds in eine mit Silikon-Spray als Trennmittel beschichtete Form eingebracht. In einer hydraulischen Presse mit elektrischer Heizung wird die gefüllte Form auf 190°C bis 200°C Verarbeitungstemperatur erhitzt. Die Temperatur wird 15 Minuten gehalten und anschließend ein Druck von 150 bar aufgebracht. Beim Abkühlen auf Raumtemperatur wird der Druck auf 350 bar erhöht. Die scheibenartigen Formkörper haben einen Durchmesser von 50 mm, eine Höhe von 0,85 bis zu 6,5 mm, werden nach Druckentlastung entnommen und ihre spezifische Dichte bestimmt.

Nach dem oben beschriebenen Verfahren wurden folgenden Proben aus der Mischung nach Beispiel 4 und dem ABS hergestellt:

| Bezeichnung | Additiv-Gehalt [$k_A$] | Dichte [$\rho_P$] | Dicke [$d_P$] | Massenbelegung [$m_A$] |
|---|---|---|---|---|
| Probe 11 | 16,1 Gew.-% | 1,215 g/cm$^3$ | 6,45 mm | 0,126 g/cm$^2$ |
| Probe 12 | 30,7 Gew.-% | 1,441 g/cm$^3$ | 6,46 mm | 0,286 g/cm$^2$ |
| Probe 13 | 40,3 Gew.-% | 1,64 g/cm$^3$ | 6,55 mm | 0,433 g/cm$^2$ |
| Probe 14 | 65,4 Gew.% | 2,572 g/cm$^3$ | 2,05mm | 0,345 g/cm$^2$ |
| Probe 15 | 84,3 Gew.-% | 4,488 g/cm$^3$ | 1,46 mm | 0,552 g/cm$^2$ |

$$m_A = k_A \cdot \rho_P \cdot d_P$$

Massenbelegung = Massenanteil der Mischung nach Beispiel 4 im Prüfling x Dichte des Prüfl. x Dicke des Prüfl.

**Beispiel 6**

Prüfung der Röntgenschutzeigenschaften

Die Abschirmeigenschaften der Probe 11 bis Probe 15 wurden in der Geometrie des schmalen Strahlenbündels gemäß DIN 6845 mit Wolfram-Röntgenröhren definierter Strahlenqualitäten gemessen. Durch Gesamtfilterung mittels Cu-Filter wurden die Strahlenqualitäten des ISO-Spektrum H-300 erreicht. Bestimmt wurde der Schwächungsgrad und der Bleigleichwert der Proben.

Die Strahlenqualität ISO-H-300 wurde erreicht durch: Beschleunigungsspannung U=300 kV und Filter: 2,5 mm Cu.

| | | U=300 kV, 2,5 mm Cu | |
|---|---|---|---|
| Bezeichnung | Massenbelegung [$m_A$] | Schwächungsgrad | Bleigleichwert, mm Pb |
| Probe 11 | 0,126 g/cm$^2$ | 1,38 | 0,152 mm |

(fortgesetzt)

| Bezeichnung | Massenbelegung [$m_A$] | U=300 kV, 2,5 mm Cu | |
| --- | --- | --- | --- |
| | | Schwächungsgrad | Bleigleichwert, mm Pb |
| Probe 12 | 0,286 g/cm$^2$ | 1,76 | 0,285 mm |
| Probe 13 | 0,433 g/cm$^2$ | 2,15 | 0,407 mm |
| Probe 14 | 0,345 g/cm$^2$ | 1,81 | 0,299 mm |
| Probe 15 | 0,552 g/cm$^2$ | 2,3 | 0,449 mm |

Die für Kalibrier- und Vergleichmessungen verwendeten Bleimuster hatten einen Durchmesser von 50 mm. Sie wurden aus Bleifolie der Sorte S1 mit Dicken von 0,065 mm und 0,085 mm geschnitten. Der Untersuchungsbereich der Bleigleichwerte wurde von 0,1 bis 0,5 mm überdeckt. Die Dicke der zusammengefügten Bleimuster wurde durch Gesamtmasse, Musterfläche und Bleidichte von 11,3 g/cm$^3$ durch das Wägeverfahren bestimmt.

| Bezeichnung | Massenbelegung [$m_A$] | Schwächungsgrad | Bleigleichwert, mm Pb |
| --- | --- | --- | --- |
| Probe 16 (Blei-Vergleichsmuster) | 0,12 g/cm$^2$ | 1,24 | 0,10 mm |
| Probe 17 (Blei-Vergleichsmuster) | 0,2 g/cm$^2$ | 1,43 | 0,17 mm |
| Probe 18 (Blei-Vergleichsmuster) | 0,25 g/cm$^2$ | 1,57 | 0,22 mm |
| Probe 19 (Blei-Vergleichsmuster) | 0,36 g/cm$^2$ | 1,87 | 0,32 mm |

Bei gleichen Massenbelegungen ist der Schwächungsgrad im Bereich zwischen 0,1 und 0,5 mm Bleigleichwerten im schmalen Strahlenbündel der erfmdungsgemäßen Probe 11 bis Probe 15 höher als Blei. Die erfmdungsgemäßen Proben schirmen die Strahlung besser ab, so dass für gleiche Abschirmwirkung leichtere oder dünnere Bauteile hergestellt werden können.

Bei der für die Röntgendiagnostik relevanten Beschleunigungsspannung von 100 kV erweist sich diese nicht erfmdungsgemäße Mischung zwar auch besser als Blei, aber deutlich schlechter als die erfmdungsgemäßen Mischungen.

**Beispiel 7**

Aus Seltenen Erden und Wolfram-Pulver gemäß Beispiel 1 wurde eine erfindungsgemäße Mischung mit der folgenden Zusammensetzung hergestellt:

| Seltene Erden | Anteil in der Mischung |
| --- | --- |
| $La_2O_3$ | 7,0 % |
| $CeO_2$ | 14,7% |
| $Nd_2O_3$ | 3,8% |
| $Gd_2O_3$ | 44,4% |
| $Pr_6O_{11}$ | 1,4% |
| $Eu_2O_3$ | 0,3% |
| $Sm_2O_3$ | 0,6 % |
| $Y_2O_3$ | 0,05% |
| W . | 27,3% |

Vor der Benutzung wurden die Seltenen Erden und das Wolfram-Pulver 2 Stunden bei einer Temperatur von 120°C getrocknet, und durch Sieb 063 (Wolfram durch Sieb 016) gesichtet. Anschließend wurden die drei Komponenten in einem Taumelmischer über 2 Stunden gemischt.

Es wurden ein orange-braunes, rieselfähiges, verklumpungsfreies Pulver als erfmdungsgemäße Mischung mit einer Dichte von 8,55 g/cm³ erhalten. Die Dichte wurde durch ein pyknometrisches Verfahren mit Isopropanol, Ethanol und Aceton als Messflüssigkeit gemessen.

**Beispiel 8**

Zu 27,5 Gew.-% synthetischen Elastomer (EVM Ethylenvinylacetatcopolymer mit ca. 40 Gew.-% Ethylen und ca. 60 Gew.-% Vinylacetat) (Levapren® 600 HV) werden 66,1 Gew. % der vorher hergestellten erfindungsgemäßen Mischung (nach Beispiel 7) in 2-3 Portionen zugegeben und auf einem Walzwerk oder einem Innenmischer homogenisiert. Danach erfolgt die Zugabe von 2,8 Gew.-% Regal® SRF Russ der Fa. Cabot, 0,8 Gew.-% Rhenogran® P-50 Hydrolyseschutzmittel der Fa. Rhein-Chemie, Polycarbodiimid, 0,4 Gew.-% Rhenofit® DDA styrenated diphenyl amine der Fa. Rhein-Chemie, 0,3 Gew.-% Stearinsäure, 1,0 Gew.-% Rhenofit® TAC Triallylcyanurat der Fa. Rheinchemie und 1,1 Gew.-% Polydispersion® T α,α'-Bis-(tert.-butylperoxy)-diisopropylbenzol, Peroxid-Vernetzer der Fa. Rhein-Chemie. Nach erneuter Homogenisierung kann die Mischung zu einem Fell auf einer Walze ausgezogen oder kalandriert werden. Die Herstellung der strahlenabsorbierenden Artikel erfolgt nach der Formgebung durch Pressen oder Kalandrierung durch Vulkanisation bei Temperaturen zwischen 150°C und 170°C und ist in 30 Minuten abgeschlossen.

Nach dem oben beschriebenen Verfahren wurden folgende Proben aus der erfindungsgemäßen Mischung nach Beispiel 7 und dem Kautschuk hergestellt:

| Bezeichnung | Additiv-Gehalt [$k_A$] | Dichte [$\rho_P$] |
|---|---|---|
| Probe 20 | 66,1 Gew.-% | 2,554 g/cm³ |

| Bezeichnung | Dicke [$dp$] | Massenbelegung [$m_A$] |
|---|---|---|
| Probe 20 | 2 mm | 0,34g/cm² |
| Probe 21 | 4 mm | 0,68g/cm² |
| Probe 22 | 6 mm | 1,01g/cm² |
| Probe 23 | 8 mm | 1,35g/cm² |
| Probe 24 | 10 mm | 1,69g/cm² |

$$m_A = k_A \cdot \rho_P \cdot d_P$$

$$\text{Massenbelegung} = \text{Massenanteil der Mischung im Prüfling x Dichte des Prüfl. x Dicke des Prüfl.}$$

**Beispiel 9**

Prüfung der Strahlenschutzeigenschaften

Aus den 20 cm x 20 cm x 2 mm Gummiplatten wurden durch Aufeinanderkleben Stufenkeile hergestellt. Es entstanden Flächen mit 2, 4, 6, 8 und 10 mm Dicke. Die Stufenkeile wurden mit Röntgenstrahlung der Strahlqualität U=100 kV, eff. Filterung 2,5 mm Al, Wolfram-Gleichstrom röntgenröhre für 960 s aufbelichtet und die Röntgenfilme densitometrisch ausgewertet. Im folgenden werden die Ergebnisse dieser Aufbelichtung von Stufenkeilen aus den strahlungsabsorbierenden Materialien dieser Erfmdung gezeigt und zwar im Vergleich mit Stufenkeilen aus Blei. Gleiche Schwärzung bedeutet gleiche Dämpfung der Strahlung. Geringere Schwärzung bedeutet bessere Abschirmwirkung.

| Bezeichnung | Dicke [$d_P$] | Massenbelegung [$m_A$] | Schwärzung (relative Einheiten) |
|---|---|---|---|
| Probe 20 | 2 mm | 0,34g/cm² | 6,48 |
| Probe 21 | 4 mm | 0,68g/cm² | 1,98 |
| Probe 22 | 6 mm | 1,01g/cm² | 0,47 |

(fortgesetzt)

| Bezeichnung | Dicke [$d_P$] | Massenbelegung [$m_A$] | Schwärzung (relative Einheiten) |
|---|---|---|---|
| Probe 23 | 8 mm | 1,35g/cm$^2$ | 0,24 |
| Probe 24 | 10 mm | 1,69g/cm$^2$ | 0,21 |

Die für Kalibrier- und Vergleichmessungen verwendeten Bleimuster waren Bleifolien der Sorte S1 mit Dicken von 0,1 mm. Wie bei den Proben wurden Stufenkeile aus den Bleifolien hergestellt. Der Untersuchungsbereich überdeckt den Bleigleichwerte von 0,1 bis 1,0 mm.

| Bezeichnung | Dicke [$d_P$] | Massenbelegung [$m_A$] | Schwärzung (relative Einheiten) |
|---|---|---|---|
| Probe 25 (Blei-Vergleichsmuster) | 0,1 mm | 0,11 g/cm$^2$ | 6,50 |
| Probe 26 (Blei-Vergleichsmuster) | 0,2 mm | 0,23 g/cm$^2$ | 6,50 |
| Probe 27 (Blei-Vergleichsmuster) | 0,3 mm | 0,34 g/cm$^2$ | 6,50 |
| Probe 28 (Blei-Vergleichsmuster) | 0,4 mm | 0,45 g/cm$^2$ | 6,50 |
| Probe 29 (Blei-Vergleichsmuster) | 0,5 mm | 0,56 g/cm$^2$ | 5,18 |
| Probe 30 (Blei-Vergleichsmuster) | 0,6 mm | 0,68 g/cm$^2$ | 3,75 |
| Probe 31 (Blei-Vergleichsmuster) | 0,7 mm | 0,80 g/cm$^2$ | 2,82 |
| Probe 32 (Blei-V ergleichsmuster) | 0,8 mm | 0,91 g/cm$^2$ | 2,11 |
| Probe 33 (Blei-Vergleichsmuster) | 0,9 mm | 1,03 g/cm$^2$ | 1,61 |
| Probe 34 (Blei-Vergleichsmuster) | 1,0 mm | 1,14 g/cm$^2$ | 1,29 |

Bei gleicher Massenbelegung von 0,5 g/cm$^2$ beträgt der Schwärzungsgrad der Probe 21 1,98, während das Vergleichsmuster (Probe 29 (Blei-Vergleichsmuster) deutlich mehr Strahlung durchlässt und einen Schwärzungsgrad von 5,1 hat. Geringere Schwärzung bedeutet bessere Abschirmwirkung. Das bedeutet, dass für die gleiche Strahlenschutzwirkung wie Blei eine geringere Massenbelegung erforderlich ist, was durch geringere Dicke oder niedrigeren Füllgrad der Probe erreicht werden kann. Dies führt zu einer Gewichtseinsparung und damit zu einem erhöhten Tragekomfort für daraus hergestellte Teile, wie z.B. Röntgenschürzen.

**Beispiel 10**

Mechanische Daten

Die in Beispiel 8 hergestellten Gummiplatten wurden auf ihre mechanische Festigkeit überprüft. Die folgenden mechanischen Prüfdaten wurden ermittelt:

Zerreißfestigkeit (DIN 53504 / ISO 37-1977):  > 10 MPa
Bruchdehnung (DIN 53504 / ISO 37-1977):  > 250 %
Modul 200 % (DIN 53504 /ISO 37-1977):  7 MPa
Härte (DIN 53505 /ISO 868-1985)  63 Shore A

**Beispiel 11**

Aus Seltenen Erden und Wolfram-Pulver wurde eine erfindungsgemäße Mischung mit der folgenden Zusammensetzung hergestellt:

| Seltene Erden | Anteil in der Mischung |
|---|---|
| $La_2O_3$ | 6,88 % |
| $CeO_2$ | 13,37 % |

(fortgesetzt)

| Seltene Erden | Anteil in der Mischung |
|---|---|
| $Nd_2O_3$ | 3,66 % |
| $Gd_2O_3$ | 47,34% |
| $Pr_6O_{11}$ | 1,24% |
| $Eu_2O_3$ | 0,07% |
| $Sm_2O_3$ | 0,40 % |
| $Y_2O_3$ | 0,04% |
| W | 27,00% |

Vor der Benutzung wurden die Seltenen Erden und das Wolfram-Pulver 2 Stunden bei einer Temperatur von 120°C getrocknet, und durch Sieb 063 (Wolfram durch Sieb 016) gesichtet Anschließend wurden die drei Komponenten in einem Taumelmischer über 2 Stunden gemischt

**Beispiel 12**

Zu 27,5 Gew.-% synthetischen Elastomer (EVM Ethylenvinylacetatcopolymer mit ca. 40 Gew.-% Ethylen und ca. 60 Gew.-% Vinylacetat) (Levapren® 600 HV) werden 66,1 Gew. -% der vorher nach Beispiel 11 hergestellten erfindungsgemäßen Mischung in 2-3 Portionen zugegeben und auf einem Walzwerk oder einem Innenmischer homogenisiert. Danach erfolgt die Zugabe von 2,8 Gew.-% Regal® SRF Russ der Fa. Cabot, 0,8 Gew.-% Rhenogran® P-50 Hydrolyseschutzmittel der Fa. Rhein-Chemie, Polycarbodiimid, 0,4 Gew.-% Rhenofit® DDA styrenated diphenyl amine der Fa. Rhein-Chemie, 0,3 Gew.-% Stearinsäure, 1,0 Gew.-% Rhenofit® TAC Triallylcyanurat der Fa. Rheinchemie und 1,1 Gew.% Polydispersion® T $\alpha,\alpha$'-Bis-(tert.-butylperoxy)-diisopropylbenzol, Peroxid-Vernetzer der Fa. Rhein-Chemie. Nach erneuter Homogenisierung kann die Mischung zu einem Fell auf einer Walze ausgezogen oder kalandriert werden. Die Herstellung der strahlenabsorbierenden Artikel erfolgt nach der Formgebung durch Pressen oder Kalandrierung durch Vulkanisation bei Temperaturen zwischen 150°C und 170°C und ist in 30 Minuten abgeschlossen.
Nach dem oben beschriebenen Verfahren wurden folgende Proben aus der erfindungsgemäßen Mischung nach Beispiel 11 und dem Kautschuk hergestellt:

| Bezeichnung | Additiv-Gehalt [$k_A$] | Dichte [$\rho_P$] |
|---|---|---|
| Probe 35 | 66,1 Gew.-% | 2,553 g/cm$^3$ |

| Bezeichnung | Dicke [$d_P$] | Massenbelegung [$m_A$] |
|---|---|---|
| Probe 35 | 2 mm | 0,34g/cm$^2$ |
| Probe 36 | 4 mm | 0,68g/cm$^2$ |
| Probe 37 | 6 mm | 1,01g/cm$^2$ |
| Probe 38 | 8 mm | 1,35g/cm$^2$ |
| Probe 39 | 10 mm | 1,69g/cm$^2$ |

$$m_A = k_A \cdot \rho_P \cdot d_P$$

Massenbelegung = Massenanteil der Mischung im Prüfling x Dichte des Prüfl. x Dicke des Prüfl.

**Beispiel 13**

Prüfung der Strahlenschutzeigenschaften bei U=75 kV, 100 kV und 150 kV

Aus den 20 cm x 20 cm x 2 mm Gummiplatten wurden durch Aufeinanderkleben Stufenkeile hergestellt. Es entstanden Flächen mit 2, 4, 6, 8 und 10 mm Dicke. Die Stufenkeile wurden mit Röntgenstrahlung der Strahlqualität U=75 kV, 100 kV oder 150 kV, eff. Filterung 2,5 mm Al, Wolfram-Gleichstromröntgenröhre für 480 s, 960 s oder 240 s aufbelichtet und die Röntgenfilme densitometrisch ausgewertet.. Im Folgenden werden die Ergebnisse dieser Aufbelichtung von Stufenkeilen aus den strahlungsabsorbierenden Materialien dieser Erfmdung gezeigt und zwar im Vergleich mit Stufenkeilen aus Blei. Gleiche Schwärzung bedeutet gleiche Dämpfung der Strahlung.

| Bezeichnung | Dicke [$d_P$] | Massenbelegung [$m_A$] | Schwärzung (relative Einheiten) | | |
|---|---|---|---|---|---|
| | | | 75 kV, 480 Sek. | 100 kV, 960 Sek | 150 kV, 240 Sek. |
| Probe 35 | 2 mm | 0,34g/cm$^2$ | 2,02 | 6,45 | 6,50 |
| Probe 36 | 4 mm | 0,68g/cm$^2$ | 0,39 | 1,83 | 2,50 |
| Probe 37 | 6 mm | 1,01g/cm$^2$ | 0,20 | 0,42 | 1,04 |
| Probe 38 | 8 mm | 1,35g/cm$^2$ | 0,18 | 0,25 | 0,58 |
| Probe 39 | 10 mm | 1,69g/cm$^2$ | 0,18 | 0,22 | 0,38 |

Die für Kalibrier- und Vergleichmessungen verwendeten Bleimuster waren Bleifolien der Sorte S1 mit Dicken von 0,1 mm. Wie bei den Proben wurden Stufenkeile aus den Bleifolien hergestellt. Der Untersuchungsbereich überdeckt den Bleigleichwerte von 0,1 bis 1,0 mm.

| Bezeichnung | Dicke [$d_P$] | Massenbelegung [$m_A$] | Schwärzung (relative Einheiten) | | |
|---|---|---|---|---|---|
| | | | 75 kV, 480 Sek. | 100 kV, 960 Sek. | 150 kV, 240 Sek. |
| Probe 40 (Blei-Vergleichsmuster) | 0,1 mm | 0,11 g/cm$^2$ | 6,50 | 6,50 | 6,50 |
| Probe 41 (Blei-Vergleichsmuster) | 0,2 mm | 0,23 g/cm$^2$ | 3,55 | 6,50 | 6,50 |
| Probe 42 (Blei-Vergleichsmuster) | 0,3 mm | 0,34 g/cm$^2$ | 2,03 | 6,50 | 6,50 |
| Probe 43 (Blei-Vergleichsmuster) | 0,4 mm | 0,45 g/cm$^2$ | 1,22 | 6,50 | 6,15 |
| Probe 44 (Blei-Vergleichsmuster) | 0,5 mm | 0,56 g/cm$^2$ | 0,80 | 5,18 | 4,30 |
| Probe 45 (Blei-Vergleichsmuster) | 0,6 mm | 0,68 g/cm$^2$ | 0,55 | 3,75 | 3,25 |
| Probe 46 (Blei-Vergleichsmuster) | 0,7mm | 0,80 g/cm$^2$ | 0,42 | 2,82 | 2,44 |
| Probe 47 (Blei-Vergleichsmuster) | 0,8mm | 0,91 g/cm$^2$ | 0,33 | 2,11 | 1,83 |
| Probe 48 (Blei-Vergleichsmuster) | 0,9 mm | 1,03 g/cm$^2$ | 0,30 | 1,61 | 1,41 |
| Probe 49 (Blei-Vergleichsmuster) | 1,0 mm | 1,14 g/cm$^2$ | 0,27 | 1,29 | 1,19 |

Bei gleicher Massenbelegung von z.B. 0,68 g/cm$^2$ beträgt der Schwärzungsgrad der Probe 36 bei 75 kV 0,39 bei 100 kV 1,83 und bei 150 kV 2,50, während das entsprechende Vergleichsmuster (Probe 45 (Blei-Vergleichsmuster)) deutlich mehr Strahlung durchlässt und einen Schwärzungsgrad von 0,55, 3,75 bzw. 3,25 hat. Geringere Schwärzung bedeutet bessere Abschirmwirkung. Im untersuchten Beschleunigungsspannungsbereich hat die erfindungsgemäße Kautschukmischung mit der erfmdungsgemäßen Mischung eine bessere Abschirmwirkung als Blei. Das bedeutet für die Praxis: Um die gleiche Strahlenschutzwirkung wie Blei zu erzielen, ist eine geringere Massenbelegung erforderlich, was durch geringere Dicke oder niedrigeren Füllgrad der Probe erreicht werden kann. Dies führt zu einer Gewichtseinsparung und damit zu einem erhöhten Tragekomfort für daraus hergestellte Erzeugnisse, wie z.B. Röntgenschürzen.

**Beispiel 14**

Probe 50

Zu 54,6 Gew.-% synthetischen Elastomers (EVM Ethylenvinylacetatcopolymer mit ca. 40 Gew.-% Ethylen und ca. 60 Gew.-% Vinylacetat (Levapren® 600 HV) werden 32,8 Gew.-% der erfindungsgemäßen Mischung nach Beispiel 11 in 2-3 Portionen zugegeben und auf einem Walzwerk oder einem Innenmischer homogenisiert. Danach erfolgt die Zugabe von 5,5 Gew.-% Regal® SRF Russ der Fa. Cabot, 1,6 Gew.-% Rhenogran® P-50 Hydrolyseschutzmittel der Fa. Rhein-Chemie, 0,8 Gew.-% Rhenofit® DDA styrenated diphenyl amine der Fa. Rhein-Chemie, 0,5 Gew.-% Stearinsäure, 1,9 Gew.-% Rhenofit® TAC Triallylcyanurat der Fa. Rhein-Chemie und 2,2 Gew.-% Polydispersion® T $\alpha,\alpha'$-Bis-(tert.-Butylperoxy)-diisopropylbenzol, Peroxid-Vernetzer der Fa. Rhein-Chemie.

Probe 51

Zu 41,2 Gew.-% synthetischen Elastomers (EVM Ethylenvinylacetatcopolymer mit ca. 40 Gew.-% Ethylen und ca. 60 Gew.-% Vinylacetat) (Levapren® 600 HV) werden 49,4 Gew.-% der vorher abgemischten erfindungsgemäßen Mischung nach Beispiel 11 in 2-3 Portionen zugegeben und auf einem Walzwerk oder einem Innenmischer homogenisiert. Danach erfolgt die Zugabe von 4,1 Gew.-% Regal® SRF Russ der Fa. Cabot, 1,2 Gew.% Rhenogran P-50 Hydrolyseschutzmittel der Fa. Rhein-Chemie, Polycarbodiimid, 0,6 Gew.% Rhenofit® DDA styrenated diphenyl amine der Fa. Rhein-Chemie, 0,4 Gew.-% Stearinsäure, 1,4 Gew.% Rhenofit® TAC Triallylcyanurat der Fa. Rheinchemie und 1,5 Gew.-% Polydispersion® T $\alpha,\alpha'$-Bis-(tert.-butylperoxy)-diisopropylbenzol, Peroxid-Vernetzer der Fa. Rhein-Chemie.

Probe 52

Zu 27,5 Gew.-% synthetischen Elastomers (EVM Ethylenvinylacetatcopolymer mit ca. 40 Gew.-%-Ethylen und ca. 60 Gew.-% Vinylacetat) (Levapren® 600 HV) werden 66,1 Gew.-% der erfindungsgemäßen Mischung nach Beispiel 11 in 2-3 Portionen zugegeben und auf einem Walzwerk oder einem Innenmischer homogenisiert. Danach erfolgt die Zugabe von 2,8 Gew.-% Regal® SRF Russ der Fa. Cabot, 0,8 Gew.-% Rhenogran® P-50 Hydrolyseschutzmittel der Fa. Rhein-Chemie, Polycarbodiimid, 0,4 Gew.-% Rhenofit® DDA styrenated diphenyl amine der Fa. Rhein-Chemie, 0,3 Gew.-% Stearinsäure, 1,0 Gew.% Rhenofit® TAC Triallylcyanurat der Fa. Rheinchemie und 1,1 Gew.-% Polydispersion® T $\alpha,\alpha$-Bis-tert.-butylperoxy)-diisopropylbenzol, Peroxid-Vernetzer der Fa. Rhein-Chemie.

Verarbeitung der Probe 50 bis Probe 52

Nach erneuter Homogenisierung kann die Mischung zu einem Fell auf einer Walze ausgezogen oder kalandriert werden. Die Herstellung der strahlenabsorbierenden Artikel erfolgt nach der Formgebung durch Pressen oder Kalandrierung durch Vulkanisation bei Temperaturen zwischen 150°C und 170°C und ist in 30 Minuten abgeschlossen.

**Beispiel 15**

Die mit der Mischung hergestellten Gummiplatten zeigten folgende mechanischen Eigenschaften:

|  | Methode | Probe 50 | Probe 51 | Probe 52 |
|---|---|---|---|---|
| Zerreißfestigkeit, MPa: | DIN 53504 | 10 | 10 | 10 |
| Bruchdehnung, % | DIN 53504 | 250 | 250 | 250 |
| Modul 200 %, MPa: | DIN 53504 | 6,5 | 6,5 | 6,5 |
| Härte, Shore A | DIN 53505 | 54 | 59 | 68 |

Die mit der erfindungsgemäßen Mischung hergestellten Gummiplatten zeigten bei den untersuchten Füllgraden sehr gute mechanische Festigkeiten. Das lässt den Schluss zu, dass die Vernetzungsreaktion von der erfmdungsgemäßen Mischung weitgehend unbeeinflusst abläuft. Die Probe 52 mit dem höchsten Füllgrad zeigt nicht den zu erwartenden Abfall der Reißfestigkeit, da die erfindungsgemäße Mischung wahrscheinlich über Wasserstoffbrückenbindungen sehr an die Kautschuk-Matrix ankoppelt.

**Beispiel 16**

Zu 15,9 Gew.-% synthetischen Elastomers (Polychloropren (Baypren® 210)) werden 79,6 Gew.-% der erfindungsgemäßen Mischung nach Beispiel 7 in 2-3 Portionen zugegeben und auf einem Walzwerk oder einem Innenmischer homogenisiert. Danach erfolgt die Zugabe von 3,2 Gew.% naphthenischem Mineralöl (Circosol 4240), 0,2 Gew.-% Stabilisatoren (Rhenofit® DDA; Styrenated diphenyl amine), 0,3 Gew.-% eines Säurefängers (Maglite DE; Magnesiumoxid) sowie 0,7 Gew.% Vernetzungschemikalien (Zinkweiss Rotsiegel; (Zinkoxid) Rhenogran® MTT (3-Methylthiäzolidine-thione-2), Vulkacit® ZBEC/C (Zink-dibenzyl-dithiocarbamate). Nach erneuter Homogenisierung kann die Mischung zu einem Fell auf einer Walze ausgezogen oder kalandriert werden. Die Herstellung der strahlenabsorbierenden Artikel erfolgt durch Vulkanisation bei Temperaturen zwischen 150 und 170°C und ist in 30 Minuten abgeschlossen. Folgende Eigenschaften werden erreicht:

Nach dem oben beschriebenen Verfahren wurden folgende Proben aus der erfindungsgemäßen Mischung nach Beispiel 7 und dem Kautschuk hergestellt:

| Bezeichnung | Additiv-Gehalt [$k_A$] | Dichte [$\rho_P$] |
|---|---|---|
| Probe 53 | 79,6 Gew.% | 3,734 g/cm$^3$ |

| Bezeichnung | Dicke [$d_P$] | Massenbelegung [$m_A$] |
|---|---|---|
| Probe 53 | 2 mm | 0,59g/cm$^2$ |
| Probe 54 | 4 mm | 1,19g/cm$^2$ |
| Probe 55 | 6 mm | 1,78g/cm$^2$ |
| Probe 56 | 8 mm | 2,38g/cm$^2$ |
| Probe 57 | 10 mm | 2,97g/cm$^2$ |

$$m_A = k_A \cdot \rho_P \cdot d_P$$

Massenbelegung = Massenanteil der Mischung im Prüfling x Dichte des Prüfl. x Dicke des Prüfl.

**Beispiel 17**

Prüfung der Strahlenschutzeigenschaften

Aus den 20 cm x 20 cm x 2 mm Gummiplatten wurden durch Aufeinanderkleben Stufenkeile hergestellt Es entstanden Flächen mit 2, 4, 6, 8 und 10 mm Dicke. Die Stufenkeile wurden mit Röntgenstrahlung der Strahlqualität U=100 kV, eff. Filterung 2,5 mm Al, Wolfram-Gleichstromröntgenröhre für 960 s aufbelichtet und die Röntgenfilme densitometrisch ausgewertet. Im folgenden werden die Ergebnisse dieser Aufbelichtung von Stufenkeilen aus den strahlungsabsorbierenden Materialien dieser Erfindung gezeigt und zwar im Vergleich mit Stufenkeilen aus Blei. Gleiche Schwärzung bedeutet gleiche Dämpfung der Strahlung. Geringere Schwärzung bedeutet bessere Abschirmwirkung.

| Bezeichnung | Dicke [$d_P$] | Massenbelegung [$m_A$] | Schwärzung (relative Einheiten) |
|---|---|---|---|
| Probe 53 | 2 mm | 0,59g/cm$^2$ | 2,60 |
| Probe 54 | 4 mm | 1,19g/cm$^2$ | 0,32 |
| Probe 55 | 6 mm | 1,78g/cm$^2$ | 0,24 |

(fortgesetzt)

| Bezeichnung | Dicke [$d_P$] | Massenbelegung [$m_A$] | Schwärzung (relative Einheiten) |
|---|---|---|---|
| Probe 56 | 8 mm | 2,38g/cm$^2$ | 0,24 |
| Probe 57 | 10 mm | 2,79g/cm$^2$ | 0,24 |

Die für Kalibrier- und Vergleichmessungen verwendeten Bleimuster waren Bleifolien der Sorte S1 mit Dicken von 0,1 mm. Wie bei den Proben wurden Stufenkeile aus den Bleifolien hergestellt. Der Untersuchungsbereich überdeckt den Bleigleichwerte von 0,1 bis 1,0 mm.

| Bezeichnung | Dicke [$d_P$] | Massenbelegung [$m_A$] | Schwärzung (relative Einheiten) |
|---|---|---|---|
| Probe 58 (Blei-Vergleichsmuster) | 0,1 mm | 0,11 g/cm$^2$ | 6,15 |
| Probe 59 (Blei-Vergleichsmuster) | 0,2 mm | 0,23 g/cm$^2$ | 6,15 |
| Probe 60 (Blei-Vergleichsmuster) | 0,3 mm | 0,34 g/cm$^2$ | 6,15 |
| Probe 61 (Blei-Vergleichsmuster) | 0,4 mm | 0,45 g/cm$^2$ | 6,15 |
| Probe 62 (Blei-Vergleichsmuster) | 0,5 mm | 0,56 g/cm$^2$ | 4,49 |
| Probe 63 (Blei-Vergleichsmuster) | 0,6 mm | 0,68 g/cm$^2$ | 3,03 |
| Probe 64 (Blei-Vergleichsmuster) | 0,7 mm | 0,80 g/cm$^2$ | 2,13 |
| Probe 65 (Blei-Vergleichsmuster) | 0,8mm | 0,91 g/cm$^2$ | 1,49 |
| Probe 66 (Blei-Vergleichsmuster) | 0,9 mm | 1,03 g/cm$^2$ | 1,10 |
| Probe 67 (Blei-Vergleichsmuster) | 1,0 mm | 1,14 g/cm$^2$ | 0,93 |

Bei gleicher Massenbelegung von 0,59 g/cm$^2$ beträgt der Schwärzungsgrad der Probe 53 2,60, während das Vergleichsmuster (Probe 62 (Blei-Vergleichsmuster)) deutlich mehr Strahlung durchlässt und einen Schwärzungsgrad von 4,49 hat. Geringere Schwärzung bedeutet bessere Abschirmwirkung. Das bedeutet für die Praxis: Um die gleiche Strahlenschutzwirkung wie Blei zu erzielen, ist eine geringere Massenbelegung erforderlich, was durch geringere Dicke oder niedrigeren Füllgrad der Probe erreicht werden kann. Dies führt zu einer Gewichtseinsparung und damit zu einem erhöhten Tragekomfort für daraus hergestellte Teile, wie z.B. Röntgenschürzen.

**Beispiel 18**

Die mit der erfindungsgemäßen Mischung hergestellten erfindungsgemäßen Gummiplatten nach Beispiel 17 zeigten folgende mechanischen Eigenschaften:

| | Methode | Probe 53 |
|---|---|---|
| Zerreißfestigkeit, MPa: | DIN 53504 | 6,3 |
| Bruchdehnung, % | DIN 53504 | 625 |
| Modul 100 %, MPa: | DIN 53504 | 1,8 |
| Modul 200 %, MPa: | DIN 53504 | 2,6 |
| Modul 300 %, MPa: | DIN 53504 | 3,2 |
| Härte, Shore A | DIN 53505 | 61 |

**Beispiel 19**

Zu 15,9 Gew.% synthetischem Elastomer (Polychloropren (Baypren® **210**) werden 59,8 Gew.-% der erfindungsgemäßen Mischung nach Beispiel 7 sowie 19,8 Gew.-% BaSO$_4$ in 2-3 Portionen zugegeben und auf einem Walzwerk oder einem Innenmischer homogenisiert. Danach erfolgt die Zugabe von 3,2 Gew.-% naphthenischem Mineralöl (Circosol® 4240; Gemisch alicyclischer Verbindungen, Fraktion aus dem Erdöl), 0,2 Gew.-% Stabilisatoren (Rhenofit® DDA; Styrenated diphenyl amine), 0,3 Gew.-% eines Säurefängers (Maglite DE (Magnesiumoxid)) sowie 0,8 Gew.-% Vernetzungschemikalien (0,3 Gew.-% Zinkweiss Rotsiegel; (Zinkoxid), 0,3 Gew.-% Rhenogran® MTT (3-Methyl-thiazolidine-thione-2), 0,2 Gew.-% Vulkacit® ZBEC/C (Zink-dibenzyl-dithiocarbamate). Nach erneuter Homogenisierung kann die Mischung zu einem Fell auf einer Walze ausgezogen oder kalandriert werden. Die Herstellung der strahlenabsorbierenden Artikel erfolgt durch Vulkanisation bei Temperaturen zwischen 150 und 170°C und ist in 30 Minuten abgeschlossen.

| Bezeichnung | Additiv-Gehalt [$k_A$] | Dichte [$\rho_P$] |
|---|---|---|
| Probe 68 | 80 Gew.-% | 3,50 g/cm$^3$ |

| Bezeichnung | Dicke [$d_P$] | Massenbelegung [$m_A$] |
|---|---|---|
| Probe 68 | 2 mm | 0,56g/cm$^2$ |
| Probe 69 | 4 mm | 1,12g/cm$^2$ |
| Probe 70 | 6 mm | 1,68g/cm$^2$ |
| Probe 71 | 8 mm | 2,24g/cm$^2$ |
| Probe 72 | 10 mm | 2,80g/cm$^2$ |

$$m_A = k_A \cdot \rho_P \cdot d_P$$

**Massenbelegung = Massenanteil der Mischung im Prüfling x Dichte des Prüfl. x Dicke des Prüfl.**

### Beispiel 20

Prüfung der Strahlenschutzeigenschaften

Aus den 20 cm x 20 cm x 2 mm Gummiplatten wurden durch Aufeinanderkleben Stufenkeile hergestellt. Es entstanden Flächen mit 2, 4, 6, 8 und 10 mm Dicke. Die Stufenkeile wurden mit Röntgenstrahlung der Strahlqualität U=100 kV, eff. Filterung 2,5 mm Al, Wolfram-Gleichstromröntgenröhre für 480 s aufbelichtet und die Röntgenfilme densitometrisch ausgewertet. Im folgenden werden die Ergebnisse dieser Aufbelichtung von Stufenkeilen aus den strahlungsabsorbierenden Materialien dieser Erfindung gezeigt und zwar im Vergleich mit Stufenkeilen aus Blei. Gleiche Schwärzung bedeutet gleiche Dämpfung der Strahlung. Geringere Schwärzung bedeutet bessere Abschirmwirkung.

| Bezeichnung | Dicke [$d_P$] | Massenbelegung [$m_A$] | Schwärzung (relative Einheiten) |
|---|---|---|---|
| Probe 68 | 2 mm | 0,56g/cm$^2$ | 2,22 |
| Probe 69 | 4 mm | 1,12g/cm$^2$ | 0,43 |
| Probe 70 | 6 mm | 1,68g/cm$^2$ | 0,32 |
| Probe 71 | 8 mm | 2,24g/cm$^2$ | 0,32 |
| Probe 72 | 10 mm | 2,80g/cm$^2$ | 0,32 |

Die fiir Kalibrier- und Vergleichmessungen verwendeten Bleimuster waren Bleifolien der Sorte S1 mit Dicken von 0,1 mm. Wie bei den Proben wurden Stufenkeile aus den Bleifolien hergestellt Der Untersuchungsbereich überdeckt den Bleigleichwerte von 0,1 bis 1,0 mm.

| Bezeichnung | Dicke [$d_P$] | Massenbelegung [$m_A$] | Schwärzung (relative Einheiten) |
|---|---|---|---|
| Probe 73 (Blei-Vergleichsmuster) | 0,1 mm | 0,11 g/cm$^2$ | 6,50 |
| Probe 74 (Blei-Vergleichsmuster) | 0,2 mm | 0,23 g/cm$^2$ | 6,50 |
| Probe 75 (Blei-Vergleichsmuster) | 0,3 mm | 0,34 g/cm$^2$ | 6,50 |

(fortgesetzt)

| Bezeichnung | Dicke [$d_P$] | Massenbelegung [$m_A$] | Schwärzung (relative Einheiten) |
|---|---|---|---|
| Probe 76 (Blei-Vergleichsmuster) | 0,4 mm | 0,45 g/cm$^2$ | 4,67 |
| Probe 77 (Blei-Vergleichsmuster) | 0,5 mm | 0,56 g/cm$^2$ | 3,38 |
| Probe 78 (Blei-Vergleichsmuster) | 0,6 mm | 0,68 g/cm$^2$ | 2,50 |
| Probe 79 (Blei-Vergleichsmuster) | 0,7 mm | 0,80 g/cm$^2$ | 1,88 |

| Bezeichnung | Dicke [$d_P$] | Massenbelegung [$m_A$] | Schwärzung (relative Einheiten) |
|---|---|---|---|
| Probe 80 (Blei-Vergleichsmuster) | 0,8 mm | 0,91 g/cm$^2$ | 1,43 |
| Probe 81 (Blei-Vergleichsmuster) | 0,9 mm | 1,03 g/cm$^2$ | 1,15 |
| Probe 82 (Blei-Vergleichsmuster) | 1,0 mm | 1,14 g/cm$^2$ | 0,97 |

Bei vergleichbarer Massenbelegung von 1,12 g/cm$^2$ bzw. 1,04 g/cm$^2$ beträgt der Schwärzungsgrad der Probe 69 0,43, während das Vergleichsmuster (Probe 81 (Blei-Vergleichsmuster)) deutlich mehr Strahlung durchlässt und einen Schwärzungsgrad von 1,15 hat. Geringere Schwärzung bedeutet bessere Abschirmwirkung. Das bedeutet für die Praxis: Um die gleiche Strahlenschutzwirkung wie Blei zu erzielen, ist eine geringere Massenbelegung erforderlich, was durch geringere Dicke oder niedrigeren Füllgrad der Probe erreicht werden kann. Dies führt zu einer Gewichtseinsparung und damit zu einem erhöhten Tragekomfort für daraus hergestellte Teile, wie z.B. Röntgenschürzen.

Selbst nach Ersetzen der Hälfte der erfmdungsgemäßen Mischung durch weniger gut abschirmendes Bariumsulfat bleibt die Abschirmwirkung noch so weit erhalten, dass auch diese erfindungsgemäße Mischung besser ist als Blei.

## Beispiel 21

Die mit der erfindungsgemäßen Mischung hergestellten Gummiplatten aus Beispiel 20 zeigen folgende mechanischen Eigenschaften

|  | Methode | Probe 68 |
|---|---|---|
| Zerreißfestigkeit, MPa: | DIN 53504 | 6,2 |
| Bruchdehnung, % | DIN 53504 | 674 |
| Modul 100 %, MPa: | DIN 53504 | 2,9 |
| Modul 200 %, MPa: | DIN-53504 | 3,6 |
| Modul 300 %, MPa: | DIN 53504 | 3,8 |
| Härte, Shore A | DIN 53505 | 66 |

## Beispiel 22

a) Verwendete Rohstoffe und ihre Zusammensetzung

Aus den folgenden Komponenten wurde eine erfindungsgemäße Mischung als Strahlenschutz hergestellt:

| Bezeichnung | Anteil in der Mischung |
|---|---|
| Gadoliniumoxid | 45 Gew.-% |
| Wolfram-Pulver | 55 Gew.-% |

b) Herstellung der erfindungsgemäßen Mischung

Vor der Benutzung wurden das Gadolinium-Konzentrat und das Wolfram-Pulver 2 Stunden bei einer Temperatur von 120°C getrocknet, und durch Sieb 063 (Wolfram durch Sieb 016) gesichtet. Anschließend wurden die drei Komponenten in einem Taumelmischer über 1,5 Stunden gemischt.

Es wurden ein weißes, rieselfähiges, verklumpungsfreies Pulver als erfindungsgemäße Mischung erhalten.

### Beispiel 23

Zu 27,5 Gew.% synthetischen Elastomer (EVM Ethylenvinylacetatcopolymer ca. 40 Gew.% Ethylen und ca. 60 Gew.-% Vinylacetat (Levapren® 600 HV) werden 66,1 Gew. -% des vorher hergestellten erfindungsgemäßen Mischung nach Beispiel 22 in 2-3 Portionen zugegeben und auf einem Walzwerk oder einem Innenmischer homogenisiert. Danach erfolgt die Zugabe von 2,8 Gew.% Regal® SRF Russ der Fa. Rein-Chemie, 0,8 Gew.% Rhenogran® P-50 Hydrolyseschutzmittel der Fa. Rhein-Chemie, Polycarbodiimid, 0,4 Gew.-% Rhenofit® DDA styrenated diphenyl amine, Stabilisator der Firma Rhein-Chemie, 0,3 Gew.-% Stearinsäure, 1,0 Gew.-% Rhenofit® TAC Triallylcyanurat der Fa. Rhein-Chemie und 1,1 Gew.-% Polydispersion® T α, α'-Bis-(tert.-butylperoxy)-diisopropylbenzol, Peroxydvernetzer der Fa. Rhein-Chemie. Nach erneuter Homogenisierung kann die Mischung zu einem Fell auf einer Walze ausgezogen oder kalandriert werden. Die Herstellung der strahlenabsorbierenden Artikel erfolgt nach der Formgebung durch Pressen oder Kalandrierung durch Vulkanisation bei Temperaturen zwischen 150°C und 170°C und ist in 30 Minuten abgeschlossen.
Nach dem oben beschriebenen Verfahren wurden folgende Proben aus der erfindungsgemäßen Mischung nach Beispiel 22 und dem Kautschuk hergestellt:

| Bezeichnung | Additiv-Gehalt |
|---|---|
| Probe 83 | 66,1 Gew.-% |

### Beispiel 24

Zu 16,6 Gew.-% synthetischen Elastomer (EVM Ethylenvinylacetatcopolymer ca. 40 Gew.-% Ethylen und ca. 60 Gew.-% Vinylacetat (Levapren® 600 HV) werden 79,6 Gew.-% der vorher hergestellten erfindungsgemäßen Mischung nach Beispiel 22 in 2-3 Portionen zugegeben und auf einem Walzwerk oder einem Innenmischer homogenisiert. Danach erfolgt die Zugabe von 1,6 Gew.% Regal® SRF Russ der Fa. Rein-Chemie, 0,5 Gew.-% Rhenogran® P-50 Hydrolyseschutzmittel der Fa. Rhein-Chemie, Polycarbodiimid, 0,2 Gew.% Rhenofit® DDA styrenated diphenyl amine, Stabilisator der Firma Rhein-Chemie, 0,2 Gew.-% Stearinsäure, 0,6 Gew.-% Rhenofit® TAC Triallylcyanurat der Fa. Rhein-Chemie und 0,7 Gew.% Polydispersion® T α, α'-Bis-(tert.-butylperoxy)-diisopropylbenzol, Peroxydvernetzer der Fa. Rhein-Chemie. Nach erneuter Homogenisierung kann die Mischung zu einem Fell auf einer Walze ausgezogen oder kalandriert werden. Die Herstellung der strahlenabsorbierenden Artikel erfolgt nach der Formgebung durch Pressen oder Kalandrierung durch Vulkanisation bei Temperaturen zwischen 150°C und 170°C und ist in 30 Minuten abgeschlossen.
Nach dem oben beschriebenen Verfahren wurden folgende Proben aus der erfindungsgemäßen Mischung nach Beispiel 22 und dem Kautschuk hergestellt:

| Bezeichnung | Additiv-Gehalt |
|---|---|
| Probe 84 | 79,6 Gew.% |

### Beispiel 25

Die mit der erfindungsgemäßen Mischung hergestellten Gummiplatten zeigten folgende mechanischen Eigenschaften:

| | Methode | Probe 83 | Probe 84 |
|---|---|---|---|
| Zerreißfestigkeit, MPa: | DIN 53504 | 8,9 | 6,6 |
| Bruchdehnung, % | DIN 53504 | 243 | 222 |
| Modul 200 %, MPa: | DIN 53504 | 2,7 | 3,4 |
| Härte, Shore A | DIN 53505 | 63 | 75 |

Die mit der erfindungsgemäßen Mischung hergestellten Gummiplatten zeigten bei den untersuchten Füllgraden sehr gute mechanische Festigkeiten. Das lässt den Schluss zu, dass die Vernetzungsreaktion von der erfindungsgemäßen Mischung weitgehend unbeeinflusst abläuft.

**Beispiel 26**

Unverstärktes PA 6 (Durethan® B31F, Handelsprodukt der Bayer AG) wurde mit der erfindungsgemäßen Mischung aus Beispiel 7 unter Zugabe von 0,2 Gew.-% Entformungsmittel (Licowax® E Flakes; Handelsprodukt der Clariant AG, Ester der Montansäure mit Säurezahl 15-20, Verseifungszahl 145-165 und Dichte 1,01 - 1,03 g/cm$^3$ durch Compoundierung auf einem Zweiwellextruder (ZSK 25 der Fa. Werner und Pfleiderer) bei einer Massetemperatur von ca. 245°C und einem Durchsatz von 7 kg/h zu einem homogenen Compound verarbeitet. Die Schmelze wurde anschließend über einen Bandabzug abgesponnen und granuliert.

Das erhaltene Granulat wurde auf einer Spritzgießmaschine des Typs Arburg 320-210-500 unter formmasseüblichen Bedingungen (Massetemperaturen von ca. 270°C, Werkzeugtemperatur 80°C) zu Normprüfkörpern für die mechanischen Prüfungen und zu 1 mm dicken Platten (105 mm x 150 mm) verarbeitet.

Nach dem oben beschriebenen Verfahren wurden folgende Formmassen bzw. Proben aus der erfindungsgemäßen Mischung und dem Thermoplast hergestellt:

| Bezeichnung | Additiv-Gehalt [$k_A$] | Dichte [$\rho_P$] |
|---|---|---|
| Probe 85 | 50 Gew.-% | 1,903 g/cm$^3$ |

| Bezeichnung | Dicke [$d_P$] | Massenbelegung [$m_A$] |
|---|---|---|
| Probe 85 | 2 mm | 0,19 g/cm$^2$ |
| Probe 86 | 4 mm | 0,38 g/cm$^2$ |
| Probe 87 | 6 mm | 0,57 g/cm$^2$ |
| Probe 88 | 8 mm | 0,76 g/cm$^2$ |
| Probe 89 | 10 mm | 0,95 g/cm$^2$ |

$$m_A = k_A \cdot \rho_P \cdot d_P$$

Massenbelegung = Massenanteil der Mischung im Prüfling x Dichte des Prüfl. x Dicke des Prüfl.

**Beispiel 27**

Prüfung der Röntgenschutzeigenschaften

Aus den 105 mm x 150 cm x 1 mm Polyamidplatten wurden durch Aufeinanderkleben Stufenkeile hergestellt. Es entstanden Flächen mit 2, 4, 6, 8 und 10 mm Dicke. Die Stufenkeile wurden mit Röntgenstrahlung der Strahlqualität U=100 kV, eff. Filterung 2,5 mm Al, Wolfram-Gleichstromröntgenröhre für 960 s aufbelichtet und die Röntgenfilme densitometrisch ausgewertet. Im folgenden werden die Ergebnisse dieser Aufbelichtung von Stufenkeilen aus den strahlungsabsorbierenden Materialien dieser Erfindung gezeigt und zwar im Vergleich mit Stufenkeilen aus Blei. Gleiche Schwärzung bedeutet gleiche Dämpfung der Strahlung. Geringere Schwärzung bedeutet bessere Abschirmwirkung.

| Bezeichnung | Dicke [$d_P$] | Massenbelegung [$m_A$] | Schwärzung (relative Einheiten) |
|---|---|---|---|
| Probe 85 | 2 mm | 0,19 g/cm$^2$ | 6,5 |
| Probe 86 | 4 mm | 0,38 g/cm$^2$ | 6,5 |
| Probe 87 | 6 mm | 0,57 g/cm$^2$ | 3,18 |
| Probe 88 | 8 mm | 0,76 g/cm$^2$ | 1,74 |
| Probe 89 | 10 mm | 0,95 g/cm$^2$ | 0,88 |

Die für Kalibrier- und Vergleichmessungen verwendeten Bleimuster waren Bleifolien der Sorte S1 mit Dicken von 0,1 mm. Wie bei den Proben wurden Stufenkeile hergestellt. Der Untersuchungsbereich der Bleigleichwerte wurde von 0,1 bis 1,0 mm überdeckt.

| Bezeichnung | Dicke[$d_P$] | Massenbelegung [$m_A$] | Schwärzung (relative Einheiten) |
|---|---|---|---|
| Probe 90 (Blei-Vergleichsmuster) | 0,1 mm | 0,11 g/cm$^2$ | 6,5 |
| Probe 91 (Blei-Vergleichsmuster) | 0,2 mm | 0,23 g/cm$^2$ | 6,5 |
| Probe 92 (Blei-Vergleichsmuster) | 0,3 mm | 0,34 g/cm$^2$ | 6,5 |
| Probe 93 (Blei-Vergleichsmuster) | 0,4mm | 0,45 g/cm$^2$ | 6,5 |
| Probe 94 (Blei-Vergleichsmuster) | 0,5mm | 0,56 g/cm$^2$ | 5,18 |
| Probe 95 (Blei-Vergleichsmuster) | 0,6 mm | 0,68 g/cm$^2$ | 3,75 |
| Probe 96 (Blei-Vergleichsmuster) | 0,7mm | 0,80 g/cm$^2$ | 2,82 |
| Probe 97 (Blei-Vergleichsmuster) | 0,8 mm | 0,91 g/cm$^2$ | 2,11 |
| Probe 98 (Blei-Vergleichsmuster) | 0,9 mm | 1,03 g/cm$^2$ | 1,61 |
| Probe 99 (Blei-Vergleichsmuster) | 1,0 mm | 1,14 g/cm$^2$ | 1,29 |

Bei gleicher Massenbelegung von 0,56 g/cm$^2$ beträgt der Schwärzungsgrad der Probe 85 3,18, während das Vergleichsmuster (Probe 94 (Blei-Vergleichsmuster)) deutlich mehr Strahlung durchlässt und einen Schwärzungsgrad von 5,18 hat. Geringere Schwärzung bedeutet bessere Abschirmwirkung. Das bedeutet, dass für die gleiche Strahlenschutzwirkung wie Blei eine geringere Massenbelegung erforderlich ist, was durch geringere Dicke oder niedrigeren Füllgrad der Probe erreicht werden kann. Dies führt zu einer Gewichtseinsparung.

### Beispiel 28

Mechanische Daten der Probe 83.

| | Normen | Einheit | Probe 85 |
|---|---|---|---|
| Biegespannung 3,5% | ISO 178 | [MPa] | 113 |
| Randfaserdehnung | ISO 178 | [%] | 5,1 |
| Biegefestigkeit | ISO 178 | [MPa] | 122 |
| Biege-Modul | ISO178 | [MPa] | 3930 |
| | | | |
| Bruchspannung | ISO 527 | [MPa] | 69 |
| Bruchdehnung | ISO 527 | [%] | 6 |
| Zug-Modul | ISO 527 | [MPa] | 4150 |
| | | | |
| Izod-Schlagzähigkeit ISO 180 1U | ISO 180 1U | [kJ/m$^2$] | 49 |

Die mechanischen Eigenschaften liegen bei Probe 85 auf einem Niveau, wie es z.B. für konventionelle mineralgefüllte Polyamid6-Compounds erwartet werden kann. Die Lösungsviskosität des PA6 wurde durch das Eincompoundieren nicht verändert, d.h., dass die mit der erfindungsgemäßen Mischung gefüllte thermoplastische Formmasse nicht zu Polymerabbau oder -aufbau führt.

**Beispiel 29**

***Eingesetzte Komponenten***

A.1) Pfropfkautschuk aus 50 Gew.-% Polybutadien mit einem mittleren Teilchendurchmesser (d50) von 0,35 $\mu$m, auf das 36,5 Gew.-% Styrol und 13,5 Gew.-% Acrylnitril in Emulsion pfropfpolymerisiert wurden.

A.2) Pfropfkautschuk aus 50 Gew.-% Polybutadien mit einem mittleren Teilchendurchmesser (d50) von 0,1 $\mu$m, auf das 36,5 Gew.-% Styrol und 13,5 Gew.-% Acrylnitril in Emulsion pfropfpolymerisiert wurden.

A.3) Styrol/Acrylnitril (SAN) = 72:28 - Copolymerisat mit einem mittleren Molekulargewicht von ca. 85.000, hergestellt durch Lösungspolymerisation

B) 60 Gew.-Teile erfindungsgemäße Mischung nach Beispiel 7.

Herstellung und Ausprüfung der Formmassen

Die einzelnen Komponenten A.1) bis A.3) und B) werden zusammen mit 2 Gew.-Teilen Ethylenbisstearylamid und 0,2 Gew.-Teilen Silikonöl in einem Innenkneter bei 200°C bis 230°C innerhalb 3 bis 5 Minuten vermischt und anschließend granuliert.

Die Granulate werden bei 19.0°C (Presszeit ohne Druck 2 min; Presszeit bei 200 bar 8 min) zu 1 mm dicken Platten verpresst. Die erforderlichen Probekörper werden durch Aussägen bzw. Ausstanzen hergestellt.

| Bezeichnung | Additiv-Gehalt [$k_A$] | Dichte [$\rho_P$] |
|---|---|---|
| Probe 100 | 60 Gew.-% | 2,141 g/cm$^3$ |

| Bezeichnung | Dicke [$d_P$] | Massenbelegung [$m_A$] |
|---|---|---|
| Probe 100 | 2 mm | 0,26 g/cm$^2$ |
| Probe 101 | 4 mm | 0,51 g/cm$^2$ |
| Probe 102 | 6 mm | 0,77 g/cm$^2$ |
| Probe 103 | 8 mm | 1,03 g/cm$^2$ |
| Probe 104 | 10 mm | 1,28 g/cm$^2$ |

$$m_A = k_A \cdot \rho_P \cdot d_P$$

Massenbelegung = Massenanteil der Mischung im Prüfling x Dichte des Prüfl. x Dicke des Prüfl.

**Beispiel 30**

Prüfung der Röntgenschutzeigenschaften

Aus den 100 mm x 100 cm x 1 mm ABS-Platten wurden durch Aufeinanderkleben Stufenkeile hergestellt. Es entstanden Flächen mit 2, 4, 6, 8 und 10 mm Dicke. Die Stufenkeile wurden mit Röntgenstrahlung der Strahlqualität U=150 kV, eff. Filterung 2,5 mm Al; Wolfram-Gleichstromröntgenröhre für 240 s aufbelichtet und die Röntgenfilme densitometrisch ausizewertet. Im folgenden werden die Ergebnisse dieser Aufbelichtung von Stufenkeilen aus den strahlungsabsorbierenden Materialien dieser Erfindung gezeigt und zwar im Vergleich mit Stufenkeilen aus Blei. Gleiche Schwärzung bedeutet gleiche Dämpfung der Strahlung. Geringere Schwärzung bedeutet bessere Abschirmwirkung.

| 1Bezeichnung | Dicke [$d_P$] | Massenbelegung [$m_A$] | Schwärzung (relative Einheiten) |
|---|---|---|---|
| Probe 100 | 2 mm | 0,26 g/cm$^2$ | 6,50 |
| Probe 101 | 4 mm | 0,51 g/cm$^2$ | 2,46 |
| Probe 102 | 6 mm | 0,77 g/cm$^2$ | 1,12 |
| Probe 103 | 8 mm | 1,03 g/cm$^2$ | 0,69 |
| Probe 104 | 10 mm | 1,28 g/cm$^2$ | 0,52 |

Die für Kalibrier- und Vergleichmessungen verwendeten Bleimuster waren Bleifolien der Sorte S 1 mit Dicken von 0,1 mm. Wie bei den Proben wurden Stufenkeile hergestellt. Der Untersuchungsbereich der Bleigleichwerte wurde von 0,1 bis 1,0 mm überdeckt.

| Bezeichnung | Dicke [$d_P$] | Massenbelegung [$m_A$] | Schwärzung (relative Einheiten) |
|---|---|---|---|
| Probe 105 (Blei-Vergleichsmuster) | 0,1 mm | 0,11 g/cm$^2$ | 6,50 |
| Probe 106 (Blei-Vergleichsmuster) | 0,2 mm | 0,23 g/cm$^2$ | 6,50 |
| Probe 107 (Blei-Vergleichsmuster) | 0,3 mm | 0,34 g/cm$^2$ | 6,50 |
| Probe 108 (Blei-Vergleichsmuster) | 0,4 mm | 0,45 g/cm$^2$ | 4,60 |
| Probe 109 (Blei-Vergleichsmuster) | 0,5 mm | 0,56 g/cm$^2$ | 3,18 |
| Probe 110 (Blei-Vergleichsmuster) | 0,6 mm | 0,68 g/cm$^2$ | 2,20 |
| Probe 111 (Blei-Vergleichsmuster) | 0,7 mm | 0,80 g/cm$^2$ | 1,55 |
| Probe 112 (Blei-Vergleichsmuster) | 0,8 mm | 0,91 g/cm$^2$ | 1,17 |
| Probe 113 (Blei-Vergleichsmuster) | 0,9 mm | 1,03 g/cm$^2$ | 0,76 |
| Probe 114 (Blei-Vergleichsmuster) | 1,0 mm | 1,14 g/cm$^2$ | 0,72 |

Bei gleicher Massenbelegung von 0,51 g/cm$^2$ beträgt der Schwärzungsgrad der Probe 99 2,46, während das Vergleichsmuster (Probe 109 (Blei-Vergleichsmuster)) deutlich mehr Strahlung durchlässt und einen Schwärzungsgrad von 3,18 hat. Geringere Schwärzung bedeutet bessere Abschirmwirkung. Das bedeutet, dass für die gleiche Strahlenschutzwirkung wie Blei eine geringere Massenbelegung erforderlich ist, was durch geringere Dicke oder niedrigeren Füllgrad der Probe erreicht werden kann. Dies führt zu einer Gewichtseinsparung.

### Beispiel 31

Mechanische Daten der Probe 100 aus Beispiel 29

Zugversuch bei Raumtemperatur an 2 mm dicken Schulterstäben mit einer Querhauptgeschwindigkeit von 5 mm/min.

Plattendurchstoßversuch bei Raumtemperatur in Anlehnung an DIN 53 443 (Entgegen der DIN wurde der Dorn mit 20 mm Durchmesser mit dem Aufleger mit 40 mm Durchmesser kombiniert.) an 2mm dicken Rundscheiben mit einem Durchmesser von 60 mm. Fallgeschwindigkeit 3 m/sec; angelieferte Energie 13,3 J.

| | Normen | Einheit | Probe 100 |
|---|---|---|---|
| Zugversuch | ISO 527 | | |
| Zug-E-Modul | ISO 527 | MPa | 2650 |
| Streckspannung | ISO 527 | MPa | 27 |
| Streckdehnung | ISO 527 | % | 1,7 |
| Reißdehnung | ISO 527 | % | 2 |
| | | | |

(fortgesetzt)

| | Normen | Einheit | Probe 100 |
|---|---|---|---|
| Plattendurchstoßversuch | Analog DIN 53 443 | | |
| aufgenommene Energie | | Nm | 0,01 |
| Verformung | | mm | 0,38 |
| Maximalkraft | | N | 63 |

Die mechanischen Eigenschaften liegen bei Probe 100 auf einem Niveau, wie es z.B. für konventionelle mineralgefüllte ABS-Compounds erwartet werden kann. Die Viskosität des ABS wurde durch das Eincompoundieren nicht verändert, d.h., dass die mit der erfindungsgemäßen. Mischungen gefüllte thermoplastische Formmasse nicht zu Polymerabbau oder -aufbau führt.

### Beispiel 32

**Ausgangskomponenten/Probekörper**

Für das Beispiel 32 wird als Polyurethansystem ein sogenanntes Einkomponentensystem eingesetzt. Es handelt sich hierbei um eine Formulierung, die sämtliche zur Herstellung eines Polyurethans benötigte Ausgangskomponenten enthält (Polyisocyanat, Polyolgemisch, Additive). Diese Systeme sind in DE-A 3 230 757; Seite 16, Zeile 60 bis Seite 19, Zeile 51 und DE-A 3 727 128; Spate 13, Zeile 28 bis Spalte 16, Zeile 45 beschrieben.

Als Polyisocyanat wird ein höherschmelzendes, feinteiliges (mittl. Teilchengröße 5 - 25 $\mu$m) Feststoffdiisocyanat eingesetzt, welches durch eine dünne Polyharnstoffumhüllung deaktiviert ist. Diese Deaktivierung macht die Formulierungen lagerstabil bis zu ca. 50°C. Durch Erhitzen auf Temperaturen von mind. 100°C wird diese Deaktivierung zerstört und das freigelegte Polyisocyanat kann mit den vorhandenen Polyolkomponenten reagieren. Als Feststoffdiisocyanat wird vorzugsweise der N,N'-Di-(4-methyl-3-isocyanato-phenyl)harnstoff eingesetzt, dessen Herstellung in der DE-A 3 826 447 beschrieben wird.

Unter der Produktbezeichnung VP.PU 50EL08 wird von der Bayer AG ein lagerstabiles Polyurethan-Einkomponentensystem des o.g. Typs als Versuchsprodukt angeboten, welches aus einem Polyolgemisch und dem oben genannten Feststoffdiisocyanat zusammengesetzt ist. Dieses System weist eine Viskosität von ca. 13 Pa*s bei Raumtemperatur auf und wird durch Erhitzen auf ca. 100 - 150°C ausgehärtet.

Dieser fertigen Abmischung (Beispiel 32a) wurden folgende Komponenten in den in der Tabelle 1 angegebenen Mengen zugemischt:

1. die erfindungsgemäße Mischung

2. ein aliphat. Polyamin (Jeffamine® T 403, bei Raumtemperatur farblose Flüssigkeit der Fa. Huntsman, auf Trimethylolpropan-Basis (TMP) gestartetes Polyethertriamin mit 5-6 Mol Propylenoxid/Mol TMP, Amingehalt 6 Milliäquivalent/g) zur Kompensation der erhöhten mechan. Beanspruchung beim Einmischen des Zusatzes in das Einkomponentensystem VP.PU 50EL08,

3. Katalysator Octa-Soligen® Pb 30-31 (Blei(II)2-ethylhexanoat der Fa. Borchers, 40789 Monheim) zur Anpassung der Aushärtungsgeschwindigkeit an den Füllstoffgehalt.

Die genannten Additive wurden dem VP.PU 50EL08 zugesetzt und mit einem langsam laufenden Zahnkranzrührer bei bis zu 35°C vorsichtig untergemischt. Anschließend wurde diese Mischung zur Entfernung von eingerührter Luft und Homogenisierung in einem evakuierten Kolben (20 mbar) ca. 15 Minuten vorsichtig bei bis zu 40°C gerührt (Beispiel 32b).

Die jeweils leicht erwärmten (bis ca. 40°C), evakuierten Gemische wurden auf eine ebene Metallform 20*20 cm in einer Schichtdicke von ca. 3 mm aufgetragen und nach Nivellierung in einem Heizschrank bei 140°C innerhalb 3 Stunden ausgehärtet.

Von den hergestellten Probeplatten wurden die mechan. Eigenschaften bestimmt und die Schwärzungskurven aufgenommen und ausgewertet.

**Beispiel 33**

**Mechanische Werte der Probekörper**

Tabelle 1 zeigt die Zusammensetzung der Proben aus Beispiel 32a und Beispiel 32b und die mechan. Eigenschaften der ausgehärteten Elastomerproben.

**Beispiel 33**

**Mechanische Werte der Probekörper**

**Tabelle 1:**

| Beispiel | VPPU 50EL08 | (G.T.) | Jeffamin T403 (G.T.) | Menge anorg. Zusatz (G.T.) | Gehalt anorg. Zusatz [%] | Zusatz Pb 30-31 | Viskosität [Pa*s] | Härte [Shore A] | Zugfestigkeit [MPa] | Bruchdehnung [%] | Weiterreiß-Wid. [kN/m] | Elastizität [%] |
|---|---|---|---|---|---|---|---|---|---|---|---|---|
| | | | | | | | | DIN 53 505 | DIN 53 504 | DIN 53 504 | DIN 53 515 | DIN 53 512 |
| 32a | Pt. 126 | 100 | | 0 | 0,0 | | 13 | 73 | 6,9 | 220 | 15,3 | 44 |
| 32b | Pt. 126 | 100 | 0,15 | 60 | 37,4 | 0,40 | 30 | 84 | 9,3 | 280 | 18,5 | 36 |

Die Tabelle zeigt, dass die erfindungsgemäße Mischung, wie bei normalen Füllstoffen üblich und bekannt, die mechanischen Werte Härte, Zugfestigkeit, Bruchdehnung und Weiterreißwiderstand erhöht und die Elastizität verringert und somit keine inakzeptable oder unerwartete negativen Auswirkungen auf die Elastomereigenschäften hat.

**Massenbelegung der Probekörper**

Das Elastomer aus Beispiel 32b weist eine Dichte von 1,537 g/cm$^3$ auf.

Durch Verkleben mehrerer Folien wurden Probenkörper unterschiedlicher Dicke hergestellt. Dabei ergibt sich abhängig von der Probendicke folgende Massenbelegung:

(Massenbelegung = Massenanteil der Mischung im Prüfling x Dichte des Prüfl. x Dicke des Prüflings: $m_A = k_A \cdot \rho_P \cdot d_P$)

| Bezeichnung | Dicke [$d_P$] | Massenbelegung [$m_A$] |
|---|---|---|
| Probe 115 | 3,1 mm | 0,18 g/cm$^2$ |
| Probe 116 | 6,8 mm | 0,39 g/cm$^2$ |
| Probe 117 | 10,3 mm | 0,59 g/cm$^2$ |
| Probe 118 | 13,8 mm | 0,79 g/cm$^2$ |
| Probe 119 | 17,6 mm | 1,01 g/cm$^2$ |

## Beispiel 34

**Prüfung der Röntgenschutzeigenschaften**

Aus den 200 mm x 200 cm x ca. 3 mm PU-Platten wurden durch Aufeinanderkleben Stufenkeile hergestellt. Es entstanden Flächen mit den in der Tabelle angegebenen Dicken. Die Stufenkeile wurden mit Röntgenstrahlung der Strahlqualität U=150 kV, eff. Filterung 2,5 mm Al, Wolfram-Gleichstromröntgenröhre für 240 s aufbelichtet und die Röntgenfilme densitometrisch ausgewertet. Im folgenden werden die Ergebnisse dieser Aufbelichtung von Stufenkeilen aus den strahlungsabsorbierenden Materialien dieser Erfindung gezeigt und zwar im Vergleich mit Stufenkeilen aus Blei. Gleiche Schwärzung bedeutet gleiche Dämpfung der Strahlung. Geringere Schwärzung bedeutet bessere Abschirmwirkung.

| Bezeichnung | Dicke [$d_P$] | Massenbelegung [$m_A$] | Schwärzung (relative Einheiten) |
|---|---|---|---|
| Probe 115 | 3,1 mm | 0,18 g/cm$^2$ | 6,50 |
| Probe 116 | 6,8 mm | 0,39 g/cm$^2$ | 4,67 |
| Probe 117 | 10,3 mm | 0,59 g/cm$^2$ | 2,33 |
| Probe 118 | 13,8 mm | 0,79 g/cm$^2$ | 1,28 |
| Probe 119 | 17,6 mm | 1,01 g/cm$^2$ | 0,84 |

Die für Kalibrier- und Vergleichmessungen verwendeten Bleimuster waren Bleifolien der Sorte S1 mit Dicken von 0,1 mm. Wie bei den Proben wurden Stufenkeile hergestellt. Der Untersuchungsbereich der Bleigleichwerte wurde von 0,1 bis 1,0 mm überdeckt.

| Bezeichnung | Dicke [$d_P$] | Massenbelegung [$m_A$] | Schwärzung (relative Einheiten) |
|---|---|---|---|
| Probe 120 (Blei-Vergleichsmuster) | 0,1 mm | 0,11 g/cm$^2$ | 6,50 |
| Probe 121 (Blei-Vergleichsmuster) | 0,2 mm | 0,23 g/cm$^2$ | 6,50 |
| Probe 122 (Blei-Vergleichsmuster) | 0,3 mm | 0,34 g/cm$^2$ | 6,50 |
| Probe 123 (Blei-Vergleichsmuster) | 0,4 mm | 0,45 g/cm$^2$ | 4,60 |
| Probe 124 (Blei-Vergleichsmuster) | 0,5 mm | 0,56 g/cm$^2$ | 3,18 |

(fortgesetzt)

| | | | |
|---|---|---|---|
| Probe 125 (Blei-Vergleichsmuster) | 0,6 mm | 0,68 g/cm$^2$ | 2,20 |
| Probe 126 (Blei-Vergleichsmuster) | 0,7 mm | 0,80 g/cm$^2$ | 1,55 |
| Probe 127 (Blei-Vergleichsmuster) | 0,8 mm | 0,91 g/cm$^2$ | 1,17 |
| Probe 128 (Blei-Vergleichsmuster) | 0,9 mm | 1,03 g/cm$^2$ | 0,76 |
| Probe 129 (Blei-Vergleichsmuster) | 1,0 mm | 1,14 g/cm$^2$ | 0,72 |

Bei gleicher Massenbelegung von 0,59 g/cm$^2$ beträgt der Schwärzungsgrad der Probe 115 2,33, während das Vergleichsmuster (Probe 124 (Blei-Vergleichsmuster)) deutlich mehr Strahlung durchlässt und einen Schwärzungsgrad von 3,18 hat. Geringere Schwärzung bedeutet bessere Abschirmwirkung. Das bedeutet für die Praxis: Um die gleiche Strahlenschutzwirkung wie Blei zu erzielen, ist eine geringere Massenbelegung erforderlich, was durch geringere Dicke oder niedrigeren Füllgrad der Probe erreicht werden kann. Dies führt zu einer Gewichtseinsparung.

In der untenstehenden Tabelle werden die für eine gewünschte Schwärzung (= reziproke Abschirmwirkung) notwendige Massenbelegung für Blei und den im Beispiel 32b eingesetzten Füllstoff dargestellt. In der rechten Spalte ist zu erkennen, dass je nach gewünschtem Abschirmungsgrad die notwendige Massenbelegung beim Füllstoff des Beispiel 32b um 5 - 25 % niedriger als beim Einsatz von Blei sein kann.

| Erforderliche Massenbelegung für definierte Schwärzung | | | |
|---|---|---|---|
| Schwärzung | Massenbelegung | | |
| | Blei | Beispiel 32b | Differenz* |
| 4,0 | 0,497 | 0,366 | 26,4 |
| 3,0 | 0,581 | 0,493 | 15,1 |
| 2,0 | 0,717 | 0,641 | 10,6 |
| 1,0 | 0,954 | 0,912 | 4,4 |
| | | | |
| *bez. auf Blei in [%] | | | |

**Beispiel 35 (Nicht erfindunssgemäß)**

Aus Seltenen Erden und Wolfram-Pulver wird nach dem in Beispiel 1 beschriebenen Verfahren die Mischung mit der folgenden Zusammensetzung hergestellt:

| Seltene Erden | Anteil in der Mischung |
|---|---|
| La$_2$O$_3$ | 13,5% |
| CeO$_2$ | 27 % |
| Nd$_2$O$_3$ | 7,5% |
| Gd$_2$O$_3$ | 25% |
| W | 27,3% |

Vor der Benutzung wurden die Seltenen Erden und das Wolfram-Pulver 2 Stunden bei einer Temperatur von 120°C getrocknet, und durch Sieb 063 (Wolfram durch Sieb 016) gesichtet. Anschließend wurden die zwei Komponenten in einem Taumelmischer über 2 Stunden gemischt.

**Beispiel 36 (nicht erfindungsgemäß)**

Zu 27,5 Gew.% Naturkautschuk® TSR 5 werden 66,1 Gew.% der vorher hergestellten Mischung (nach Beispiel 35) in 2-3 Portionen zugegeben und auf einem Walzwerk oder einem Innenmischer homogenisiert. Danach erfolgt die Zugabe von 2,8 Gew.-% Enerthene® 1849-1, einem naphthenischem Prozessöl der Fa. BP, 0,4 Gew.-% Vulkanox® BKF als Antioxidants der Fa. Bayer AG, 0,4 Gew.% Vullcanox® MB, Antioxidants der Fa. Bayer AG, 0,8 Gew.% Zinkoxid RS, 0,6 Gew.-% Stearinsäure, 0,4 Gew.-% Vulkacit® CZ, Vulkanisationsbeschleuniger der Fa. Bayer AG, 0,1 Gew.-% Vulkacit D, Vulkanisationsbeschleuniger der Fa. Bayer AG und 0,8 Gew.-% Schwefel Rhenocure® IS 60/G 75. Nach erneuter Homogenisierung kann die Mischung zu einem Fell auf einer Walze ausgezogen oder kalandriert werden. Die Herstellung der strahlenabsorbierenden Artikel erfolgt nach der Formgebung durch Pressen oder Kalandrierung durch Vulkanisation bei Temperaturen zwischen 150°C und 170°C und ist in 30 Minuten abgeschlossen.

Nach dem oben beschriebenen Verfahren wurden folgende Proben aus der Mischung nach Beispiel 35und dem Kautschuk hergestellt:

| Bezeichnung | Additiv-Gehalt [$k_A$] | Dichte [$\rho_P$] |
|---|---|---|
| Probe 130 | 66,1 Gew.% | 2,281 g/cm$^3$ |
| Probe 130 | 2 mm | 0,30g/cm$^2$ |
| Probe 131 | 4 mm | 0,60g/cm$^2$ |
| Probe 132 | 6 mm | 0,90g/cm$^2$ |
| Probe 133 | 8 mm | 1,21g/cm$^2$ |
| Probe 134 | 10 mm | 1,51g/cm$^2$ |

$$m_A = k_A \cdot \rho_P \cdot d_P$$

Massenbelegung = Massenanteil der Mischung im Prüfling x Dichte des Prüfl. x Dicke des Prüfl.

**Beispiel 37**

Prüfung der Strahlenschutzeigenschaften

Aus den 20 cm x 20 cm x 2 mm Gummiplatten wurden durch Aufeinanderkleben Stufenkeile hergestellt. Es entstanden Flächen mit 2, 4, 6, 8 und 10 mm Dicke. Die Stufenkeile wurden mit Röntgenstrahlung der Strahlqualität U=100 kV, eff. Filterung 2,5 mm Al, Wolfram-Gleichstromröntgenröhre für 960 s aufbelichtet und die Röntgenfilme densitometrisch ausgewertet. Im folgenden werden die Ergebnisse dieser Aufbelichtung von Stufenkeilen aus den strahlungsabsorbierenden Materialien dieser Erfindung gezeigt und zwar im Vergleich mit Stufenkeilen aus Blei. Gleiche Schwärzung bedeutet gleiche Dämpfung der Strahlung. Geringere Schwärzung bedeutet bessere Abschirmwirkung.

| Bezeichnung | Dicke [$d_P$] | Massenbelegung [$m_A$] | Schwärzung (relative Einheiten) |
|---|---|---|---|
| Probe 130 | 2 mm | 0,30g/cm$^2$ | 6,50 |
| Probe 131 | 4 mm | 0,60g/cm$^2$ | 2,98 |
| Probe 132 | 6 mm | 0,90g/cm$^2$ | 0,85 |
| Probe 133 | 8 mm | 1,21g/cm$^2$ | 0,38 |
| Probe 134 | 10 mm | 1,51g/cm$^2$ | 0,29 |

Die für Kalibrier- und Vergleichmessungen verwendeten Bleimuster waren Bleifolien der Sorte S1 mit Dicken von 0,1 mm. Wie bei den Proben wurden Stufenkeile aus den Bleifolien hergestellt. DerUntersuchüngsbereich überdeckt den Bleigleichwert von 0,1 bis 1,0 mm.

| Bezeichnung | Dicke [$d_P$] | Massenbelegung [$m_A$] | Schwärzung (relative Einheiten) |
|---|---|---|---|
| Probe 135 (Blei-Vergleichsmuster) | 0,1 mm | 0,11 g/cm$^2$ | 6,50 |

(fortgesetzt)

| Bezeichnung | Dicke [$d_P$] | Massenbelegung [$m_A$] | Schwärzung (relative Einheiten) |
|---|---|---|---|
| Probe 136 (Blei-Vergleichsmuster) | 0,2 mm | 0,23 g/cm² | 6,50 |
| Probe 137 (Blei-Vergleichsmuster) | 0,3 mm | 0,34 g/cm² | 6,50 |
| Probe 138 (Blei-Vergleichsmuster) | 0,4 mm | 0,45 g/cm² | 6,50 |
| Probe 139 (Blei-Vergleichsmuster) | 0,5 mm | 0,56 g/cm² | 6,11 |
| Probe 140 (Blei-Vergleichsmuster) | 0,6 mm | 0,68 g/cm² | 4,23 |
| Probe 141 (Blei-Vergleichsmuster) | 0,7 mm | 0,80 g/cm² | 3,07 |
| Probe 142 (Blei-Vergleichsmuster) | 0,8 mm | 0,91 g/cm² | 2,27 |
| Probe 143 (Blei-Vergleichsmuster) | 0,9 mm | 1,03 g/cm² | 1,76 |
| Probe 144 (Blei-Vergleichsmuster) | 1,0 mm | 1,14 g/cm² | 1,43 |

Im untersuchten Massenbelegungsbereich von 0,5 g/cm² bis 1,4 g/cm² ist der Schwärzungsgrad der nicht erfindungsgemäßen Probe 130 bis 134 zwar auch niedriger als für Blei, jedoch deutlich höher als die erfindungsgemäßen Proben 20 bis 24 (Beispiel 9). Geringere Schwärzung bedeutet bessere Abschirmwirkung Die erfmdungsgemäßen Proben 20 bis 24 schirmen besser ab als Blei und besser als die nicht erfindungsgemäßen Proben 130 bis 134.

## Beispiel 38

Aus Seltenen Erden und Wolfram-Pulver wurde nach dem in Beispiel 1 beschriebenen Verfahren eine Mischung mit der folgenden Zusammensetzung hergestellt:

| Seltene Erden | Anteil in der erfindungsgemäßen Mischung |
|---|---|
| $Gd_2O_3$ | 55% |
| Sn | 30 % |
| W | 15% |

Vor der Benutzung wurden die Seltenen Erden sowie das Wolfram- und Zinn-Pulver 2 Stunden bei einer Temperatur von 120°C getrocknet, und durch Sieb 063 (Wolfram durch Sieb 016) gesichtet. Anschließend wurden die drei Komponenten in einem Taumelmischer über 2 Stunden gemischt.

## Beispiel 39

Zu 27,5 Gew.% Naturkautschuk® TSR 5 werden 66,2 Gew.-% der vorher hergestellten erfindungsgemäßen Mischung (nach Beispiel 38) in 2-3 Portionen zugegeben und auf einem Walzwerk oder einem Innenmischer homogenisiert. Danach erfolgt die Zugabe von 2,8 Gew.% Enerthene® 1849-1, einem naphthenischem Prozessöl der Fa. BP, 0,4 Gew.-% Vulkanox® BKF als Antioxidants der Fa. Bayer AG, 0,4 Gew.% Vulkanox® MB, Antioxidants der Fa. Bayer AG, 0,8 Gew.-% Zinkoxid RS, 0,6 Gew.-% Stearinsäure, 0,4 Gew.% Vulkacit® CZ, Vulkanisationsbeschleuniger der Fa. Bayer AG, 0,1 Gew.% Vulkacit® D, Vulkanisationsbeschleuniger der Fa. Bayer AG und 0,8 Gew.% Schwefel Rhenocure® IS 60/G 75. Nach erneuter Homogenisierung kann die Mischung zu einem Fell auf einer Walze ausgezogen oder kalandriert werden. Die Herstellung der strahlenabsorbierenden Artikel erfolgt nach der Formgebung durch Pressen oder Kalandrierung durch Vulkanisation bei Temperaturen zwischen 150°C und 170°C und ist in 30 Minuten abgeschlossen.

Nach dem oben beschriebenen Verfahren wurden folgende Proben aus der erfindungsgemäßen Mischung nach Beispiel 38 und dem Kautschuk hergestellt:

| Bezeichnung | Additiv-Gehalt [$k_A$] | Dichte [$\rho_P$] |
|---|---|---|
| Probe 145 | 66,1 Gew.-% | 2,300 g/cm³ |

| Bezeichnung | Dicke [$d_P$] | Massenbelegung [$m_A$] |
|---|---|---|
| Probe 145 | 2 mm | 0,30g/cm$^2$ |
| Probe 146 | 4 mm | 0,61g/cm$^2$ |
| Probe 147 | 6 mm | 0,91g/cm$^2$ |
| Probe 148 | 8 mm | 1,22g/cm$^2$ |
| Probe 149 | 10 mm | 1,52g/cm$^2$ |

$$m_A = k_A \cdot \rho_P \cdot d_P$$

Massenbelegung = Massenanteil der Mischung im Prüfling x Dichte des Prüfl. x Dicke des Prüfl.

**Beispiel 40**

Prüfung der Strahlenschutzeigenschaften

Aus den 20 cm x 20 cm x 2 mm Gummiplatten wurden durch Aufeinanderkleben Stufenkeile hergestellt. Es entstanden Flächen mit 2, 4, 6, 8 und 10 mm Dicke. Die Stufenkeile wurden mit Röntgenstrahlung der Strahlqualität U=150 kV, eff. Filterung 2,5 mm Al, Wolfram-Gleichstromröntgenröhre für 120 s aufbelichtet und die Röntgenfilme densitometrisch ausgewertet. Im folgenden werden die Ergebnisse dieser Aufbelichtung von Stufenkeilen aus den strahlungsabsorbierenden Materialien dieser Erfindung gezeigt und zwar im Vergleich mit Stufenkeilen aus Blei. Gleiche Schwärzung bedeutet gleiche Dämpfung der Strahlung. Geringere Schwärzung bedeutet bessere Abschirmwirkung.

| Bezeichnung | Dicke [d$_P$] | Massenbelegung [$m_A$] | Schwärzung (relative Einheiten) |
|---|---|---|---|
| Probe 145 | 2 mm | 0,30g/cm$^2$ | 4,30 |
| Probe 146 | 4 mm | 0,61g/cm$^2$ | 1,58 |
| Probe 147 | 6 mm | 0,91g/cm$^2$ | 0,81 |
| Probe 148 | 8 mm | 1,22g/cm$^2$ | 0,51 |
| Probe 149 | 10 mm | 1,52g/cm$^2$ | 0,37 |

Die für Kalibrier- und Vergleichmessungen verwendeten Bleimuster waren Bleifolien der Sorte S1 mit Dicken von 0,1 mm. Wie bei den Proben wurden Stufenkeile aus den Bleifolien hergestellt. Der Untersuchungsbereich überdeckt den Bleigleichwerte von 0,1 bis 1,0 mm.

| Bezeichnung | Dicke [$d_P$] | Massenbelegung [$m_A$] | Schwärzung (relative Einheiten) |
|---|---|---|---|
| Probe 150 (Blei-Vergleichsmuster) | 0,1 mm | 0,11 g/cm$^2$ | 6,50 |
| Probe 151 (Blei-Vergleichsmuster) | 0,2 mm | 0,23 g/cm$^2$ | 6,50 |
| Probe 152 (Blei-Vergleichsmuster) | 0,3 mm | 0,34 g/cm$^2$ | 5,40 |
| Probe 153 (Blei-Vergleichsmuster) | 0,4 mm | 0,45 g/cm$^2$ | 3,68 |
| Probe 154 (Blei-Vergleichsmuster) | 0,5 mm | 0,56 g/cm$^2$ | 2,65 |
| Probe 155 (Blei-Vergleichsmuster) | 0,6 mm | 0,68 g/cm$^2$ | 1,98 |
| Probe 156 (Blei-Vergleichsmuster) | 0,7 mm | 0,80 g/cm$^2$ | 1,39 |
| Probe 157 (Blei-Vergleichsmuster) | 0,8 mm | 0,91 g/cm$^2$ | 1,04 |
| Probe 158 (Blei-Vergleichsmuster) | 0,9 mm | 1,03 g/cm$^2$ | 0,83 |

(fortgesetzt)

| Bezeichnung | Dicke [$d_P$] | Massenbelegung [$m_A$] | Schwärzung (relative Einheiten) |
|---|---|---|---|
| Probe 159 (Blei-Vergleichsmuster) | 1,0 mm | 1,14 g/cm$^2$ | 0,71 |

### Beispiel 41 (nicht erfindungsgemäß)

a) Verwendete Rohstoffe und ihre Zusammensetzung

Aus den folgenden Komponenten wurde eine nicht erfindungsgemäße Mischung als hergestellt:

| Bezeichnung | Anteil in der nicht erfindungsgemäßen Mischung |
|---|---|
| Gadoliniumoxid | 75 Gew.-% |
| Wolfram-Pulver | 5 Gew.-% |
| Zinn-Pulver | 20 Gew.-% |

b) Herstellung der anorganischen Strahlenschutz-Mischung

Vor der Benutzung wurden das Gadoliniumoxid und das Wolfram-Pulver 2 Stunden bei einer Temperatur von 120°C getrocknet, und durch Sieb 063 (Wolfram durch Sieb 016) gesichtet. Anschließend wurden die drei Komponenten in einem Taumelmischer über 1,5 Stunden gemischt.

Es wurden ein weißes, rieselfähiges, verklumpungsfreies Pulver als nicht erfindungsgemäße Mischung erhalten.

### Beispiel 42 (nicht erfindungsdgemäß)

Zu 27,5 Gew.-% synthetischen Elastomer (EVM Ethylenvinylacetatcopolymer ca. 40 Gew.-% Ethylen und ca. 60 Gew.-% (Levapren® 600 HV)) werden 66,1 Gew. -% der vorher hergestellten nicht erfindungsgemäßen Mischung nach Beispiel 41 in 2-3 Portionen zugegeben und auf einem Walzwerk oder einem Innenmischer homogenisiert. Danach erfolgt die Zugabe von 2,8 Gew.-% Regal® SRF Russ der Fa. Rein-Chemie, 0,8 Gew.-% Rhenogran® P-50 Hydrolyseschutzmittel der Fa. Rhein-chemie, Polycarbodiimid, 0,4 Gew.-% Rhenofit® DDA styrenated diphenyl amine, Stabilisator der Firma Rhein-Chemie, 0,3 Gew.-% Stearinsäure, 1,0 Gew.-% Rhenofit® TAC Triallylcyanurat der Fa. Rhein-Chemie und 1,1 Gew.-% Polydispersion® T $\alpha$, $\alpha$'-Bis-(tert.-butylperoxy)-diisopropylbenzol, Peroxydvernetzer der Fa. Rhein-Chemie. Nach erneuter Homogenisierung kann die Mischung zu einem Fell auf einer Walze ausgezogen oder kalandriert werden. Die Herstellung der strahlenabsorbierenden Artikel erfolgt nach der Formgebung durch Pressen oder Kalandrierung durch Vulkanisation bei Temperaturen zwischen 150°C und 170°C und ist in 30 Minuten abgeschlossen.

Nach dem oben beschriebenen Verfahren wurden folgende Proben aus der nicht erfmdungsgemäßen Mischung nach Beispiel 41 und dem Kautschuk hergestellt:

| Bezeichnung | Additiv-Gehalt | Dichte |
|---|---|---|
| Probe 160 | 66,1 Gew.-% | 2,42 g/cm$^3$ |

### Beispiel 43

Prüfung der Strahlenschutzeigenschaften

Aus den 20 cm x 20 cm x 2 mm Gummiplatten wurden durch aufeinander kleben Stufenkeile hergestellt. Es entstanden Flächen mit 2, 4, 6, 8 und 10 mm Dicke. Die Stufenkeile wurden mit Röntgenstrahlung der Strahlqualität U=150 kV, eff. Filterung 2,5 mm Al, Wolfram-Gleichstromröntgenröhre für 120 s aufbelichtet und die Röntgenfilme densitometrisch ausgewertet. Im folgenden werden die Ergebnisse dieser Aufbelichtung von Stufenkeilen aus den strahlungsabsorbierenden Materialien dieser Erfindung gezeigt und zwar im Vergleich mit Stufenkeilen aus Blei. Gleiche Schwärzung bedeutet gleiche Dämpfung der Strahlung. Geringere Schwärzung bedeutet bessere Abschirmwirkung.

| Bezeichnung | Dicke [$d_P$] | Massenbelegung [$m_A$] | Schwärzung (relative Einheiten) |
|---|---|---|---|
| Probe 160 | 2 mm | 0,39g/cm$^2$ | 4,38 |
| Probe 161 | 4 mm | 0,77g/cm$^2$ | 2,01 |
| Probe 162 | 6 mm | 1,16g/cm$^2$ | 1,11 |
| Probe 163 | 8 mm | 1,54g/cm$^2$ | 0,70 |
| Probe 164 | 10 mm | 1,93g/cm$^2$ | 0,47 |

Die für Kalibrier- und Vergleichmessungen verwendeten Bleimuster waren Bleifolien der Sorte S1 mit Dicken von 0,1 mm. Wie bei den Proben wurden Stufenkeile aus den Bleifolien hergestellt. Der Untersuchungsbereich überdeckt den Bleigleicliwerte von 0,1 bis 1,0 mm.

| Bezeichnung | Dicke [$d_P$] | Massenbelegung [$m_A$] | Schwärzung (relative Einheiten) |
|---|---|---|---|
| Probe 165 (Blei-Vergleichsmuster) | 0,1 mm | 0,11 g/cm$^2$ | 6,50 |
| Probe 166 (Blei-Vergleichsmuster) | 0,2 mm | 0,23 g/cm$^2$ | 6,50 |
| Probe 167 (Blei-Vergleichsmuster) | 0,3mm | 0,34 g/cm$^2$ | 4,55 |
| Probe 168 (Blei-Vergleichsmuster) | 0,4 mm | 0,45 g/cm$^2$ | 3,27 |
| Probe 169 (Blei-Vergleichsmuster) | 0,5 mm | 0,56 g/cm$^2$ | 2,42 |
| Probe 170 (Blei-Vergleichsmuster) | 0,6 mm | 0,68 g/cm$^2$ | 1,83 |
| Probe 171 (Blei-Vergleichsmuster) | 0,7 mm | 0,80 g/cm$^2$ | 1,28 |
| Probe 172 (Blei-Vergleichsmuster) | 0,8 mm | 0,91 g/cm$^2$ | 1,02 |
| Probe 173 (Blei-Vergleichsmuster) | 0,9 mm | 1,03 g/cm$^2$ | 0,81 |
| Probe 174 (Blei-Vergleichsmuster) | 1,0 mm | 1,14 g/cm$^2$ | 0,70 |

Im untersuchten Massenbelegungsbereich von 0,5 g/cm$^2$ bis 1,4 g/cm$^2$ ist der Schwärzungsgrad der nicht erfindungsgemäßen Probe 160 bis 164 sowohl höher als für Blei als auch deutlich höher als die erfindungsgemäßen Proben 145 bis 149 (Beispiel 39) oder 20 bis 24 (Beispiel 9). Geringere Schwärzung bedeutet bessere Abschirmwirkung Die erfindungsgemäßen Proben 145 bis 149 und Proben 20 bis 24 schirmen besser ab als Blei und deutlich besser als die nicht erfindungsgemäßen Proben 160 bis 164.

**Beispiel 44 (nicht erfindungsgemäß)**

Aus Seltenen Erden und Wolfram-Pulver und Zinn wird nach dem in Beispiel 1 beschriebenen Verfahren die nicht erfindungsgemäße Mischung mit der folgenden Zusammensetzung hergestellt:

| Seltene Erden | Anteil in der nicht erfindungsgemäßen Mischung |
|---|---|
| Gd$_2$O$_3$ | 35% |
| Sn | 60 % |
| W | 5% |

Vor der Benutzung wurden die Seltenen Erden sowie das Wolfram- und Zinn-Pulver 2 Stunden bei einer Temperatur von 120°C getrocknet, und durch Sieb 063 (Wolfram durch Sieb 016) gesichtet. Anschließend wurden die drei Komponenten in einem Taumelmischer über 2 Stunden gemischt.

**Beispiel 45 (nicht erfindungsgemäß)**

Zu 27,5 Gew.-% Naturkautschuk® TSR 5 werden 66,1 Gew.-% der vorher hergestellten nicht erfindungsgemäßen Mischung (nach Beispiel 44) in 2-3 Portionen zugegeben und auf einem Walzwerk oder einem Innenmischer homogenisiert. Danach erfolgt die Zugabe von 2,8 Gew.-% Enerthene® 1849-1, einem naphthenischem Prozessöl der Fa. BP, 0,4 Gew.-% Vulkanox® BKF als Antioxidants der Fa. Bayer AG, 0,4 Gew.-% Vulkanox® MB, Antioxidants der Fa. Bayer AG, 0,8. Zinkoxid RS, 0,6 Gew.-% Stearinsäure, 0,4 Gew.-% Vulkacit® CZ, Vulkanisationsbeschleuniger der Fa. Bayer AG, 0,1 Gew.-% Vulkacit® D, Vulkanisationsbeschleuniger der Fa. Bayer AG und 0,8 Gew.-% Schwefel Rhenocure® IS 60/G 75. Nach erneuter Homogenisierung kann die Mischung zu einem Fell auf einer Walze ausgezogen oder kalandriert werden. Die Herstellung der strahlenabsorbierenden Artikel erfolgt nach der Formgebung durch Pressen oder Kalandrierung durch Vulkanisation bei Temperaturen zwischen 150°C und 170°C und ist in 30 Minuten abgeschlossen.

Nach dem oben beschriebenen Verfahren wurden folgende Proben aus der erfindungsgemäßen anorganischen Strahlenschutz-Mischung nach Beispiel 44 und dem Kautschuk hergestellt:

| Bezeichnung | Additiv-Gehalt [$k_A$] | Dichte [$\rho_P$] |
|---|---|---|
| Probe 175 | 66,1 Gew.% | 2,272 g/cm$^3$ |

| Bezeichnung | Dicke [$d_P$] | Massenbelegung [$m_A$] |
|---|---|---|
| Probe 175 | 2 mm | 0,30g/cm$^2$ |
| Probe 176 | 4 mm | 0,60g/cm$^2$ |
| Probe 177 | 6 mm | 0,90g/cm$^2$ |
| Probe 178 | 8 mm | 1,20g/cm$^2$ |
| Probe 179 | 10 mm | 1,50g/cm$^2$ |

$$m_A = k_A \cdot \rho_P \cdot d_P$$

$$\text{Massenbelegung} = \text{Massenanteil der Mischung im Prüfling x Dichte des Prüfl. x Dicke des Prüfl.}$$

### Beispiel 46

Prüfung der Strahlenschutzeigenschaften

Aus den 20 cm x 20 cm x 2 mm Gummiplatten wurden durch Aufeinanderkleben Stufenkeile hergestellt. Es entstanden Flächen mit 2, 4, 6, 8 und 10 mm Dicke. Die Stufenkeile wurden mit Röntgenstrahlung der Strahlqualität U=150 kV, eff. Filterung 2,5 mm Al, Wolfram-Gleichstromröntgenröhre für 120 s aufbelichtet und die Röntgenfilme densitometrisch ausgewertet. Im folgenden werden die Ergebnisse dieser Aufbelichtung von Stufenkeilen aus den strahlungsabsorbierenden Materialien dieser Erfindung gezeigt und zwar im Vergleich mit Stufenkeilen aus Blei. Gleiche Schwärzung bedeutet gleiche Dämpfung der Strahlung. Geringere Schwärzung bedeutet bessere Abschirmwirkung.

| Bezeichnung | Dicke [$d_P$] | Massenbelegung [$m_A$] | Schwärzung (relative Einheiten) |
|---|---|---|---|
| Probe 175 | 2 mm | 0,30g/cm$^2$ | 4,52 |
| Probe 176 | 4 mm | 0,60g/cm$^2$ | 1,88 |
| Probe 177 | 6 mm | 0,90g/cm$^2$ | 1,08 |
| Probe 178 | 8 mm | 1,20g/cm$^2$ | 0,72 |
| Probe 179 | 10 mm | 1,50g/cm$^2$ | 0,51 |

Die für Kalibrier- und Vergleichsmessungen verwendeten Bleimuster waren Bleifolien der Sorte S1 mit Dicken von 0,1 mm. Wie bei den Proben wurden Stufenkeile aus den Bleifolien hergestellt. Der Untersuchungsbereich überdeckt den Bleigleichwerte von 0,1 bis 1,0 mm.

| Bezeichnung | Dicke [$d_P$] | Massenbelegung [$m_A$] | Schwärzung (relative Einheiten) |
|---|---|---|---|
| Probe 180 (Blei-Vergleichsmuster) | 0,1 mm | 0,11 g/cm$^2$ | 6,50 |
| Probe 181 (Blei-Vergleichsmuster) | 0,2 mm | 0,23 g/cm$^2$ | 6,50 |
| Probe 182 (Blei-Vergleichsmuster) | 0,3 mm | 0,34 g/cm$^2$ | 5,40 |
| Probe 183 (Blei-Vergleichsmuster) | 0,4 mm | 0,45 g/cm$^2$ | 3,68 |
| Probe 184 (Blei-Vergleichsmuster) | 0,5 mm | 0,56 g/cm$^2$ | 2,65 |
| Probe 185 (Blei-Vergleichsmuster) | 0,6 mm | 0,68 g/cm$^2$ | 1,98 |
| Probe 186 (Blei-Vergleichsmuster) | 0,7 mm | 0,80 g/cm$^2$ | 1,39 |
| Probe 187 (Blei-Vergleichsmuster) | 0,8 mm | 0,91 g/cm$^2$ | 1,04 |
| Probe 188 (Blei-Vergleichsmuster) | 0,9 mm | 1,03 g/cm$^2$ | 0,83 |
| Probe 189 (Blei-Vergleichsmuster) | 1,0 mm | 1,14 g/cm$^2$ | 0,71 |

Im Massenbelegungsbereich von 0,5 g/cm$^2$ bis 1,4 g/cm$^2$ ist der Schwärzungsgrad der nicht erfindungsgemäßen Probe 175 bis 179 zwar auch niedriger als für Blei, aber höher als für die erfindungsgemäßen Proben 20 bis 24 (Beispiel 9). Geringere Schwärzung bedeutet bessere Abschirmwirkung Die erfindungsgemäßen Proben 20 bis 24 schirmen besser ab als Blei und deutlich besser als die nicht erfindungsgemäßen Proben 175 bis 179.

## Beispiel 47

Zu 27,5 Gew.-% Naturkautschuk® TSR 5 werden 66,1 Gew.-% der vorher hergestellten erfindungsgemäßen Mischung (nach Beispiel 7) in 2-3 Portionen zugegeben und auf einem Walzwerk oder einem Innenmischer homogenisiert. Danach erfolgt die Zugabe von 2,8 Gew.% Enerthene® 1849-1, einem naphthenischem Prozessöl der Fa. BP, 0,4 Gew.-% Vulkanox® BKF als Antioxidants der Fa. Bayer AG, 0,4 Gew.-% Vulkanox® MB, Antioxidants der Fa. Bayer AG, 0,8 Gew.-% Zinkoxid RS, 0,6 Gew.-% Stearinsäure, 0,4 Gew.-% Vulkacit® CZ, Vulkanisationsbeschleuniger der Fa. Bayer AG, 0,1 Gew.-% Vulkacit® D, Vulkanisationsbeschleuniger der Fa. Bayer AG und 0,8 Gew.% Schwefel Rhenocure® IS 60/G 75. Nach erneuter Homogenisierung kann die Mischung zu einem Fell auf einer Walze ausgezogen oder kalandriert werden. Die Herstellung der strahlenabsorbierenden Artikel erfolgt nach der Formgebung durch Pressen oder Kalandrierung durch Vulkanisation bei Temperaturen zwischen 150°C und 170°C und ist in 30 Minuten abgeschlossen.

Nach dem oben beschriebenen Verfahren wurden folgende Proben aus der erfindungsgemäßen Mischung nach Beispiel 7 und dem Kautschuk hergestellt:

| Bezeichnung | Additiv-Gehalt |
|---|---|
| Probe 190 | 66,1 Gew.-% |

## Beispiel 48

Zu 16,6 Gew.-% Naturkautschuk® TSR 5 werden 79,6 Gew.-% der vorher hergestellten erfindungsgemäßen Mischung (nach Beispiel 7) in 2-3 Portionen zugegeben und auf einem Walzwerk oder einem Innenmischer homogenisiert. Danach erfolgt die Zugabe von 1,7 Gew.-% Enerthene® 1849-1, einem naphthenischem Prozessöl der Fa. BP, 0,25 Gew.-% Vulkanox® BKF als Antioxidants der Fa. Bayer AG, 0,25 Gew.-% Vulkanox® MB, Antioxidants der Fa. Bayer AG, 0,5 Gew.-% Zinkoxid RS, 0,3 Gew.-% Stearinsäure, 0,23 Gew.-% Vulkacit® CZ, Vulkanisationsbeschleuniger der Fa. Bayer AG, 0,1 Gew.-% Vulkacit® D, Vulkanisationsbeschleuniger der Fa. Bayer AG und 0,5 Gew.-% Schwefel Rhenocure® IS 60/G 75. Nach erneuter Homogenisierung kann die Mischung zu einem Fell auf einer Walze ausgezogen oder kalandriert werden. Die Herstellung der strahlenabsorbierenden Artikel erfolgt nach der Formgebung durch Pressen oder Kalandrierung durch Vulkanisation bei Temperaturen zwischen 150°C und 170°C und ist in 30 Minuten abgeschlossen.

Nach dem oben beschriebenen Verfahren wurden folgende Proben aus der erfindungsgemäßen Mischung nach Beispiel 7 und dem Kautschuk hergestellt:

| Bezeichnung | Additiv-Gehalt |
|---|---|
| Probe 191 | 79,6 Gew.-% |

### Beispiel 49

Die mit der erfindungsgemäßen Mischung (Beispiel 7) hergestellten Gummiplatten zeigten folgende mechanischen Eigenschaften:

| | Methode | Probe 190 | Probe 191 |
|---|---|---|---|
| Zerreißfestigkeit, MPa: | DIN 53504 | 12,3 | 9,3 |
| Bruchdehnung, % | DIN 53504 | 703 | 497 |
| Härte, Shore A | DIN 53505 | 41 | 62 |

Die mit der erfindungsgemäßen Mischung hergestellten Gummiplatten zeigten bei den untersuchten Füllgraden sehr gute mechanische Festigkeiten. Das lässt den Schluss zu, dass die Vernetzungsreaktion von der erfindungsgemäßen Mischung unbeeinflusst abläuft.

### Patentansprüche

1. Verwendung einer Mischung bestehend aus

   a) wenigstens 26 Gew.-% Gadolinium als Element und/oder aus Verbindungen und/oder aus Legierungen,
   b) wenigstens 10 Gew.-% eines oder mehrere Elemente und/oder Legierungen und/oder Verbindungen dieser Elemente unabhängig voneinander ausgewählt aus der Gruppe bestehend aus Barium, Indium, Zinn, Molybdän, Niob, Tantal, Zirkonium und Wolfram, wobei der Gehalt an Wolfram, wenn Wolfram enthalten ist, wenigstens 10 Gew.-% bezogen auf die Gesamtmenge der Mischung beträgt,

   als Strahlenschutz gegen Röntgen- und Gamma-Strahlung .

2. Verwendung der Mischung nach Anspruch 1 , wobei bis zu 64 Gew.-% einer Komponente c), die ein oder mehrer Elemente und/oder Legierungen und/oder Verbindungen dieser Elemente unabhängig voneinander ausgewählt aus der Gruppe bestehend aus Wismut, Lanthan, Cer, Praseodym, Neodym, Promethium, Samarium, Europium, Terbium, Dysprosium, Holmium, Erbium, Thulium, Ytterbium und Lutetium enthält, enthalten ist.

3. Verwendung der Mischung nach einem der Ansprüche 1 bis 2, wobei Zinn maximal zu 50 Gew.-% bezogen auf die Gesamtmenge der Mischung enthalten ist.

4. Verwendung der Mischung nach einem der Ansprüche 1 bis 3, wobei die Elemente und/oder Legierungen und/oder Verbindungen der Komponente b) eine komplementäre strahlungsschwächende Charakteristik im Bereich von 10 bis 600 keV aufweisen.

5. Verwendung der Mischung nach einem der Ansprüche 1 bis 4, wobei wenigstens 35 Gew.-% Gadolinium und wenigstens 20 Gew.-% Wolfram enthalten sind.

6. Verwendung der Mischung nach einem der Ansprüche 1 bis 5, wobei die spezifische Dichte der anorganischen Strahlenschutz-Mischung im Bereich von 4,0 bis 13,0 g/cm$^3$ liegt.

7. Verwendung der Mischung nach einem der Ansprüche 1 bis 6, wobei die Partikel der anorganischen Strahlenschutz-Mischung einen mittleren Teilchendurchmesser im Bereich von 0,1 bis 200 $\mu$m besitzen.

8. Verwendung der Mischung nach einem der Ansprüche 1 bis 7, wobei die Komponenten b) und c) in Form von Legierungen und/oder Verbindungen unabhängig voneinander ausgewählt aus der Gruppe bestehend aus Oxiden, Carbonaten, Sulfaten, Halogeniden, Hydroxiden, Wolframaten, Carbiden und Sulfiden eingesetzt werden.

9. Verfahren zur Herstellung der Mischung nach einem der Ansprüche 1 bis 8, wobei die Komponenten der Mischung in einem Temperaturbereich von 20 bis 500°C getrocknet, danach gesiebt und anschließend im Bereich von 5 Minuten bis 24 h gemischt werden.

10. Polymerer Strahlenschutstoff gegen Röntgen- und Gamma-Strahlung, enthaltend eine Mischung basierend auf der Mischung nach einem der Ansprüche 1 bis 8.

11. Polymerer Strahlenschutzstoff nach Anspruch 10, wobei der Polymere Strahlenschutzstoff noch weitere Zusatzstoffe enthält.

12. Polymerer Strahlenschutz nach einem der Ansprüche 10 und 11, wobei das Polymer des polymeren Strahlenschutz ausgewählt ist aus der Gruppe bestehend aus Kautschuken, Thermoplasten und Polyurethanen.

13. Polymerer Strahlenschutz nach einem der Ansprüche 10 bis 12, wobei der Füllgrad kleiner als 80 Gew.-% ist.

14. Polymerer Strahlenschutzstoff nach einem der Ansprüche 10 bis 13, wobei

$\alpha$) 5 bis 85 Gew.-% Kautschuk, Thermoplast oder Polyurethan und
$\beta$) 10 bis 80 Gew.-% der Mischung nach Anspruch 1 sowie
$\gamma$) 5 bis 20 Gew.-% weitere Zusatzstoffe

enthalten sind.

15. Verfahren zur Herstellung eines polymeren Strahlenschutzstoffes nach einem der Ansprüche 10 bis 14, wobei das Polymer mit der Mischung nach Anspruch 1 umgesetzt wird.

16. Verfahren zur Herstellung eines polymeren Strahlenschutzstoffes nach Anspruch 15, wobei das Polymer ein Kautschuk ist, der mit der Mischung nach Anspruch 1 zusammengeknetet wird.

17. Verfahren zur Herstellung eines polymeren Strahlenschutzstoffes nach Anspruch 15, wobei das Polymer ein Thermoplast ist, der mit der Mischung nach Anspruch 1 vermischt wird.

18. Verfahren zur Herstellung eines polymeren Strahlenschutzstoffes nach Anspruch 15, wobei das Polymer Polyurethan ist und die Ausgangsstoffe des Polyurethans direkt mit der Mischung nach Anspruch 1 vermischt und anschließend polymerisiert werden.

**Claims**

1. Use of a mixture composed of

a) at least 26% by weight of gadolinium as element and/or composed of compounds and/or composed of alloys,
b) at least 10% by weight of one or more elements and/or alloys and/or compounds of these elements selected independently of one another from the group consisting of barium, indium, tin, molybdenum, niobium, tantalum, zirconium and tungsten, where the content of tungsten, if tungsten is present, is at least 10% by weight, based on the total amount of the mixture

as radiation-protection material for protection from X-ray radiation and gamma radiation.

2. Use of the mixture according to Claim 1, which comprises up to 64% by weight of a component c) which comprises one or more elements and/or alloys and/or compounds of these elements selected independently of one another from the group consisting of bismuth, lanthanum, cerium, praseodymium, neodymium, promethium, samarium, europium, terbium, dysprosium, holmium, erbium, thulium, ytterbium and lutetium.

3. Use of the mixture according to Claim 1 or 2, which comprises at most 50% by weight of tin, based on the total amount of the mixture.

4. Use of the mixture according to any of Claims 1 to 3, where the elements and/or alloys and/or compounds of component b) have a complementary radiation-attenuating characteristic in the range from 10 to 600 keV.

5. Use of the mixture according to any of Claims 1 to 4, which comprises at least 35% by weight of gadolinium and at least 20% by weight of tungsten.

6. Use of the mixture according to any of Claims 1 to 5, where the density of the inorganic radiation-protection mixture is in the range from 4.0 to 13.0 g/cm$^3$.

7. Use of the mixture according to any of Claims 1 to 6, where the particles of the inorganic radiation-protection mixture have an average particle diameter in the range from 0.1 to 200 $\mu$m.

8. Use of the mixture according to any of Claims 1 to 7, where components b) and c) are used in the form of alloys and/or compounds selected independently of one another from the group consisting of oxides, carbonates, sulphates, halides, hydroxides, tungstates, carbides, and sulphides.

9. Process for preparation of the mixture according to any of Claims 1 to 8, where the components of the mixture are dried in the temperature range from 20 to 500°C, then sieved, and then mixed for a time in the range from 5 minutes to 24 h.

10. Polymeric radiation-protection substance for protection from X-ray radiation and gamma radiation, comprising a mixture based on the mixture according to any of Claims 1 to 8.

11. Polymeric radiation-protection substance according to Claim 10, where the polymeric radiation-protection substance also comprises other additives.

12. Polymeric radiation-protection material according to Claim 10 or 11, where the polymer of the polymeric radiation-protection material has been selected from the group consisting of rubbers, thermoplastics and polyurethanes.

13. Polymeric radiation-protection material according to any of Claims 10 to 12, where the filler level is smaller than 80% by weight.

14. Polymeric radiation-protection substance according to any of Claims 10 to 13, which comprises

$\alpha$) from 5 to 85% by weight of rubber, thermoplastic or polyurethane, and
$\beta$) from 10 to 80% by weight of the mixture according to Claim 1, and also
$\gamma$) from 5 to 20% by weight of other additives.

15. Process for preparation of a polymeric radiation-protection substance according to any of Claims 10 to 14, where the polymer is reacted with the mixture according to Claim 1.

16. Process for preparation of a polymeric radiation-protection substance according to Claim 15, where the polymer is a rubber, which is kneaded together with the mixture according to Claim 1.

17. Process for preparation of a polymeric radiation-protection substance according to Claim 15, where the polymer is a thermoplastic, which is mixed with the mixture according to Claim 1.

18. Process for preparation of a polymeric radiation-protection substance according to Claim 15, where the polymer is polyurethane and the starting materials for the polyurethane are directly mixed with the mixture according to Claim 1 and are then polymerized.

**Revendications**

1. Utilisation d'un mélange constitué

a) d'au moins 26 % en poids de gadolinium, comme élément, et/ou de composés et/ou d'alliages,
b) d'au moins 10 % en poids d'un ou de plusieurs éléments et/ou alliages et/ou composés de ces éléments, choisis indépendamment l'un de l'autre parmi le groupe constitué du baryum, de l'indium, de l'étain, du molybdène, du niobium, du tantale, du zirconium et du tungstène, la teneur en tungstène, lorsque du tungstène est contenu, étant d'au moins 10 % en poids par rapport à la quantité totale du mélange,

comme protection contre les rayonnements X et gamma.

**2.** Utilisation du mélange suivant la revendication 1, dans laquelle jusqu'à 64 % en poids d'un composant c) sont contenus, composant qui contient un ou plusieurs éléments et/ou alliages et/ou composés de ces éléments, choisis indépendamment l'un de l'autre parmi le groupe constitué du bismuth, du lanthane, du cérium, du praséodyme, du néodyme, du prométhium, du samarium, de l'europium, du terbium, du dysprosium, de l'holmium, de l'erbium, du thulium, de l'ytterbium et du lutétium.

**3.** Utilisation du mélange suivant l'une des revendications 1 et 2, dans laquelle de l'étain est contenu au maximum à 50 % en poids, par rapport à la quantité totale du mélange.

**4.** Utilisation du mélange suivant l'une des revendications 1 à 3, dans laquelle les éléments et/ou alliages et/ou composés du composant b) présentent une caractéristique complémentaire d'affaiblissement du rayonnement de l'ordre de 10 à 600 keV.

**5.** Utilisation du mélange suivant l'une des revendications 1 à 4, dans laquelle au moins 35 % en poids de gadolinium et au moins 20 % en poids de tungstène sont contenus.

**6.** Utilisation du mélange suivant l'une des revendications 1 à 5, dans laquelle la masse volumique du mélange inorganique de protection contre les rayonnements est de l'ordre de 4,0 à 13,0 g/cm$^3$.

**7.** Utilisation du mélange suivant l'une des revendications 1 à 6, dans laquelle les particules du mélange inorganique de protection contre les rayonnements présentent un diamètre moyen des particules de l'ordre de 0,1 à 200 $\mu$m.

**8.** Utilisation du mélange suivant l'une des revendications 1 à 7, dans laquelle les composants b) et c) sont mis en oeuvre sous la forme d'alliages et/ou de composés choisis indépendamment l'un de l'autre parmi le groupe constitué d'oxydes, de carbonates, de sulfates, d'halogénures, d'hydroxydes, de tungstates, de carbures et de sulfures.

**9.** Procédé de préparation du mélange suivant l'une des revendications 1 à 8, dans lequel les composants du mélange sont séchés dans un intervalle de température de 20 à 500°C, puis tamisés et ensuite mélangés pendant une durée de 5 minutes à 24 heures.

**10.** Matière polymère de protection contre les rayonnements X et gamma, contenant un mélange à base du mélange suivant l'une des revendications 1 à 8.

**11.** Matière polymère de protection contre les rayonnements suivant la revendication 10, dans laquelle la matière polymère de protection contre les rayonnements contient encore d'autres additifs.

**12.** Matière polymère de protection contre les rayonnements suivant l'une des revendications 10 et 11, dans laquelle le polymère de la matière polymère de protection contre les rayonnements est choisi parmi le groupe constitué des caoutchoucs, des matières thermoplastiques et des polyuréthannes.

**13.** Matière polymère de protection contre les rayonnements suivant l'une des revendications 10 à 12, dans laquelle le taux de charge est inférieur à 80 % en poids.

**14.** Matière polymère de protection contre les rayonnements suivant l'une des revendications 10 à 13, dans laquelle sont contenus

α) 5 à 85 % en poids de caoutchouc, de matière thermoplastique ou de polyuréthanne, et
β) 10 à 80 % en poids du mélange suivant la revendication 1, ainsi que
γ) 5à 20 % en poids d'autres additifs.

**15.** Procédé de préparation d'une matière polymère de protection contre les rayonnements suivant l'une des revendications 10 à 14, dans lequel le polymère est mis à réagir avec le mélange suivant la revendication 1.

**16.** Procédé de préparation d'un mélange polymère de protection contre les rayonnements suivant la revendication 15, dans lequel le polymère est un caoutchouc qui est pétri conjointement au mélange suivant la revendication 1.

**17.** Procédé de préparation d'une matière polymère de protection contre les rayonnements suivant la revendication 15, dans lequel le polymère est une matière thermoplastique qui est mélangée au mélange suivant la revendication 1.

**18.** Procédé de préparation d'une matière polymère de protection contre les rayonnements suivant la revendication 15, dans lequel le polymère est du polyuréthanne et les matières de départ du polyuréthanne sont directement mélangées au mélange suivant la revendication 1 et ensuite polymérisées.